(19) **Europäisches Patentamt / European Patent Office / Office européen des brevets**

(11) **EP 1 459 320 B1**

(12) **EUROPEAN PATENT SPECIFICATION**

(45) Date of publication and mention
of the grant of the patent:
**13.02.2008 Bulletin 2008/07**

(21) Application number: **02790830.0**

(22) Date of filing: **24.12.2002**

(51) Int Cl.:
*G11B 27/34* (2006.01)    *H04N 5/445* (2006.01)

(86) International application number:
**PCT/JP2002/013414**

(87) International publication number:
**WO 2003/056560 (10.07.2003 Gazette 2003/28)**

(54) **APPARATUS AND METHOD FOR PLAYING BACK CONTENT**

VORRICHTUNG UND VERFAHREN ZUR WIEDERGABE VON INHALTEN

DISPOSITIF ET PROCEDE PERMETTANT LA LECTURE D'UN CONTENU

(84) Designated Contracting States:
**DE FR GB**

(30) Priority: **25.12.2001 JP 2001391464**

(43) Date of publication of application:
**22.09.2004 Bulletin 2004/39**

(73) Proprietor: **MATSUSHITA ELECTRIC INDUSTRIAL CO., LTD**
**Kadoma-shi, Osaka 571-8501 (JP)**

(72) Inventors:
• **IWAHARA, Yuji**
**Higashihiroshima-shi, Hiroshima 739-0036 (JP)**

• **HORI, Ryuichi**
**Hiroshima-shi, Hiroshima 732-0027 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 1 158 795       WO-A-01/45391**
**US-A- 5 717 869        US-A- 6 118 450**
**US-A1- 2001 024 562**

**Description**

TECHNICAL FIELD

The present invention relates to an apparatus for playing back video content (moving pictures), and in particular relates to improvements in helping a user recall the contents of video content which he or she has already viewed.

BACKGROUND ART

Recording media like DVDs and HDs are often used to record, week after week, broadcast content such as a drama series that is put on the air every week. Playback apparatuses which have made their market debuts in recent years are equipped with a well-developed content listing function, to aid a user to view a plurality of sets of content recorded in such a way. This listing function can display information about each set of content recorded on the recording medium, such as a recording date and time, a broadcast channel, and a broadcast title, thereby helping the user understand what is recorded on the recording medium. The listing function can also display the last image of the previous playback or a bar chart showing the playback stop position of the previous playback, thereby helping the user recall the previous playback.

When viewing a drama series which is aired weekly, it is important for the user to remember the previous week's episode, such as what the psychological states and actions of the characters in that episode were. If the user does not remember this, he or she may not be able to concentrate on this week's episode.

The same applies to the case when such a drama series is recorded on a recording medium and later the user views the recorded content. Suppose the user has previously viewed up to some episode, and now wants to resume from where he or she has stopped last time. If the user does not clearly recall until which episode he or she has watched or what the psychological states and actions of the characters in that episode were, the user may not be able to concentrate on the viewing.

The user's memory of the psychological states and actions of the characters in one episode derives from his or her fresh impressions upon watching that episode, and therefore tends to become less clear as time passes. This being so, when the user views the next episode after some time, he or she may find it difficult to fully concentrate on the viewing. In such a case, just displaying information such as the recording date and time of the content using the above listing function does not much help the user recall the contents of the previous episode. Equally, just displaying the last image of the previous playback or the bar chart showing the playback stop position of the previous playback does not much help the user.

Since the listing function is not enough to evoke the user's memory of the previous episode, the user needs to rewind or fast-forward to the previous scenes, in order to recall the contents of the viewed part. If the user has already viewed a lot of episodes, such a procedure is very troublesome, and the user may lose the desire to continue the viewing.

The above explanation uses a drama series as one example, but the same problem can be found with regard to other content such as educational programs and sports. Suppose the user has previously viewed up to some point of a sports event, and now wants to resume from where he or she has stopped last time. If the user does not clearly remember what happened in the viewed part, he or she may not be able to fully enjoy viewing the following part. If a large number of sets of content are recorded on a recording medium but the user cannot recall the contents of these sets of content, the user may lose the desire to view the recorded content. Eventually, the user may even lose the desire to record content on a recording medium.

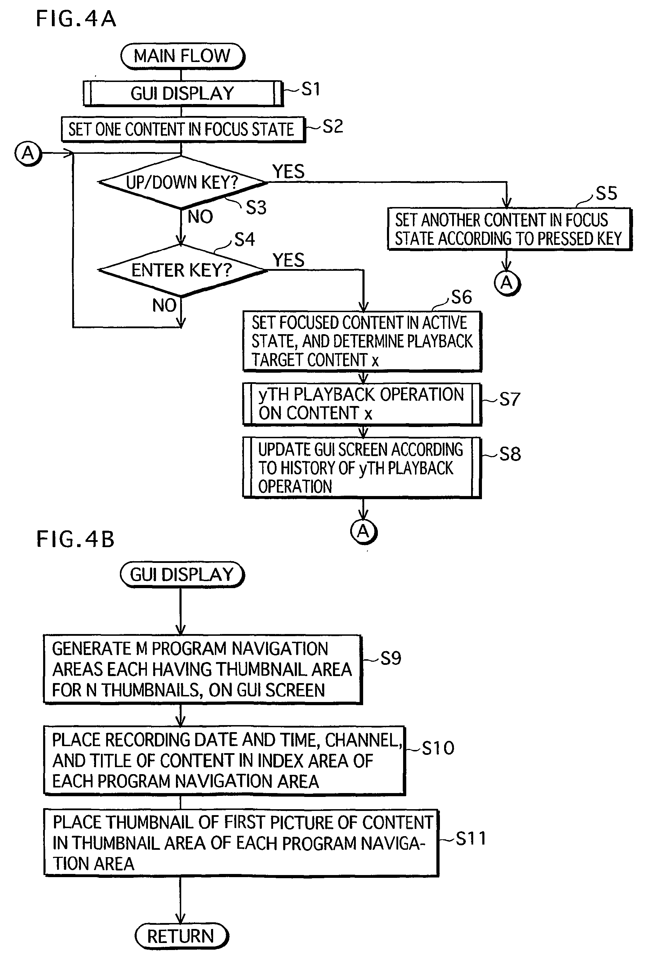

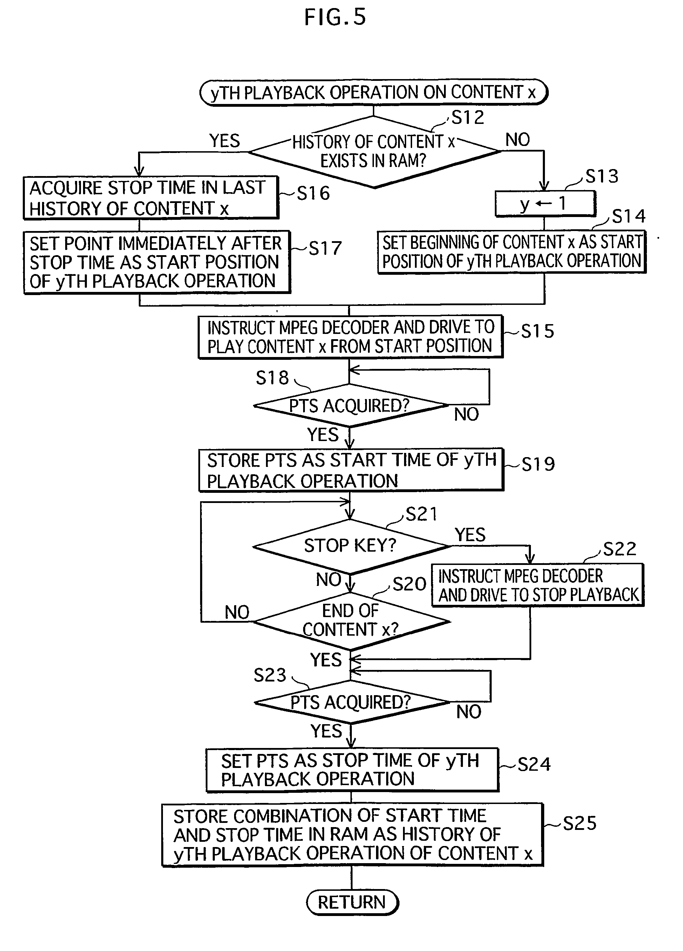

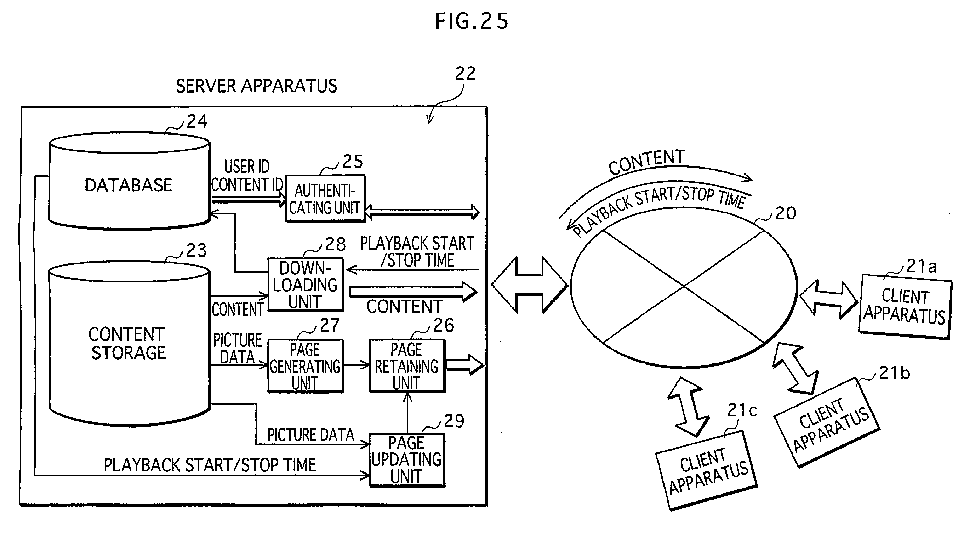

EP-A-1 158 795 discloses the technique of retrieving an AV program that matches the user preference from various AV programs and presenting it for the user to view. The user preference is defined by generating the Description Scheme such as the one shown in FIG. 25, in XML (Extended mark-up language). The Description Scheme shown in FIG. 25 includes a browsing preferences description, a filtering and search preferences description, and a device preferences description. FIGS. 4 and 5 show thumbnails extracted in accordance with category and channel preferences. The Description Scheme has a Clip tag and a Shot tag. These tags can be used to specify a start-frame-id and an end-frame-id. The start-frame-id and the end-frame-id correspond to a start position and a stop position.

WO 01/45391 A discloses the technique of selecting Video Segments and linking them to thereby edit a digital production. The selection, linkage, and deletion of Video Segments are carried out based on descriptors that are associated with the respective Video Segments. By using these descriptors, the user can then create a new video production based on a selection and a re-sequencing of the video segments.

US-A-6 118 450 relates to an auto-changer like device carrying a plurality of recording media. A GUI in this device allows the user to view and manipulate additional information and further additional information. By viewing and manipulating additional information and further additional information, the user can select a recording medium to be played back or perform other operations. To show the list of recording media to the user, the GUI displays the thumbnails of images recorded on these recording media.

DISCLOSURE OF THE INVENTION

The present invention aims to provide a playback apparatus that can help a user instantly recall the contents of video content, such as an episode in a drama series, which he or she has previously viewed.

The stated object can be achieved by a playback apparatus for playing back video content that includes a plurality of pieces of picture data, including: a displaying unit operable to display a menu which lists a plurality of sets of video content; a playback unit operable to play back one of the plurality of sets of video content which is selected from the menu by a user, and keep a history of a playback start position and a playback stop position; and an updating unit operable to update the menu and have the displaying unit display the updated menu, after the playback by the playback unit, wherein the update is performed by choosing at least one piece of picture data from between the playback start position and the playback stop position in the set of video content, and placing a thumbnail of each chosen piece of picture data in the menu.

With this construction, thumbnails of pieces of picture data chosen from within a part of video content which the user has previously viewed are displayed. Suppose the user has viewed up to some episode of a drama series several weeks ago and now wants to resume from where he or she has stopped last time. This being so, from the display of thumbnails of pieces of picture data chosen from the viewed part, the user can easily recall until which episode he or she has viewed last time or what the psychological states and actions of the characters in that episode were. Hence the user can concentrate on further viewing.

Here, if another thumbnail already exists in the menu, the updating unit may place the thumbnail adjacent to the other thumbnail.

Here, when the playback by the playback unit is a pth playback operation performed on the set of video content, p being an integer no smaller than 2, the other thumbnail may be a thumbnail of a piece of picture data which is located between a playback start position and a playback stop position of a *(p-1)*th playback operation performed on the set of video content.

Suppose at least one playback operation has previously been performed on the video content. Then the thumbnails of the pieces of picture data chosen from the viewed part are displayed adjacent to thumbnails of pieces of picture data chosen from a viewed part of the previous playback operation. This produces a thumbnail display that resembles a bar chart. From such a display, the user can easily grasp the progress of playback of each set of video content.

Here, a number of thumbnails which the updating unit places in the menu may depend on a ratio of a playback time length from the playback start position to the playback stop position to a total playback time length of the set of video content.

Here, the menu may have a plurality of navigation areas which are in a one-to-one correspondence with the plurality of sets of video content, wherein each navigation area is given an upper limit to a number of placeable thumbnails, and the number of thumbnails which the updating unit places in a navigation area corresponding to the set of video content is a number obtained by multiplying an upper limit given to the navigation area by the ratio.

When there are a plurality of sets of video content, as many thumbnails as possible are displayed in a navigation area corresponding to the video content. This enables the user to clearly recall the contents of the viewed part.

Here, each chosen piece of picture data may be one of a plurality of pieces of picture data that are present at intervals of $\Delta t$ starting from a beginning of the set of video content and is located between the playback start position and the playback stop position, wherein $\Delta t$ is a value obtained by dividing the total playback time length of the set of video content by the upper limit.

With this construction, the user can not only recall the contents of the viewed part from the displayed thumbnails, but also grasp the progress of playback of the video content from the number of displayed thumbnails. Therefore, from the thumbnail display the user can not only recall what the psychological states and actions of the characters in the previous episode were, but also know to what extent he or she has viewed the video content.

Here, each navigation area may have the same upper limit to the number of placeable thumbnails.

Here, each chosen piece of picture data may be present at intervals of $\Delta t$ starting from the playback start position, wherein $\Delta t$ is a value obtained by dividing a playback time length from the playback start position to the playback stop position by a predetermined value.

Interval $\Delta t$ with which the pieces of picture data should be chosen is calculated by dividing the playback time length of the viewed part by the upper limit to the number of placeable thumbnails. In this way, $\Delta t$ can be set long if the viewed part is long, and short if the viewed part is short.

Here, the menu may have a plurality of navigation areas which are in a one-to-one correspondence with the plurality of sets of video content, wherein each navigation area is given the same upper limit to a number of placeable thumbnails, and the predetermined value is the same upper limit.

With this construction, the upper limit to the number of placeable thumbnails is the same for each set of video content. In so doing, even when a viewed part of some video content is extremely long, the screen will not be filled with thumbnails of pieces of picture data of that video content.

Here, the at least one piece of picture data chosen by the updating unit may be a plurality of pieces of picture data that are present at intervals of $\Delta t$ starting from the playback start position, wherein $\Delta t$ is shorter near the playback stop position than near the playback start position.

With this construction, interval $\Delta t$ is shorter near the playback stop position than near the playback start position. This enables more thumbnails to be used for the latter portion of the viewed part. Hence the user can clearly recall what the psychological states and actions of the characters in the previous episode were.

Here, the updating unit may choose a plurality of pieces of picture data from between the playback start position and the playback stop position, and place a plurality of thumbnails of the respective plurality of pieces of picture data one after another in the menu so that the plurality of thumbnails are displayed like a slide show.

With this construction, for each set of video content two or more thumbnails are displayed one after another like a slide show. Accordingly, even when there are a large number of sets of video content, the user can easily understand the contents of each set of video content.

Here, the playback start position may be a beginning of the set of video content or a position where the user requests to resume playing back the set of video content, and the playback stop position may be a position where the user requests to stop playing back the set of video content or an end of the set of video content.

Here, the playback stop position may be a position where the user requests to switch from a normal playback mode to a special playback mode, and the playback start position may be a position where the user requests to switch from the special playback mode back to the normal playback mode.

If the user views the video content while skipping some parts by fast forward or the like, the pieces of picture data are chosen only from the viewed parts and not from the skipped parts. Hence thumbnails of those skipped parts will not be displayed on the screen.

BRIEF DESCRIPTION OF DRAWINGS

FIG. 1 shows an outward appearance of a DVD and a playback apparatus to which the first embodiment of the invention relates.

FIGS. 2A and 2B show an inner construction of the playback apparatus.

FIG. 3 shows an example of a program navigation area.

FIG. 4A is a flowchart of a main routine of a microcomputer system shown in FIG. 2.

FIG. 4B is a flowchart of a subroutine called in step S1 in FIG. 4A, and shows processing of a GUI generating unit in the microcomputer system.

FIG. 5 is a flowchart of a subroutine called in step S7 in FIG. 4A, and shows processing of a playback controlling unit in the microcomputer system.

FIGS. 6A and 6B are a flowchart of a subroutine called in step S8 in FIG. 4A, and show processing of a GUI updating unit and thumbnail generating unit in the microcomputer system.

FIG. 7 shows program navigation areas on a GUI screen, when content 1 to content 3 have not been played at all.

FIG. 8 shows how the program navigation areas are updated when content 1 has been played from the beginning up to the 1240sec point.

FIG. 9 is a representation of a process of choosing pieces of picture data and reducing these pieces of picture data.

FIG. 10 shows how the program navigation areas are updated when content 1 has been played up to the 2200sec point.

FIG. 11 shows how the program navigation areas are updated when content 1 has been played to the end and content 2 has been played from the beginning up to the 1000sec point.

FIG. 12 shows how the program navigation areas are updated when all of content 1 to content 3 have been played.

FIG. 13 shows a layout of thumbnails, in the case where the number of sets of content recorded on the DVD has increased.

FIGS. 14A-14F show how thumbnails are displayed one after another like slides, in the layout shown in FIG. 13.

FIGS. 15A and 15B are a flowchart of a main routine of the microcomputer system in the second embodiment of the invention.

FIG. 16 is a flowchart showing processing of the GUI generating unit in the second embodiment.

FIG. 17 is a flowchart showing processing of the thumbnail generating unit in the second embodiment.

FIG. 18 is a flowchart showing processing of the GUI updating unit in the second embodiment.

FIG. 19 shows how array elements H[0], H[1], H[2], H [3], ... with time intervals of $T/u \cdot v$ are determined, when $u$ is $4$ and $v$ is any of $1$ to $4$.

FIG. 20 is a flowchart showing processing of the GUI updating unit and the thumbnail generating unit in the third embodiment.

FIG. 21A shows how array elements H[0], H[1], H[2], H[3], ... are determined, when $T$ and $u$ are given specific values.

FIG. 21B shows how thumbnails are placed in a program navigation area, when array elements H [0], H [1], H[2], H[3], ... are determined as shown in FIG. 21A.

FIG. 22A shows example playback where a point of switching from normal playback to fast forward is set as a playback stop time and a point of switching from fast forward to normal playback is set as a playback start time.

FIG. 22B shows an example of playback history stored in a work area shown in FIG. 2, when the playback shown in FIG. 22A has been performed.

FIG. 23 is a flowchart of a main routine of the microcomputer system in the fourth embodiment of the invention.

FIG. 24 is a flowchart showing processing of the GUI updating unit in the fourth embodiment.

FIG. 25 shows a construction of a streaming delivery system to which the fifth embodiment of the invention relates.

FIG. 26 is a sequence chart of the delivery system.

FIG. 27 is a sequence chart of the delivery system.

FIG. 28 shows an inner structure of VR_MANGR. IFO.

FIG. 29 shows an inner structure of TMAPI.

FIG. 30 is a representation of the relationship between TMAPI and VOBUs.

FIG. 31 shows an inner structure of an ORG_PGCI table.

FIG. 32 shows the relationship between VOBs and cells included in ORG_PGCI.

FIG. 33 shows how the cells shown in FIG. 32 are grouped in PGs.

FIG. 34 shows how partial areas of VOBs are specified when partial deletes have been performed on the VOBs.

FIG. 35 shows VOBs obtained after the partial deletes.

BEST MODE FOR CARRYING OUT THE INVENTION

(First Embodiment)

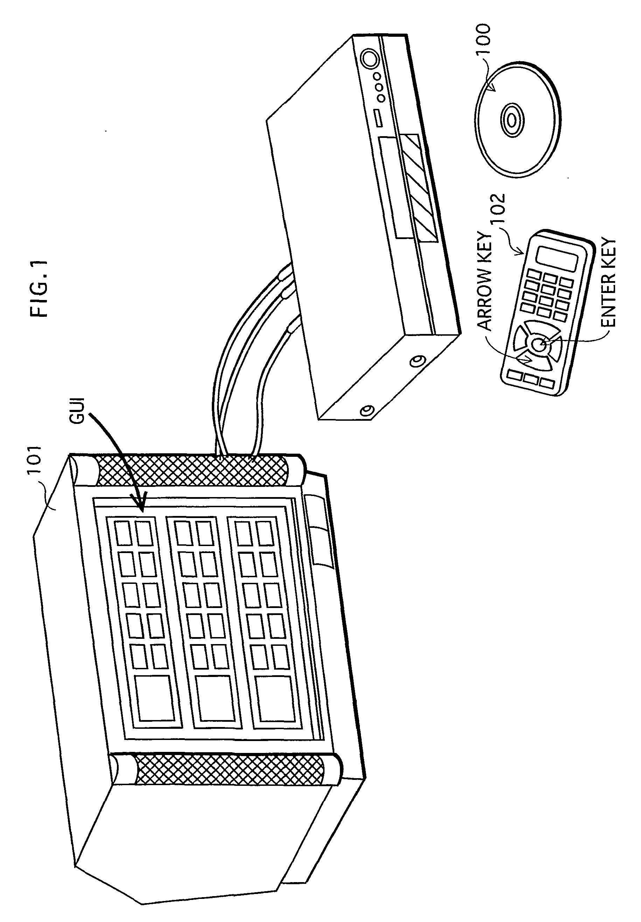

The following describes embodiments of a playback apparatus of the present invention. First, an example application of the playback apparatus of the present invention is described below, with reference to FIG. 1.

In FIG. 1, the playback apparatus, a television 101, and a remote control 102 together constitute a home theater system. The playback apparatus is used to select video content recorded on a DVD 100 and play back it, based on a GUI (Graphical User Interface) screen displayed on the television 101 and user operations on the remote control 102.

The DVD 100 is an optical disc on which a plurality of sets of video content are recorded by a recording apparatus (not shown in the drawing). In the DVD 100, each set of video content is associated with a date and time when the content was recorded, a channel at which the content was broadcast, and a title of the content. Video content is made up of at least one VOB (Video Object) and management information for the VOB. A VOB is a program stream obtained by interleave-multiplexing video and audio streams. A video stream is made up of a plurality of pieces of picture data which are compression-encoded. An audio stream is made up of a plurality of pieces of audio data which are compression-encoded. Though video content includes not only a VOB but also management information for the VOB as mentioned above, an explanation on management information is omitted in the first to fifth embodiments for simplicity's sake. Hence the first to fifth embodiments are described on the assumption that a VOB itself is video content.

The television 101 displays the GUI screen for selecting video content recorded on the DVD 100, and playback images of the selected video content.

The remote control 102 is a device for receiving user operations directed to the GUI screen, and is equipped with arrow keys and the ENTER key.

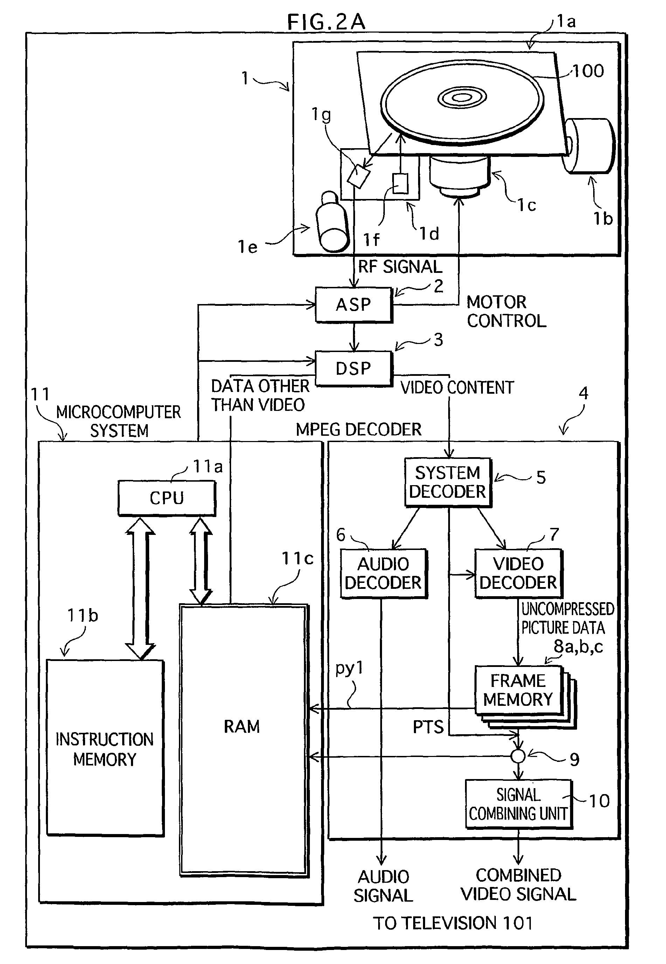

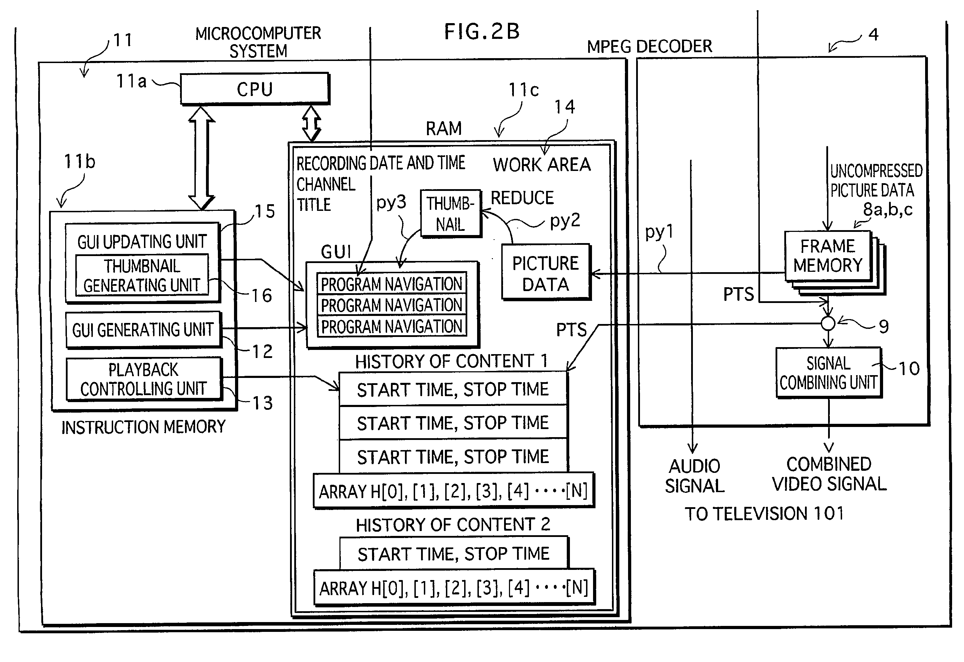

FIGS. 2A and 2B show an inner construction of the playback apparatus of the present invention. As shown in the drawings, the playback apparatus includes a DVD drive 1, an ASP 2, a DSP 3, an MPEG decoder 4, a system decoder 5, an audio decoder 6, a video decoder 7, frame memories 8a, 8b, and 8c, an order controlling unit 9, a signal combining unit 10, a microcomputer system 11, a GUI generating unit 12, a playback controlling unit 13, a work area 14, a GUI updating unit 15, and a thumbnail generating unit 16.

First, a hardware construction of the playback apparatus is explained below, by referring to FIG. 2A.

The DVD drive 1 is equipped with a tray 1a, a loading motor 1b, a spindle motor 1c, an optical pickup 1d, and a tracking motor 1e. The tray 1a holds the DVD 100. The loading motor 1b moves the tray 1a back and forth. The spindle motor 1c rotates the DVD 100 on the tray 1a. The tracking motor 1e drives the optical pickup 1d in the radial direction of the DVD 100. The optical pickup 1d includes a laser diode 1f for applying a laser beam on the rotating DVD 100, and a photodiode 1g for receiving light reflected from the DVD 100.

The ASP (Analog Signal Processor) 2 controls the spindle motor 1c and the tracking motor 1e so that the optical pickup 1d moves to an address indicated by the microcomputer system 11.

The DSP (Digital Signal Processor) 3 controls the spindle motor 1c so as to keep a constant rotational speed of the DVD 100. The DSP 3 also performs binarization, 8/16 demodulation, and error correction on an RF signal read by the optical pickup 1d, thereby obtaining a digital signal.

The MPEG decoder 4 is a dedicated circuit for decoding a VOB (video content) in the digital signal obtained by the DSP 3. The MPEG decoder 4 includes the system decoder 5, the audio decoder 6, and the video decoder 7.

The system decoder 5 demultiplexes VOBUs (Video Object Units). A VOBU is the minimum unit of decoding of a VOB. A VOBU contains a GOP (Group Of Pictures) that is a collection of picture data with a playback period of around 0.4 to 1.0 second, as well as a plurality of audio frames that should be played back at the same time as this GOP. The system decoder 5 demultiplexes each VOBU, thereby obtaining a GOP and a plurality of audio frames.

The audio decoder 6 decodes the plurality of audio frames to obtain an audio signal.

The video decoder 7 performs VLD (Variable Length Decoding), IQ (Inverse Quantization), IDCT (Inverse Discrete Cosine Transform), MC (Motion Compensation), and the like on B (Bidirectionally Predicted) pictures, P (Predicted) pictures, and I (Intra Coded) pictures that constitute the GOP. As a result, the video decoder 7 obtains uncompressed digital picture data, and stores it to the frame memories 8a-8c.

The frame memories 8a-8c are provided respectively for the three types of picture data that are I pictures, B pictures, and P pictures. The frame memories 8a-8c separately store the uncompressed picture data obtained by decompressing these three types of picture data.

The order controlling unit 9 sequentially reads the uncompressed picture data stored in the frame memories 8a-8c, with timings shown by PTSs (Presentation Time Stamps) which are attached to the picture data. The order controlling unit 9 converts the read picture data to a video signal, and outputs it. On the DVD 100, a plurality of pieces of picture data that constitute video content are arranged in an encoding order. To play back such video content, the plurality of pieces of picture data need be rearranged in a display order. To do so, the order controlling unit 9 reads the I pictures, P pictures, and B pictures stored in the frame memories 8a-8c, in the order shown by the PTSs.

The order controlling unit 9 also outputs the PTSs attached to the picture data, sequentially to the microcomputer system 11. These PTSs are used for keeping the playback history of the video content, as explained later.

The signal combining unit 10 combines the picture data with GUI data, thereby obtaining a television image signal. The GUI data referred to here is OSD (On Screen Display) data. OSD data is simple graphics drawn using two to four colors shown in a LUT (Look-Up Table) as the background and character colors. The signal combining unit 10 mixes the horizontal lines that form the uncompressed picture data with the horizontal lines that form the OSD data, to combine the picture data with the OSD data. Here, the signal combining unit 10 can conceal the picture data with the GUI data or make the picture data visible through the GUI data, depending on the mixture ratio.

The microcomputer system 11 includes a CPU 11a, an instruction ROM 11b storing programs to be executed by the CPU 11a, and a RAM 11c used for the execution of the programs. The microcomputer system 11 controls the overall playback apparatus, by executing the programs stored in the instruction ROM 11b through the CPU 11a.

Next, a software construction of the playback apparatus is explained below, by referring to FIG. 2B.

The programs stored in the instruction ROM 11b are coded to achieve the functions of "playback control", "GUI generation", and "GUI update". When the CPU 11a reads the programs stored in the instruction ROM 11b, the playback controlling unit 13, the GUI generating unit 12, and the GUI updating unit 15 shown in FIG. 2B are realized. The RAM 11c is used as the work area 14 by these units. The GUI generating unit 12, the playback controlling unit 13, and the GUI updating unit 15 are described in detail below.

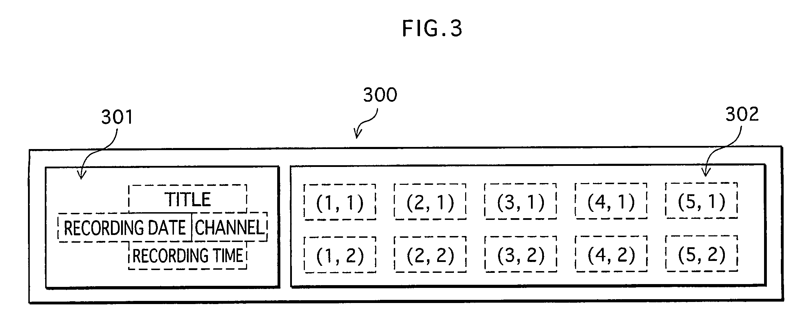

The GUI generating unit 12 generates a GUI screen and displays it. The GUI generating unit 12 also controls the overall playback apparatus, in accordance with user operations. The GUI screen has a plurality of display areas. A program navigation area for visually expressing video content recorded on the DVD 100 is provided in each of these display areas. FIG. 3 shows an example program navigation area. A program navigation area 300 shown in the drawing is an expanded and detailed version of a program navigation area that is displayed on the television 101 in FIG. 1. As illustrated, the program navigation area 300 is made up of an index area 301 and a thumbnail area 302. A recording date and time, channel, and title of video content are placed in the index area 301. The program navigation area 300 has three states, namely, a normal state, a focus state, and an active state. The normal state refers to a state where the content is not selected by the user. The focus state refers to a state where the content is brought into focus as a candidate for the playback target, using the arrow keys on the remote control 102. The active state refers to a state where the content is selected as the playback target using the ENTER key on the remote control 102. The GUI generating unit 12 instructs the playback controlling unit 13 to play back video content that is set in the active state on the GUI screen.

The playback controlling unit 13 controls the MPEG decoder 4 and the DVD drive 1 to play back the video content which is selected as the playback target by the user. This playback of the video content is continued until the user presses the STOP key on the remote control 102. The playback controlling unit 13 also keeps a history of a start time and stop time of this playback operation. In detail, the playback controlling unit 13 sets the value of the first PTS output from the order controlling unit 9 after instructing the MPEG decoder 4 and the DVD drive 1 to play back the video content, as the start time of the playback operation. Also, the playback controlling unit 13 sets the value of the first PTS output from the order controlling unit 9 after instructing the MPEG decoder 4 and the DVD drive 1 to stop playing back the video content, as the stop time of the playback operation. The playback controlling unit 13 then writes the combination of the start time and stop time in the work area 14. If the same video content is selected as the playback target again, the playback controlling unit 13 resumes the playback of the video content with the time immediately after the stop time written in the work area 14 as the start time of the next playback operation.

The work area 14 stores the GUI screen generated by the GUI generating unit 12, and the playback history and array H of each set of video content. The playback history referred to here is made up of combinations of start times and stop times. Array H is used to store elapsed times with intervals $\Delta t$ between the start and stop times of each combination. Two arrays shown in FIG. 2B both have N elements, but this is merely one example used for purposes of illustration. The number of elements of array H changes depending on the progress of playback. The work area 14 shown in FIG. 2B is based on an example where video content 1 to video content 3 are recorded on the DVD 100 and three playback operations have already been performed on video content 1 and one playback operation on video content 2. Accordingly, a combination of start and stop times of the first playback operation, a combination of start and stop times of the second playback operation, and a combination of start and stop times of the third playback operation are stored in the work area 14 as the playback history of video content 1. Also, a combination of start and stop times of the first playback operation is stored in the work area 14 as the playback history of video content 2, separately from the playback history of video content 1. Thus, whenever a playback operation of video content is performed, a combination of start and stop times of that playback operation is added to the playback history of the video content in the work area 14.

The GUI updating unit 15 updates the GUI screen and has the television 101 display the updated GUI screen, after the playback controlling unit 13 performs a playback operation on video content. This update is carried out as follows. Pieces of picture data are chosen from a part of the video content between a start time and a stop time of the playback operation (such a part is hereafter referred to as a "viewed part"). Then thumbnail pictures (hereafter simply referred to as "thumbnails") obtained by reducing these pieces of picture data are added to a program navigation area corresponding to the video content. Since the pieces of picture data from which the thumbnails are generated are chosen from the viewed part, the thumbnails displayed in the program navigation area vary depending on the progress of playback of the video content. In FIG. 3, the thumbnail area 302 of the program navigation area 300 can contain ten thumbnails at the maximum. However, if only 20% of the video content has been played back, only two thumbnails are placed in the thumbnail area 302. If 50% of the video content has been played back, five thumbnails are placed in the thumbnail area 302. If the video content has not been played back at all, only one thumbnail showing the first image of the video content is placed in the thumbnail area 302. Thus, the number of thumbnails changes depending on the progress of playback. This enables the user to instantly know to what extent the playback of the video content has progressed.

The thumbnail generating unit 16 is included in the GUI updating unit 15. The thumbnail generating unit 16 chooses the pieces of picture data that belong to the viewed part of the video content according to the start time and stop time of the playback operation, and generates the thumbnails of these pieces of picture data. Having done so, the thumbnail generating unit 16 places the thumbnails in the program navigation area. In FIG. 2B, arrows py1, py2, and py3 represent the processing performed by the thumbnail generating unit 16. In more detail, the thumbnail generating unit 16 has the MPEG decoder 4 read the pieces of picture data in the viewed part from the DVD 100 and decode them. Once uncompressed pieces of picture data have been obtained in the frame memories 8a-8c as a result of the decoding, the thumbnail generating unit 16 reads the pieces of picture data from the frame memories 8a-8c and stores them in the work area 14 (py1). The thumbnail generating unit 16 then reduces these pieces of picture data one by one in the work area 14, thereby obtaining the thumbnails (py2). The thumbnail generating unit 16 finally places the thumbnails in the thumbnail area of the program navigation area on the GUI screen (py3).

In this embodiment, pieces of picture data are chosen from a viewed part in the following manner. First, time interval $\Delta t$ when $N$ pieces of picture data at the maximum are chosen from the whole content is calculated from Equation 1.

$$\Delta t = (time\ length\ of\ whole\ content)/N$$

$$\cdots\cdots (Equation\ 1)$$

Also, ratio $\alpha$ of the viewed part to the whole content is calculated from Equation 2.

$$\alpha=(time\ length\ of\ viewed\ part)$$
$$/(time\ length\ of\ whole\ content)$$
$$\cdots\cdots (Equation\ 2)$$

$\Delta t$ in Equation 1 is equal to a time interval when $\alpha \cdot N$ pieces of picture data are chosen from the viewed part. This is clear from Equation 3.

$$\Delta t=(time\ length\ of\ whole\ content)/N$$
$$=((time\ length\ of\ whole\ content)\times\alpha)/(\alpha \cdot N)$$
$$=(time\ length\ of\ viewed\ part)/(\alpha \cdot N)$$
$$\cdots\cdots (Equation\ 3)$$

Therefore, by choosing pieces of picture data with time intervals $\Delta t$ from the viewed part, $\alpha \cdot N$ pieces of picture data can be chosen.

FIG. 4A is a flowchart of a main routine in the microcomputer system 11. In the drawing, steps with vertical bars "|" (such as steps S1, S7, and S8) each call a subroutine.

The GUI generating unit 12 displays program navigation areas each of which visually expresses video content recorded on the DVD 100 (S1). The GUI generating unit 12 sets a program navigation area corresponding to the oldest recorded video content on the DVD 100, in the focus state (S2).

Following this, the GUI generating unit 12 executes a loop of steps S3 and S4. This loop waits for the user to press an arrow key (S3) or the ENTER key (S4) on the remote control 102. When the user presses an arrow key, the GUI generating unit 12 sets a program navigation area indicated by the pressed arrow key in the focus state (S5). Here, the remote control 102 has two arrow keys, namely, the UP key and the DOWN key. If the user presses the DOWN key, the GUI generating unit 12 returns the program navigation area which is currently in the focus state, to the normal state. The GUI generating unit 12 then sets a program navigation area which is situated below, in the focus state. If the user presses the UP key, on the other hand, the GUI generating unit 12 returns the program navigation area which is currently in the focus state, to the normal state. The GUI generating unit 12 then sets a program navigation area which is situated above, in the focus state.

When the user presses the ENTER key, the GUI generating unit 12 sets the program navigation area which is currently in the focus state, in the active state. Having done so, the GUI generating unit 12 determines video content corresponding to the program navigation area in the active state, as playback target video content x (S6). Once video content x has been determined, the playback controlling unit 13 performs the $y$th playback operation on video content x (S7). Here, $y$ is a variable showing the number of playback operations performed on video content x, and is incremented by $1$ each time a playback operation is performed on video content x. After the $y$th playback operation ends, the GUI updating unit 15 updates the GUI screen according to the playback history of the $y$th playback operation (S8).

FIG. 4B is a flowchart of a subroutine called in step S1, and shows processing performed by the GUI generating unit 12.

The GUI generating unit 12 generates M program navigation areas which each have a thumbnail area capable of containing $N$ thumbnails, on the GUI screen (S9). The GUI generating unit 12 places a recording date and time, channel, and title of video content in the index area of each program navigation area (S10). The GUI generating unit 12 also places a thumbnail of the first picture data of video content in the thumbnail area of each program navigation area (S11). The GUI generating unit 12 then returns to the main routine shown in FIG. 4A.

FIG. 5 is a flowchart of a subroutine called in step S7, and shows processing performed by the playback controlling unit 13.

The playback controlling unit 13 judges whether a playback history of video content x exists in the work area 14 (S12).

If a playback history does not exist in the work area 14, the playback controlling unit 13 resets variable $y$ to 1 (S13), and sets the beginning of video content x as the start position of the $y$th playback operation (S14). The playback controlling unit 13 then instructs the MPEG decoder 4 and the DVD drive 1 to start playing video content x from the start position (S15). Hence video content x is played from the beginning.

If a playback history of video content x exists in the work area 14, the playback controlling unit 13 acquires the stop time of the last playback history of video content x from the work area 14 (S16). The playback controlling unit 13 then sets a point immediately after the acquired stop time as the start position of the $y$th playback operation (S17), before advancing to step S15. Since the start position is immediately after the stop time of the last playback operation, resume playback is carried out in this case.

Following this, the playback controlling unit 13 waits for a PTS output from the order controlling unit 9 (S18). When a PTS is output, the playback controlling unit 13 acquires the PTS, and stores it in the work area 14 as the start time of the $y$th playback operation (S19).

The playback controlling unit 13 then waits for the occurrence of an event (S20 and S21). Here, the playback controlling unit 13 waits for either video content x to end (S20) or the user to press the STOP key on the remote control 102 (S21). If video content x ends (S20:YES), the playback controlling unit 13 advances to step S23. If the user presses the STOP key on the remote control 102 (S21:YES), the playback controlling unit 13 stops the MPEG decoder 4 and the DVD drive 1 (S22), before advancing to step S23.

The playback controlling unit 13 acquires a PTS from the order controlling unit 9 (S23), and sets it as the stop time of the $y$th playback operation (S24). The playback controlling unit 13 stores the combination of the start and stop times in the work area 14, as the playback history of the $y$th playback operation on video content x (S25). After this, the processing returns to the main routine shown FIG. 4A.

In step S14 in FIG. 5, the beginning of video content x is set as the start position. However, if video content x contains a chapter or a mark that can be located, such a chapter or mark may instead be set as the start position. Also, if time search playback that starts playback at a time designated by the user is possible, such a time designated by the user may be set as the start position.

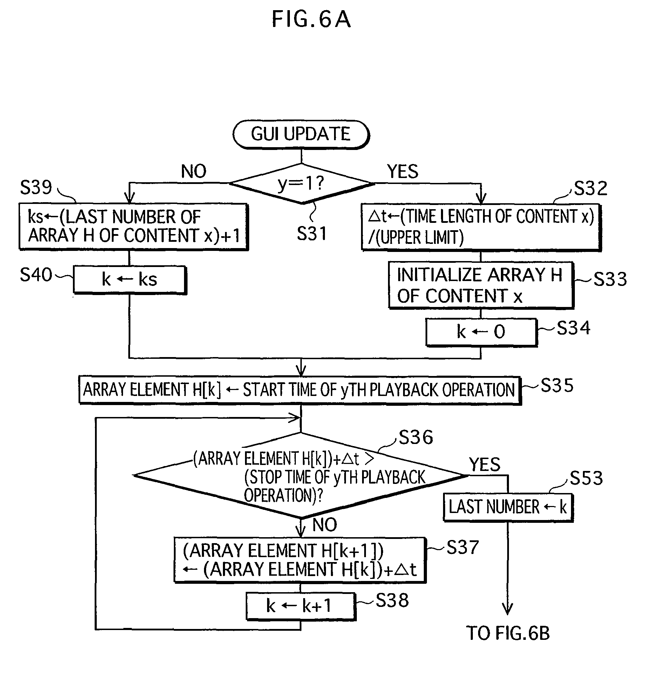

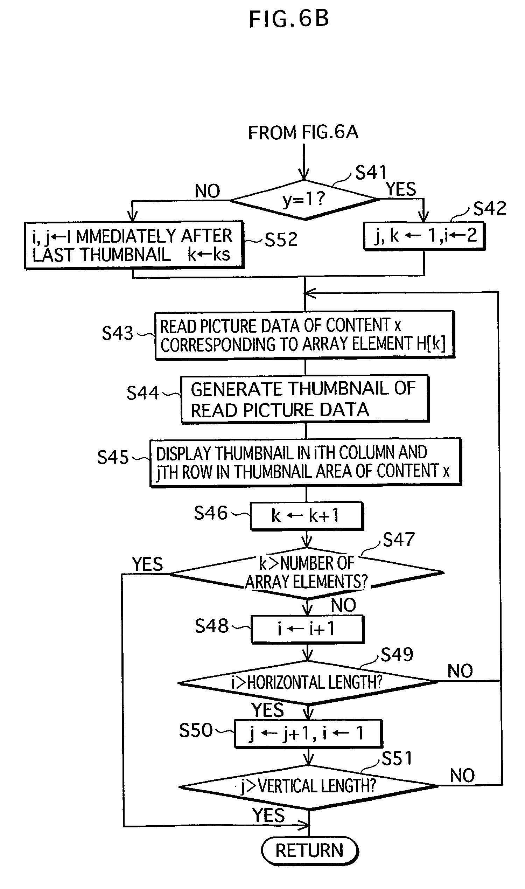

FIGS. 6A and 6B are a flowchart of a subroutine called in step S8, and show processing performed by the GUI updating unit 15 and the thumbnail generating unit 16.

The GUI updating unit 15 checks variable $y$, to judge whether the number of playback operations performed on video content x is one or more (S31).

If the number of playback operations is one, the GUI updating unit 15 finds $\Delta t$ by dividing the total playback time length of video content x by upper limit N to the number of displayable thumbnails (S32). The GUI updating unit 15 then initializes array H of video content x (S33). The GUI updating unit 15 resets variable $k$ which is the index of array H, to 0 (S34). The GUI updating unit 15 then advances to steps S35-S38. In steps S35-S38, elapsed times with intervals $\Delta t$ in the viewed part of video content x are stored in array H of video content x. Here, elapsed time "0sec" is stored in array element H[0] at the beginning of array H.

Steps S35-S38 repeat a loop of adding $\Delta t$ to the $k$th array element H[k] and storing the sum in the $(k+1)$th array element H[k+1] (S37). Variable $k$ is incremented by 1 (S38). This loop ends when the sum of the $k$th array element H[k] and $\Delta t$ is judged as exceeding the stop time of the $y$th playback operation (S36:YES). In other words , the loop is repeated until the sum of the $k$th array element H[k] and $\Delta t$ exceeds the stop time of the $y$th playback operation.

When the judgement "YES" is given in step S36, the value of k is set as the last number (S53), before advancing to step S41.

If the number of playback operations of video content x is more than one (S31:NO), it means array H of video content x already exists. Accordingly, the GUI updating unit 15 adds $1$ to the last number of array H, and assigns the sum to variable $ks$ (S39). The GUI updating unit 15 further assigns $ks$ to variable $k$ (S40). The GUI updating unit 15 then performs steps S35-S38. As a result, elapsed times with intervals $\Delta t$ from the start time to stop time of the $y$th playback operation are added to array H.

Steps S41-S51 show processing of placing thumbnails on the GUI screen by the thumbnail generating unit 16. Before explaining this processing, a layout of thumbnails in a thumbnail area is explained first. In the thumbnail area, the thumbnails are placed in matrix. Here, the location of a thumbnail in the matrix is expressed as the ith column and the jth row where $i$ and $j$ are variables. In FIG. 3, the values of $i$ and $j$ are enclosed in parentheses to designate the display location of each thumbnail in the thumbnail area 302.

The thumbnail placement of steps S41-S51 is explained below. The thumbnail generating unit 16 checks variable $y$, to judge whether the number of playback operations performed on video content X is one or more (S41). If the number of playback operations is one, the thumbnail generating unit 16 sets $j$ and $k$ at $1$ and sets $i$ at $2$ (S42).

After this, the thumbnail generating unit 16 reads a piece of picture data of video content x corresponding to array element H[k] (S43). The thumbnail generating unit 16 generates a thumbnail of the read piece of picture data (S44), and displays the thumbnail in the ith column and the jth row (S45). Variable $i$ which specifies the column coordinate is incremented by 1 (S48). Steps S43-S46 are repeated until variable $i$ exceeds the horizontal length of the thumbnail area (S49). In this way, each thumbnail is placed in the thumbnail area in the horizontal direction.

If variable $i$ exceeds the horizontal length, variable $j$ is incremented by *1* and variable $i$ is reset to *1* (S50). After step S51, the processing returns to step S43.

As a result of incrementing variable $j$, the display location of a thumbnail shifts to the left end of the second row in the thumbnail area. After this, the loop of steps S43-S51 is repeated to place each thumbnail in the second row of the thumbnail area in the horizontal direction.

This loop is repeated until variable $i$ exceeds the horizontal length of the thumbnail area (S49:YES) and variable $j$ exceeds the vertical length of the thumbnail area (S51:YES). If variable $k$ exceeds the number of array elements (S47: YES), the processing ends regardless of the values of $i$ and $j$. Thus, if video content x has been played only up to some midpoint, part of the thumbnail area is left unoccupied by thumbnails. The processing then returns to the main routine shown in FIG. 4A.

If the number of playback operations is more than one (S41:NO), the thumbnail generating unit 16 sets $i$ and $j$ at values immediately after the last thumbnail in the thumbnail area, and assigns $ks$ to $k$. Here, $ks$ is the value which was calculated in step S39 by adding *1* to the last number of array H of video content x. By such setting $i$, $j$, and $k$, thumbnails corresponding to the $y$th playback operation are sequentially placed following the existing thumbnails in the thumbnail area.

Though $\Delta t$ is calculated using the above equation, $\Delta t$ may instead be a predetermined time interval, such as one minute or two minutes. In this case, the number of thumbnails displayed in the thumbnail area indicates the progress of playback not by ratio but by time.

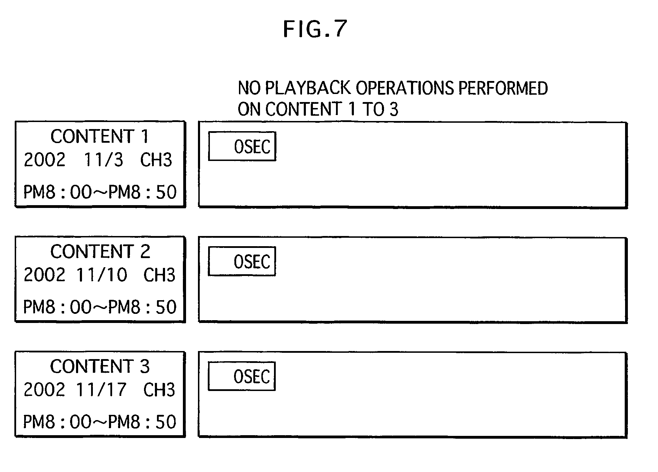

The procedures shown by these flowcharts are explained in greater detail below, using specific examples of FIGS. 7 to 9.

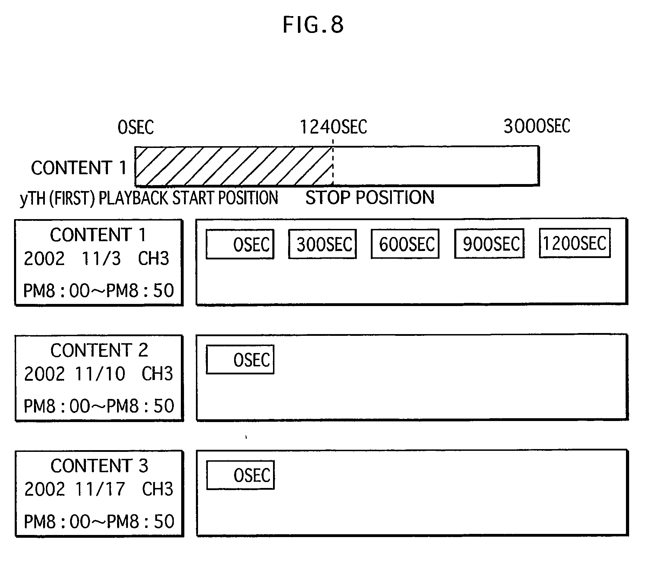

Suppose three sets of video content that are video content 1, video content 2, and video content 3 are recorded on the DVD 100, which have not been played back at all. This being the case, step S1 is performed to display program navigation areas corresponding to video content 1 to 3 on the GUI screen. FIG. 7 shows the resulting display. In the drawing, a program navigation area corresponding to each of video content 1 to 3 is displayed on the GUI screen. A title, recording date and time, and channel of the corresponding video content are provided in the index area of each program navigation area. Also, a thumbnail of the first piece of picture data of the corresponding video content is provided in the thumbnail area of each program navigation area. Suppose video content 1 is determined as playback target video content x as a result of user operations on this GUI screen. Video content 1 has a total playback time length of 3000sec (PM8:00-PM8:50). This being so, suppose a playback operation starts at the beginning of video content 1 (at the 0sec point) and stops after 1240 seconds (at the 1240sec point). Then step S8 is performed to update the program navigation area of video content 1. In detail, four pieces of picture data with intervals of 300sec are chosen from the part of video content 1 between the 0sec point where the playback operation started and the 1240sec point where the playback operation stopped. Following this, thumbnails of these pieces of picture data are placed in the thumbnail area of the program navigation area of video content 1. FIG. 8 shows how the GUI screen is updated when video content 1 has been played from the beginning up to the 1240sec point. As illustrated, a thumbnail of a piece of picture data at the 300sec point, a thumbnail of a piece of picture data at the 600sec point, a thumbnail of a piece of picture data at the 900sec point, and a thumbnail of a piece of picture data at the 1200sec point are placed in the thumbnail area of video content 1, in addition to a thumbnail of a piece of picture data at the 0sec point. This display enables the user to recall the contents of the viewed part.

This update is done according to the processing shown in FIGS. 6A and 6B. In step S32, the total playback time length of video content 1 (3000sec) is divided by the upper limit to the number of displayable thumbnails (10), thereby obtaining $\Delta t=300sec$. Also, array element H[0] of video content 1 is set at 0sec which is the beginning of video content 1. Since array element H[0] is 0sec, array element H[1] is set as $H[1]=H[0]+\Delta t=0+300=300sec$ as a result of the first execution of step S37 in the loop of steps S35-S38. Next, array element H[2] is set as $H[2]=H[1]+\Delta t=300+300=600sec$ as a result of the second execution of step S37 in the loop of steps S35-S38. In the same manner, array element H[3] is set as $H[3]=H[2]+\Delta t=600+300=900sec$ as a result of the third execution of step S37, and array element H[4] is set as $H[4]=H[3]+\Delta t=900+300=1200sec$ as a result of the fourth execution of step S37.

After this, $H[4]+\Delta t=1200+300=1500sec$ is calculated in step S36. This $H[K]+\Delta t$ exceeds the stop time of the $y$th playback operation of video content 1, that is, 1240sec. Accordingly, the judgement "YES" is given in step S36 to exit from the loop of step S35-S38 .

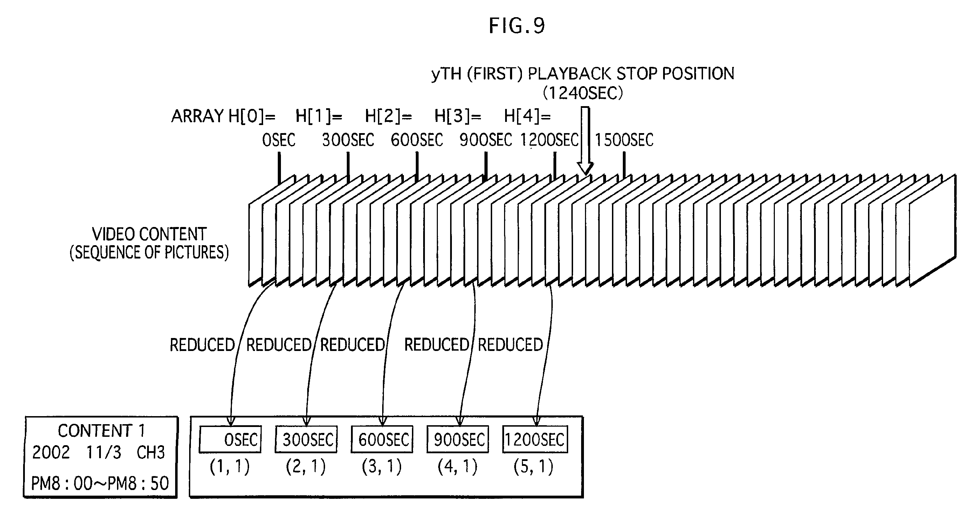

In this way, the array elements of video content 1 are set such that H[0]=0, H[1]=300, H[2]=600, H[3]=900, and H[4]=1200. Accordingly, the thumbnail generating unit 16 chooses the pieces of picture data which are present respectively at the 300sec point, the 600sec point, the 900sec point, and the 1200sec point, and places the thumbnails of these pieces of picture data in the thumbnail area of the program navigation area, according to the procedure shown in FIG. 6B . FIG. 9 is a representation of a process of choosing these pieces of picture data and reducing them. In the drawing, the piece of picture data at the 0sec point has already been reduced and placed at (1,1) in the thumbnail area. In addition to this, the piece of picture data at the 300sec point is reduced and placed at (2,1) in the thumbnail area. Also, the piece of picture data at the 600sec point is reduced and placed at (3,1) in the thumbnail area, the piece of picture data at the 900sec point is reduced and placed at (4,1) in the thumbnail area, and the piece of picture data at the 1200sec point is reduce and placed at (5,1) in the thumbnail area. Hence the display shown in FIG. 8 is obtained.

Suppose the user resumes the playback of video content 1 after a certain period of time. As one example, the second playback operation starts immediately after the 1240sec point and stops at the 2200sec point. Accordingly, step S8 is performed to update the GUI screen. In detail, three pieces of picture data with intervals of 300sec are chosen from the part of video content between the 1240sec point where the playback operation started and the 2200sec point where the playback operation stopped. Then thumbnails of these pieces of picture data are placed in the thumbnail area of the program navigation area of video content 1.

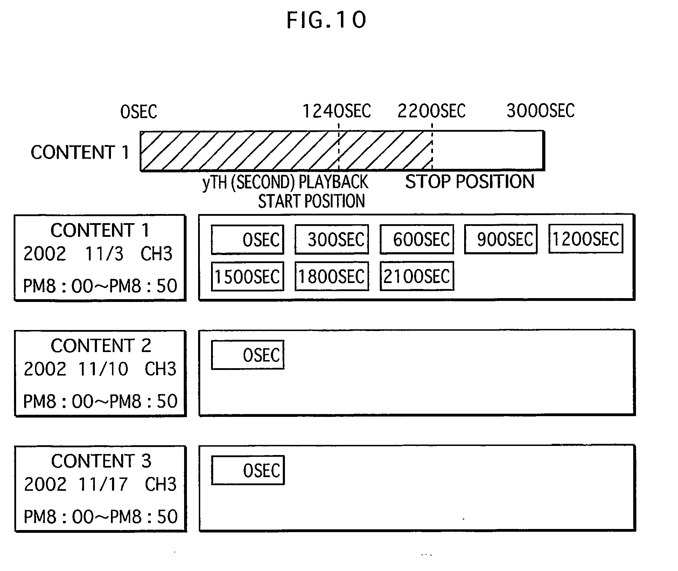

FIG. 10 shows how the GUI screen is updated when video content 1 has further been played from the 1240sec point up to the 2200sec point. A thumbnail of a piece of picture data at the 1500sec point, a thumbnail of a piece of picture data at the 1800sec point, and a thumbnail of a piece of picture data at the 2100sec point are placed in the thumbnail area of the program navigation area of video content 1.

Suppose the user resumes the playback of video content 1 and further plays back video content 2, after a certain period of time. As one example, the third playback operation of video content 1 starts at immediately after the 2200sec point and stops at the 3000sec point, and then video content 2 is played from the beginning (the 0sec point) up to the 1000sec point. Accordingly, step S8 is performed to update the GUI screen. In detail, two pieces of picture data with intervals of 300sec are chosen from the part of video content 1 between the 2200sec point where the playback operation started and the 3000sec point where video content 1 ended. Then thumbnails of these pieces of picture data are placed in the thumbnail area of the program navigation area of video content 1. Also, three pieces of picture data with intervals of 300sec are chosen from the part of video content 2 between the 0sec point where the playback operation started and the 1000sec point where the playback operation stopped. Then thumbnails of these pieces of picture data are placed in the thumbnail area of the program navigation area of video content 2.

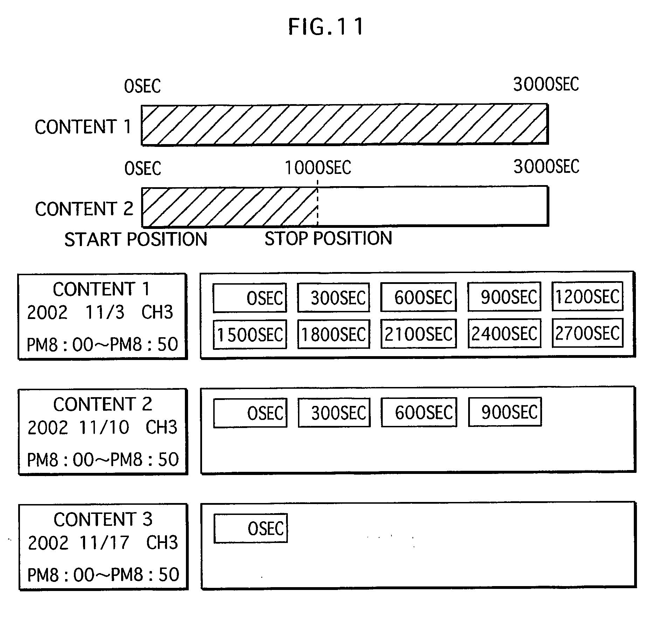

FIG. 11 shows how the GUI screen is updated when video content 1 has been played to the end and video content 2 has been played from the beginning up to the 1000sec point. As illustrated, a thumbnail of a piece of picture data at the 2400sec point and a thumbnail of a piece of picture data at the 2700sec point are placed in the thumbnail area of the program navigation area of video content 1. Also, a thumbnail of a piece of picture data at the 300sec point, a thumbnail of a piece of picture data at the 600sec point, and a thumbnail of a piece of picture data at the 900sec point are placed in the thumbnail area of the program navigation area of video content 2, in addition to a thumbnail of a piece of picture data at the 0sec point.

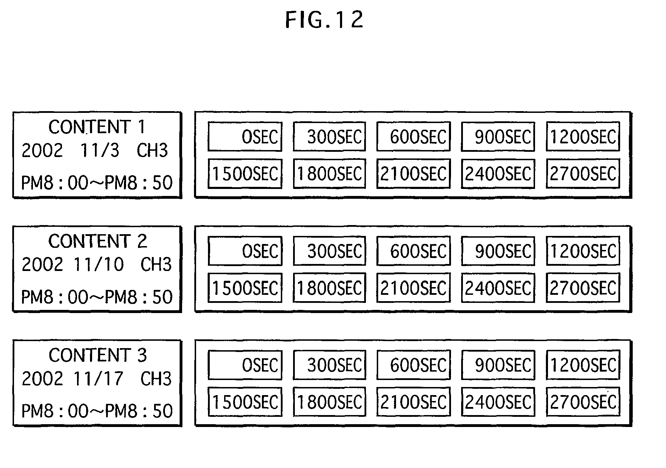

Suppose video content 1 to 3 have all been completely played after all. FIG. 12 shows how the GUI screen is updated when all of video content 1 to 3 have been completely played. As illustrated, the thumbnail areas of the program navigation areas of video content 1 to 3 are completely occupied with thumbnails.

Once the thumbnail areas of the program navigation areas have become full as shown in FIG. 12, the GUI screen may be returned to the state shown in FIG. 7, to allow the user to view these video content again with a fresh mind.

According to this embodiment, pieces of picture data are chosen from a part of video content between a playback start time and a playback stop time and thumbnails of these pieces of picture data are displayed on the GUI screen. This helps the user instantly recall the contents of the viewed part, thereby facilitating further viewing.

This embodiment has the following effects when compared with a technique of choosing pieces of picture data from the whole video content and displaying thumbnails of these pieces of picture data on a GUI screen. When viewing video content such as a drama series, the user enjoys the story development while predicting an ending or climax such as "Who committed the crime?" or "Are they going to get married?". Therefore, when pieces of picture data are chosen not only from the viewed part but from the whole video content and thumbnails of these pieces of picture data are displayed, the user finds out the ending or climax even if he or she does not want to. This spoils the fun of watching the drama series to the end. According to this embodiment, however, pieces of picture data are chosen only from the viewed part between the playback start time and the playback stop time. Therefore, the ending or climax which the user has not yet watched is not shown on the GUI screen, with it being possible to keep the fun of watching the drama series to the end. Thus, by displaying thumbnails of only the viewed part and not displaying thumbnails of the unviewed part, it is possible to bring about the user's fresh memory of the contents of the viewed part, without spoiling his or her fun of watching the whole content.

Furthermore, this embodiment has the following effects when compared with a technique of displaying thumbnails of pieces of picture data which are located at the playback start time and playback stop time on the GUI screen. Each episode of a drama series usually begins with a typical opening theme song or sponsor announcement. Displaying a thumbnail of such part does not much help the user recall the contents of the previously viewed episode. The same applies to the case of displaying a thumbnail of a piece of picture data corresponding to the playback stop time. Usually, the user stops playback not at a high point of the episode but a while after the high point. Displaying a thumbnail of such insignificant part of the episode does not much help the user to recall the contents of the previously viewed episode. According to this embodiment, however, several pieces of picture data are chosen between the playback start time and the playback stop time and thumbnails of these pieces of picture data are displayed on the GUI screen. This enables the user to regain the fresh memory of the previously viewed episode. Thus, this embodiment delivers effects that are out of the reach of the technique of merely displaying the thumbnails corresponding to the playback start time and stop time on the GUI screen.

The following are two example modifications to the first embodiment.

(First Modification to the First Embodiment)

In the first embodiment, to indicate the progress of playback of video content by the number of thumbnails, thumbnails of pieces of picture data between the start time of the first playback operation and the stop time of the $y$th playback operation are placed together in a program navigation area of the video content. As an alternative, only thumbnails of pieces of picture data between the start time of the $y$th playback operation and the stop time of the $y$th playback operation may be placed in the program navigation area, by writing them over existing thumbnails.

In more detail, first the existing thumbnails (thumbnails between the start time of the first playback operation and the stop time of the $(y-1)$th playback operation) are deleted from the GUI screen. Then N pieces of picture data are chosen from the part of the video content between the start time of the $y$th playback operation and the stop time of the $y$th playback operation, and N thumbnails of the N pieces of picture data are placed in the program navigation area. This enables the contents of the viewed part of the $y$th playback operation to be presented with a greater number of thumbnails. Hence the user can recall the contents of the viewed part more clearly.

Suppose a playback operation has been performed from the 0sec point to the 1240sec point, with an upper limit for the number of displayable thumbnails being ten (like the example of FIG. 8). In this case, the viewed part of 1240 seconds in length is expressed using ten thumbnails, so that $\Delta t=124sec(=1240/10)$. Accordingly, pieces of picture data are chosen with intervals of 124sec from the viewed part, and thumbnails of the pieces of picture data are placed in the program navigation area. In the example of FIG. 8, $\Delta t$ is 5min (=300sec), and therefore the viewed part is expressed using five thumbnails. In this modification, on the other hand, $\Delta t$ is about 2min (=124sec) , and therefore the viewed part can be expressed using ten thumbnails. This enables the user to recall the contents of the viewed part more clearly.

(Second Modification to the First Embodiment)

In this second modification, if the DVD 100 is recordable, the playback history and array H of each set of video content stored in the work area 14 are written onto the DVD 100. In this way, even after the playback apparatus is shut down or the DVD 100 is changed to another, the playback history and array H of each set of video content recorded on the DVD 100 can be used. In this case, the DVD 100 need be of such a type that supports writing from the user.

The playback apparatus of this second modification is further equipped with a tuner and an MPEG encoder.

The tuner demodulates a television broadcast signal, and outputs a video signal and an audio signal to the MPEG encoder.

The MPEG encoder encodes the video signal and the audio signal to obtain a VOB.

The DVD drive 1 writes the VOB onto the DVD 100.

With the provision of the tuner and the MPEG encoder, the playback apparatus has a function of recording broadcast video content.

The playback controlling unit 13 plays back video content recorded on the DVD 100. In addition, the playback controlling unit 13 performs the following operation. In step S7 in FIG. 4A, immediately after performing the $y$th playback operation on video content x, the playback controlling unit 13 writes the playback history and array H of each set of video content in the work area 14, onto the DVD 100. In so doing, even when the DVD 100 is changed to another, the playback history and array H of each set of video content recorded on the DVD 100 are retained on the DVD 100.

Since the playback history and array H of each set of video content are retained on the DVD 100, the playback controlling unit 13 reads the playback history and array H from the DVD 100 and writes them in the RAM 11c, prior to the GUI update of step S8. Thus, the GUI screen is updated based on the playback history and array H retained on the DVD 100.

In this case, GUI update is performed not only after a playback operation is performed in step S7 but also when the DVD 100 is changed to another DVD. Prior to this update, the playback controlling unit 13 reads the playback history and the array H from the DVD 100 and writes them into the RAM 11c. Therefore, even if the DVD 100 is replaced with another DVD in the playback apparatus, the user can recall the contents of the viewed part when later the DVD 100 is reinserted to the playback apparatus and played back.

If the DVD 100 is a multiuser disc, it is desirable to record the playback history and array H as personal information of each individual user. This enables each individual user to clearly recall the contents of the part which he or she has previously viewed.

(Second Embodiment)

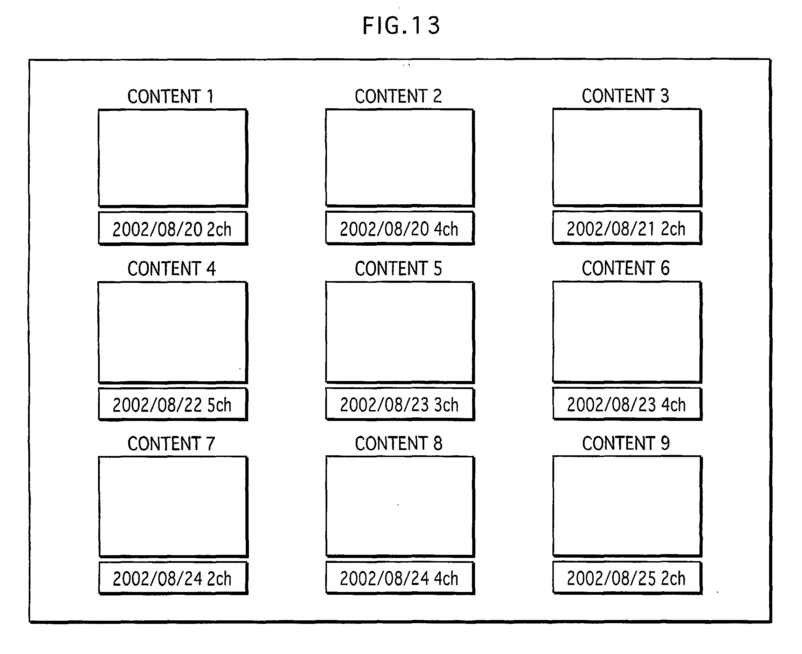

In the first embodiment, a plurality of thumbnails up to N thumbnails at the maximum are displayed for each set of video content. However, if a larger number of sets of video content are recorded on the DVD 100, a display area for each set of video content becomes smaller, and eventually it becomes impossible to display N thumbnails in a thumbnail area of each set of video content. This problem might be solved by reducing the size of each thumbnail, but this makes it hard for the user to understand the display contents. Considering the resolutions of home televisions, it is not desirable to reduce the thumbnail size too much. In view of this problem, the GUI generating unit 12 of the second embodiment uses a layout of FIG. 13 instead of the layout of FIG. 3 if the number of sets of video content increases.

In FIG. 3, each thumbnail area is large enough to display ten thumbnails. In FIG. 13, on the other hand, each thumbnail area is small and can only display one thumbnail. Meanwhile, there are nine thumbnail areas for nine sets of video content in FIG. 13.

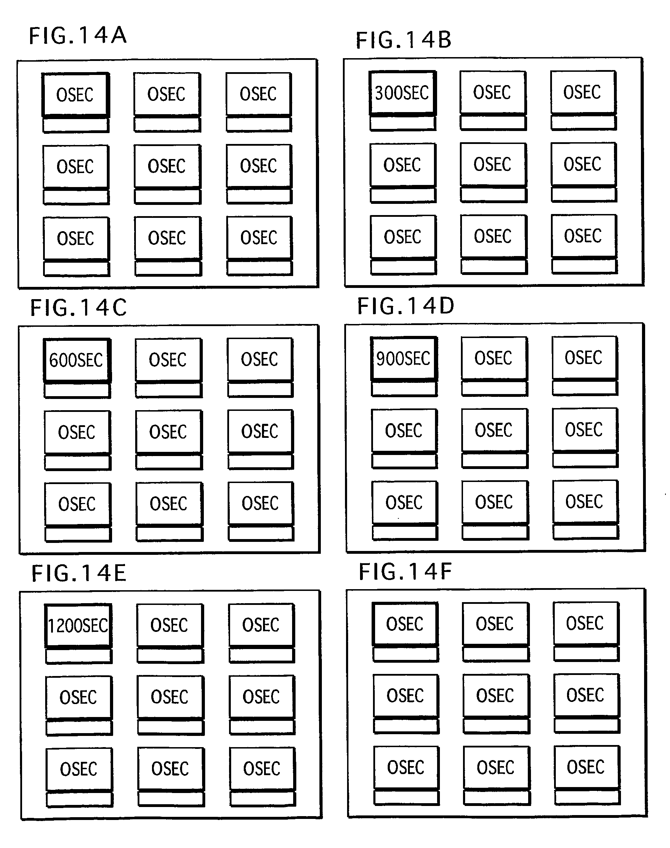

Suppose video content 1 among the nine sets of video content has been played from the 0sec point up to the 1240sec point, like the example of FIG. 8. In such a case, the corresponding thumbnails are displayed one after another like a slide show in a thumbnail area of a program navigation area of video content 1. FIGS. 14A to 14F show how the thumbnails are displayed like slides. In FIG. 14A, the thumbnail of the piece of picture data at the 0sec point is displayed in the thumbnail area of video content 1. In FIG. 14B, the display has been switched to the thumbnail of the piece of picture data at the 300sec point. Likewise, the display has been switched to the thumbnail of the piece of picture data at the 600sec point in FIG. 14C, the thumbnail of the piece of picture data at the 900sec point in FIG. 14D, and the thumbnail of the piece of picture data at the 1200sec point in FIG. 14E. After this, the display has returned to the thumbnail of the piece of picture data at the 0sec point in FIG. 14F. Thus, a plurality of thumbnails for one set of video content are displayed one after another like slides in a thumbnail area of that video content in this embodiment. Here, if the other sets of video content, i.e. video content 2 to 9, have not been played at all, a thumbnail of the first picture remains in a thumbnail area of a program navigation area of each of these video content 2 to 9.

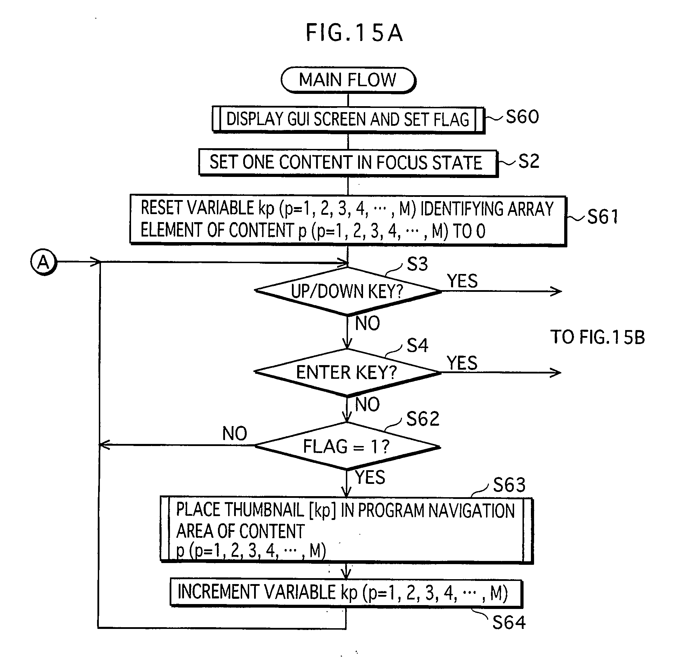

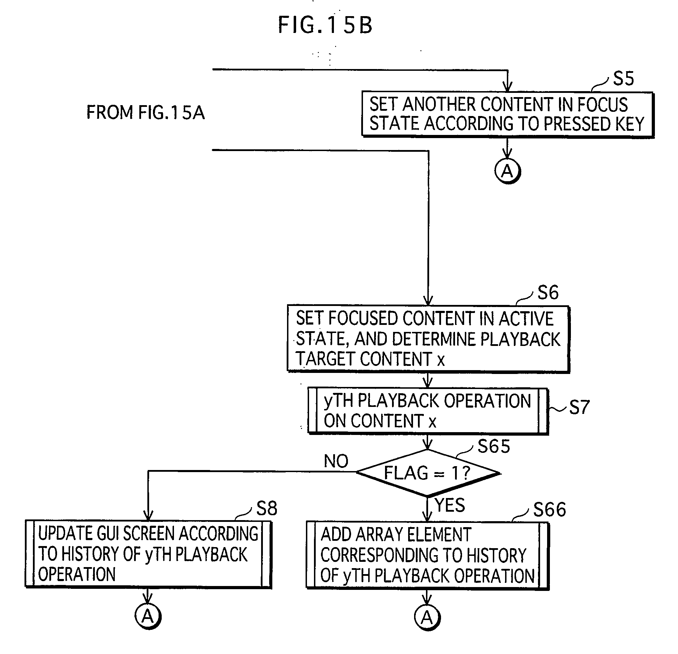

FIGS. 15A and 15B are a flowchart of a main routine in the second embodiment. FIGS. 15A and 15B correspond to FIG. 4A in the first embodiment, but differ from FIG. 4A in that (i) step S1 has been replaced with step S60, (ii) step S61 has been added between steps S2 and S3,

(iii) steps S62-64 have been added to the loop of steps S3-S4, and (iv) steps S65-S66 have been added between steps S7-S8.

The most important difference lies in the addition of steps S61, S62, and S63. These steps use variables $p$ and $kp$.

Variable p identifies one of M sets of video content recorded on the DVD 100. When M sets of video content are recorded on the DVD 100, variable p identifies one of video content 1 to M.

Variable $kp$ identifies an array element of video content p. Since variable p identifies each of video content 1, 2, 3, 4, ... , $M$, there are $M$ variables $kp$ that are $k1, k2, k3, k4, ... , kM$. Variable $k1$ identifies an array element of video content 1. Variable $k2$ identifies an array element of video content 2. Variable $k3$ identifies an array element of video content 3. Variable $k4$ identifies an array element of video content 4.

Through the use of such variables p and $kp$, steps S61 and S63 are performed in the following way. Variables $k1, k2, k3, k4, ... , kM$ corresponding to video content 1, 2, 3, 4, ... , M recorded on the DVD 100 are all reset to 0 (S61). After this, a loop of steps S3-S4 and S63-S64 is repeated. This loop waits for the user's selection of video content x, as in the first embodiment. Also, thumbnails corresponding to array elements specified by variables $k1, k2, k3, ... , kM$ are placed simultaneously in the program navigation areas of video content 1, 2, 3, ... , M respectively (S63), and then variables $k1, k2, k3, ... , kM$ are all incremented by $1$ (S64).

Each time the loop is repeated, new thumbnails specified by incremented variables $k1, k2, k3, ... , kM$ are placed in the program navigation areas of video content 1, 2, 3, ... , M respectively (S63). Thus, the thumbnails of all program navigation areas are updated each time the loop is repeated. In this way, while waiting for the user's selection, each program navigation area is constantly updated to display a new thumbnail. Though only one thumbnail at a time can be displayed in the thumbnail area of each program navigation area, the display contents of the thumbnail area are constantly updated while waiting for the user's selection. Therefore, even if the thumbnail area is small, the user can clearly recall the contents of the previously viewed part.

The remaining parts of the flowchart shown in FIG. 15 are explained below. One of the layout of FIG. 3 and the layout of FIG. 13 is selected, and the selection result is set in a flag. Having done so, the program navigation areas are displayed in the selected layout (S60). When the flag is 0, the layout of FIG. 3 is used. When the flag is $1$, the layout of FIG. 13 is used. Following this, one set of video content is set in the focus state (S2), and the loop of steps S3-S4 and S62-S64 is performed.

Step S62 is provided to maintain compatibility with the main routine of FIG. 4A. If the flag is $0$ (S62:NO), steps S3-S4 are performed to wait for the user's selection of video content x. If the flag is $1$ (S62:YES), steps S3-S4 and S63-S64 are performed to wait for the user's selection of video content x.

As described above, steps S63-S64 are performed to update the thumbnails of all program navigation areas simultaneously. Accordingly, if the flag is *1*, new thumbnails are displayed in turn in the program navigation area of each set of video content. If the user presses the ENTER key to determine video content x, the playback controlling unit 13 plays video content x (S6 and S7). Then the flag is checked (S65).

If the flag is 0, the GUI updating unit 15 updates the GUI screen according to the playback history of the $y$th playback operation (S8). If the flag is *1*, the GUI updating unit 15 only adds array elements according to the playback history of the $y$th playback operation (S66). In step S8, the GUI updating unit 15 adds the array elements and then updates the program navigation areas according to the added array elements. In step S66, on the other hand, the GUI updating unit 15 only adds the array elements and does not update the program navigation areas. When the layout of FIG. 13 is used, the thumbnails are updated in steps S63 and S64, so that there is no need to update the thumbnails in step S66.

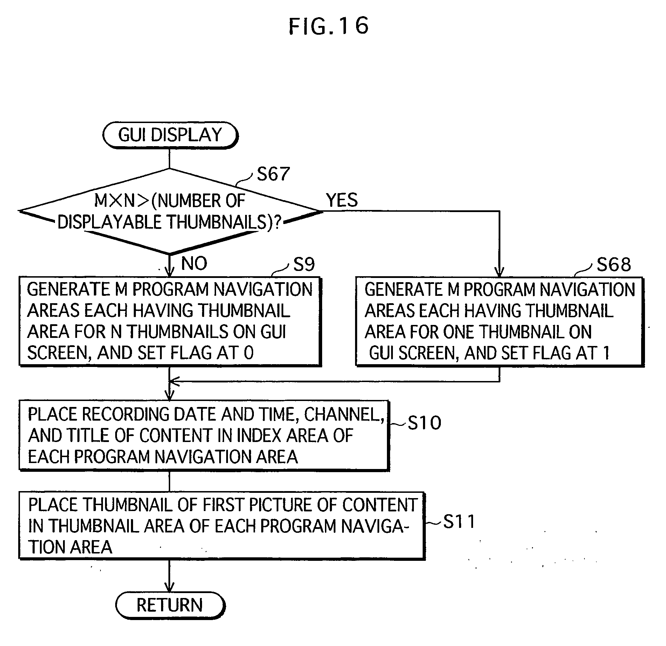

FIG. 16 is a flowchart of a subroutine called in step S60, and shows processing of the GUI generating unit 12 in the second embodiment. FIG. 16 corresponds to FIG. 4B in the first embodiment, but differs from FIG. 4B in that steps S67 and S68 have been added. The following explanation focuses on this difference. The GUI generating unit 12 multiples $M$ by $N$ where $M$ is the number of sets of video content and N is the upper limit to the number of displayable thumbnails for each set of video content (S67). If the product is no greater than the total number of displayable thumbnails in one GUI screen, the GUI generating unit 12 advances to steps S9-S11. These steps are similar to those in FIG. 4B. Here, the GUI generating unit 12 sets the flag at 0, to select the layout of FIG. 3. If the product exceeds the total number of displayable thumbnails, the GUI generating unit 12 generates M program navigation areas each having a thumbnail area capable of containing only one thumbnail, on the GUI screen. The GUI generating unit 12 also sets the flag at *1* (S68). Following this, the GUI generating unit 12 advances to steps S10 and S11 to display the program navigation areas, before returning to the main routine of FIG. 15.

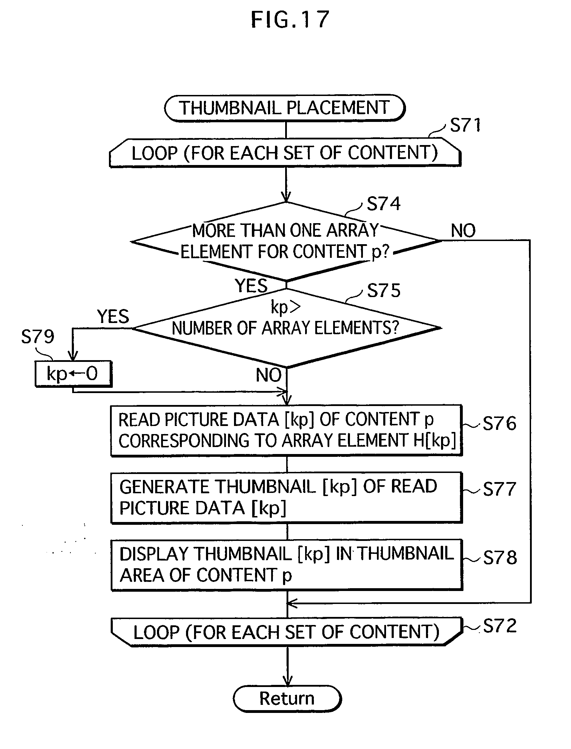

FIG. 17 is a flowchart of a subroutine called in step S63 , and shows processing of the GUI updating unit 15 and the thumbnail generating unit 16 in the second embodiment.

This flowchart includes a loop (S71 and S72) which repeats steps S74-S79 for each set of video content. This loop is provided to update all program navigation areas each time the loop of steps S3-S4 and S62-S64 is performed. Suppose video content p is video content that is subjected to the loop of steps S71 and S72. The thumbnail generating unit 16 judges whether array H of video content p has at least two array elements (S74). If so (S74:YES), the thumbnail generating unit 16 judges whether variable $kp$ exceeds the number of array elements (S75). If variable $kp$ does not exceed the number of array elements (S75:NO), the thumbnail generating unit 16 reads a piece of picture data of video content p which is specified by array element H[kp] (S76), and generates a thumbnail of the piece of picture data (S77). The thumbnail generating unit 16 then displays the thumbnail in a thumbnail area of video content p (S78). This is repeated for each set of video content, before returning to the main routine of FIG. 15. As a result, a thumbnail of a piece of picture data which is specified by variable $kp$ is displayed for every set of video content on the GUI screen. Step S79 is provided to reset variable $kp$ to *0* when variable $kp$ exceeds the number of array elements (S75:YES), before the thumbnail display operation. Also, if the number of array elements is smaller than two (S74:NO), steps S75-S78 are skipped to advance to process the next content.

Thus, the slide display of thumbnails for each set of video content is carried out until the number of array elements is exceeded.

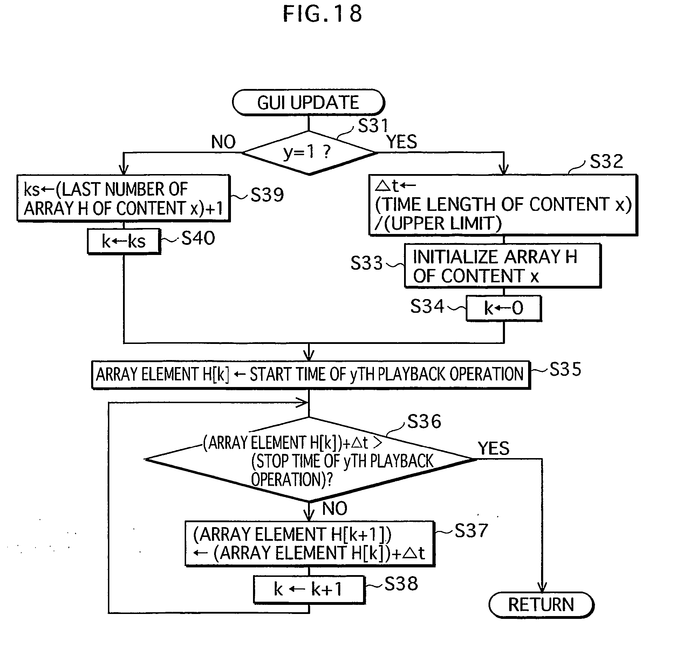

FIG. 18 is a flowchart of a subroutine called in step S66, and shows processing of the GUI updating unit 15 in the second embodiment. The flowchart of FIG. 18 is made up of steps S31-S38 shown in FIG. 6. When the $y$th playback operation is performed on video content x, the GUI updating unit 15 chooses pieces of picture data with intervals of $\Delta t$ from the part of video content x between the start time and stop time of the $y$th playback operation, and adds them to array H of video content x.

The procedures performed in this embodiment are explained using specific examples below. Suppose nine sets of video content that are video content 1, 2, 3, ... , 9 are recorded on the DVD 100, with array elements of these video content being specified by variables $k1, k2, k3, ... , k9$ ($p=1, 2, 3, ... , 9$). This being the case, step S61 is performed to reset $k1, k2, k3, ... , k9$ all to *0.* As a result, the *0*th array elements are specified in arrays H of video content 1, 2, 3, ... , 9. Subsequently, step S63 is performed to place thumbnails corresponding to the *0*th array elements in the program navigation areas of video content 1, 2, 3, ... , 9.

Then step S64 is performed to increment variables $k1, k2, k3, ... , k9$ by *1*, before returning to step S3. Since $k1, k2, k3, ... , k9$ become *1*, the first array elements are specified in arrays H of video content 1, 2, 3, ... , 9. In step S63, thumbnails corresponding to the first array elements are placed in the program navigation areas of video content 1, 2, 3, ... , 9. The same processing is repeated to place thumbnails corresponding to the second, third, and fourth array elements one after another in the program navigation areas of video content 1, 2, 3, ... 9.

As described above, this embodiment has the following construction. Suppose N denotes the number of displayable thumbnails for each set of video content, and M denotes the number of sets of video content. If $M \cdot N$ thumbnails

can be contained within one GUI screen, thumbnails of each set of video content are simultaneously displayed in list form. If $M \cdot N$ thumbnails cannot be contained within one GUI screen, thumbnails of each set of video content are displayed one after another like slides. With this construction, even if the total number of thumbnails $M \cdot N$ is large, it is possible to display these thumbnails. Hence the user can understand the recorded contents of the DVD 100 easily even when a lot of sets of video content are recorded on the DVD 100.

Though this embodiment describes the case where the layout of FIG. 13 is used when the number of sets of video content is large, the program navigation areas may instead be provided on a plurality of pages with the layout of FIG. 3. This being so, upon receiving a page turning request, these pages are turned to display all program navigation areas. Alternatively, the program navigation areas may be provided on a plurality of pages with the layout of FIG. 13. In this case too, upon receiving a page turning request, these pages are turned to display all program navigation areas.

(Third Embodiment)

In the first embodiment, pieces of picture data are chosen with regular intervals. In the third embodiment, on the other hand, pieces of picture data are chosen with irregular intervals.

In the first embodiment, pieces of picture data are chosen with regular intervals from a viewed part between a playback start time and a playback stop time, and thumbnails of the chosen pieces of picture data are displayed on the GUI screen. Therefore, the thumbnails have equal time intervals between themselves. In the third embodiment, more thumbnails are displayed near the playback stop time than near the playback start time.

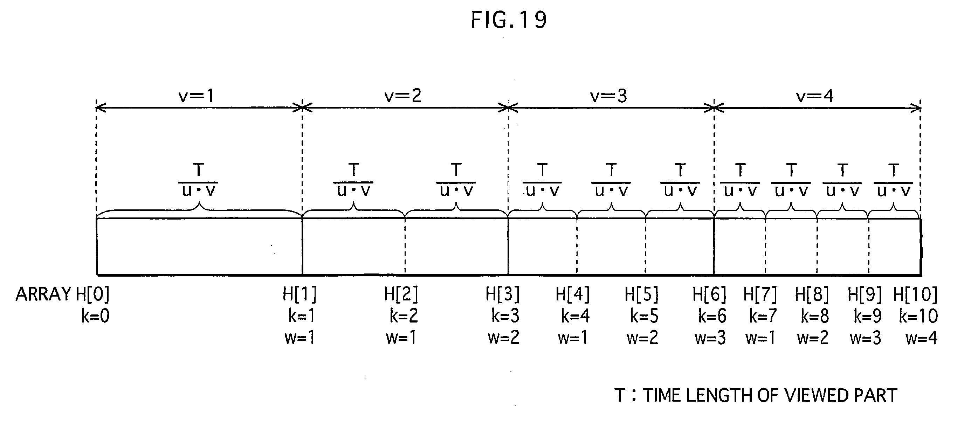

To do so, the playback apparatus of the third embodiment performs a process of storing elapsed time $T/(u \cdot v)$ after array element H[k] into array element H[k+1]. FIG. 19 shows how array elements H[0], H[1], H[2], H[3] ... are determined when $u$ is $4$ and $v$ is any of $1$ to $4$. Here, $u$ is a fixed number that satisfies $N=1+2+3+4+...+u,$ where N is the upper limit to the number of displayable thumbnails in one program navigation area. Also, $v$ is an integer that satisfies $1 \leq v \leq u$.

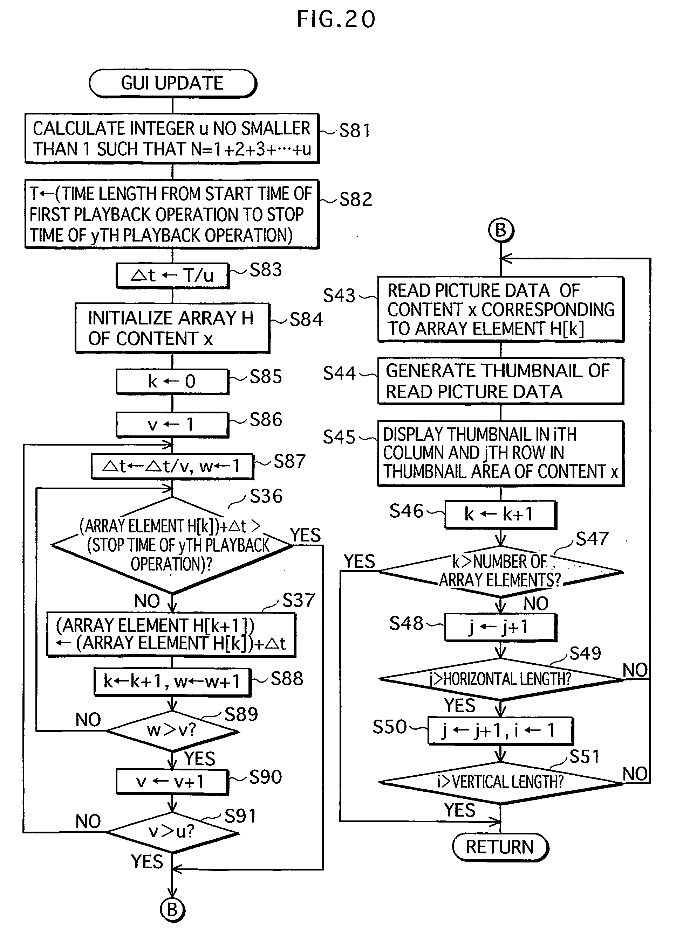

If $v=1$, array element H[1] is determined using time interval $T/(u \cdot 1)$. If $v=2,$ array elements H[2] and H[3] are determined using time intervals $T/(u \cdot 2)$. If $v=3$, array elements H[4], H[5], and H [6] are determined using time intervals $T/(u \cdot 3)$. If $v=4,$ array elements H[7], H[8], H[9], and H [10] are determined using time intervals $T/(u \cdot 4)$. Variable $v$ is smaller near the playback start time, and is larger near the playback stop time. In FIG. 19, $w$ is a variable whose upper limit is $u$. To calculate the array elements in this way, step S8 in FIG. 4A is carried out according to processing shown in FIG. 20. FIG. 20 is a flowchart of a subroutine called in step S8, and shows processing of the GUI updating unit 15 and the thumbnail generating unit 16 in the third embodiment. This processing is executed after the $y$th playback operation of video content x has been performed and the playback history of the $y$th playback operation has been obtained.

The GUI updating unit 15 calculates integer $u$ no smaller than $1$, such that $N=1+2+3+...+u$ (S81). The GUI updating unit 15 sets the time length from the start time of the first playback operation to the stop time of the $y$th playback operation as $T$ (S82) . The GUI updating unit 15 then assigns the value of $T/u$ to $\Delta t$ (S83), and initializes array H of video content x (S84). After this, the GUI updating unit 15 resets variable $k$ to $0$ (S85), and variable $v$ to $1$ (S86). The GUI updating unit 15 then divides the value of $\Delta t$ by $v$ and sets the result as $\Delta t$, and also resets $w$ to 1 (S87). The GUI updating unit 15 then repeats a loop of steps S36-S37 and S88-S89.

This loop repeats a process of adding $\Delta t$ to array element H[k] and storing the sum in array element H[k+1]. In each repetition, variables $k$ and $w$ are incremented by $1$ (S88). The loop ends when the sum of array element H[k] and $\Delta t$ exceeds the stop time of the $y$th playback operation (S36:YES) or when variable $w$ exceeds variable $v$ (S89:YES). Variable $v$ here is used to divide $\Delta t(=T/u)$. When divided by $v$, $\Delta t$ becomes $T/(u \cdot v)$. In other words, this loop repeats a process of storing elapsed times with intervals of $T/(u \cdot v)$ in array H until $w$ exceeds $v$.

When $w$ exceeds $v$, $v$ is incremented by $1$. If $v$ is no greater than $u$, the processing returns to step S87. As described above, step S87 divides $\Delta t$ by $v$. Which is to say, as a result of incrementing $v$ by 1, $\Delta t(=T/(u \cdot v))$ becomes smaller. This process of incrementing $v$ and thereby making $\Delta t$ smaller is repeated until $v$ exceeds $u$ (S91). If $v$ exceeds $u$, the processing proceeds to steps S43-S51. These steps are the same as those in FIG. 6. As a result of these steps, thumbnails are displayed in accordance with the array elements of array H.

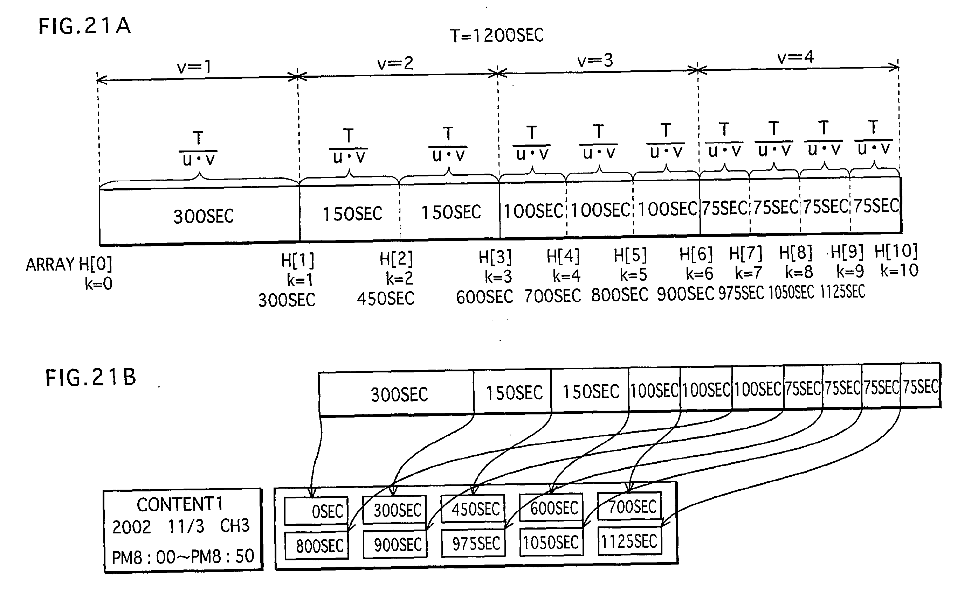

This processing shown in FIG. 20 is explained in greater detail below, using a specific example shown in FIG. 21A. FIG. 21A shows how array elements H[0], H[1], H[2], H[3], ... are determined when $T$ and $u$ are given specific values. Suppose T, which is the time length from the start time of the first playback operation to the stop time of the $y$th playback operation, is 1200sec. Also suppose the upper limit to the number of displayable thumbnails in one program navigation area is ten. Then step S81 is performed to calculate $u=4$ that satisfies $10=1+2+3+4$. After this, steps S86-S91 are performed.

When $v=1$, $w$ whose upper limit is $v$ takes the value of $1$. Accordingly, the loop is performed once, as a result of which array element H[1] is determined. Since array element H[0] is 0sec and $T/(u \cdot 1)$ is 300sec(=1200/4), array element H[1] is set at 300sec(=300+0).

When $v=2$, $w$ takes the values of $1$ and $2$. Accordingly, the loop is performed twice, as a result of which array elements H[2] and H[3] are determined. Since array element H[1] is 300sec and $T/(u-2)$ is 150sec(=1200/(4·2)), array element H[2] is set at 450sec(=300+150). Since array element H[2] is 450sec and $T/(u·2)$ is 150sec(=1200/4 ·2), array element H[3] is set at 600sec(=450+150). When $v=3$, $w$ takes the values of 1, 2, and 3. Accordingly, the loop is performed three times, as a result of which array elements H[4], H[5], and H[6] are determined. Since array element H[3] is 600sec and $T/(u·3)$ is 100sec(=1200/(4·3)), array element H[4] is set at 700sec(=600+100). Since array element H[4] is 700sec and $T/(u·3)$ is 100sec(=1200/(4·3)), array element H[5] is set at 800sec (=700+100).

The same process is repeated until all array elements are determined. FIG. 21B shows thumbnails which are placed in the program navigation area when array elements H[0], H[1], H[2], H[3], ... are determined as shown in FIG. 21A.

According to this embodiment, more thumbnails are used for the latter part of the viewed part of video content. This helps the user recall the contents of the viewed part more clearly.

In this embodiment, more thumbnails are used near the playback stop time than near the playback start time. In contrast, more thumbnails may be used near the playback start time than near the playback stop time.

This embodiment is based on the first modification to the first embodiment where N pieces of picture data are chosen from the viewed part and thumbnails of these pieces of picture data are placed in the thumbnail area. The reason for using the first modification to the first embodiment as a basis is to make it clear that more thumbnails are used near the playback stop time than near the playback start time. However, the third embodiment may equally be based on the first embodiment where ratio $\alpha$ of the viewed part to the whole video content is calculated, $\alpha·N$ pieces of picture data are chosen from the viewed part, and thumbnails of these pieces of picture data are placed in the thumbnail area.

Also, it should be noted that the above method of setting $\Delta t$ is merely one example. Other methods can be equally used so long as more thumbnails are used near the playback stop time than near the playback start time.

One example of such methods is given below. First, $u$ that satisfies $N=1+2+3+4+5+...+u$ is calculated for $N$ which is the upper limit to the number of displayable thumbnails in one program navigation area. Then the array elements are determined using time intervals $T·(u/N), ... , T·(4/N), T·(3/N), T·(2/N), T·(1/N)$. Which is to say, the array elements are determined such that:

$$H[1] \leftarrow H[0]+T \cdot (u/N)$$

$$H[2] \leftarrow H[1]+T \cdot ((u-1)/N)$$

$$H[3] \leftarrow H[2]+T \cdot ((u-2)/N)$$

$$H[4] \leftarrow H[3]+T \cdot ((u-3)/N)$$

$$H[5] \leftarrow H[4]+T \cdot ((u-4)/N)$$

With this method too, more thumbnails are used near the playback stop time than near the playback start time.

(Fourth Embodiment)

The first embodiment is based on the assumption that video content is played from the beginning, and therefore the viewed part of the video content is basically one continuous sequence. However, when playing video content recorded on the DVD 100, the user often views only the desired part while fast-forwarding commercials and unwanted part (the fast forward referred to in this embodiment includes double-speed playback that can adjust speeds by jog dialing or the like).

Accordingly, the playback controlling unit 13 in the fourth embodiment uses a different way of expressing a playback history. In the first embodiment, a start time of a playback operation on video content is either the beginning of the video content or the point when the playback of the video content is resumed. Even when fast forward is performed during the playback operation, such fast forward is not taken into consideration in the playback history. In the fourth embodiment, on the other hand, if normal playback is switched to fast forward during the playback operation, the point at which the fast forward starts is set as a stop time. Also, if fast forward is switched back to normal playback, the point at which the normal playback restarts is set as a start time. In doing so, only the part of the video content on which normal playback is performed is recorded in the playback history, while excluding the part of the video content on which fast forward is performed.

Since only the part on which normal playback is performed is included in the playback history, no pieces of picture data are chosen from the part on which fast forward is performed and therefore no thumbnails of the fast-forwarded part are displayed on the GUI screen. As a result, even if the user has viewed the video content while skipping some parts, the user can be presented with the details of the viewed part.

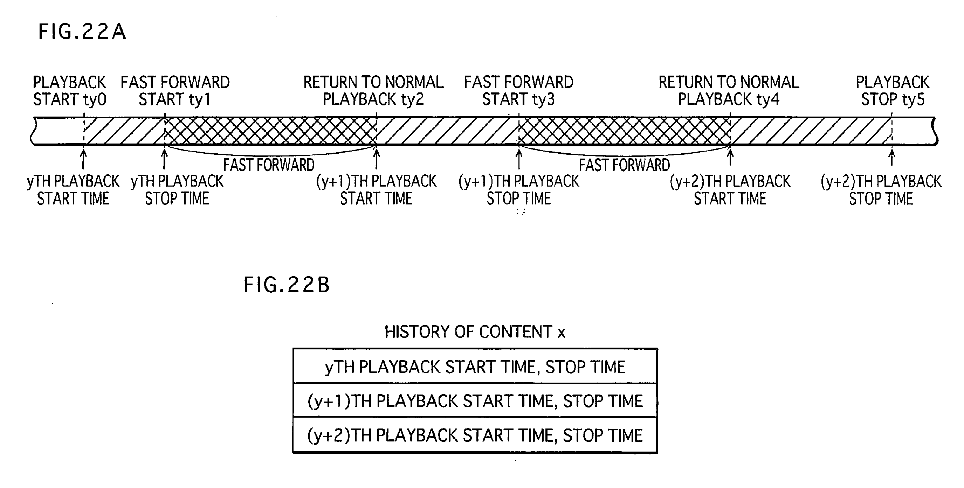

FIG. 22A shows how a playback history is expressed when a point of switching from normal playback to fast forward is set as a stop time and a point of switching from fast forward back to normal playback is set as a start time. In the drawing, fast forward start ty1 and normal playback return ty2 and then fast forward start ty3 and normal playback return ty4 are conducted between playback start ty0 and playback stop ty5. In such a case, ty1 where fast forward starts is the stop time of the $y$th playback operation, and ty2 where normal playback resumes is the start time of the $(y+1)$th playback operation. Also, ty3 where fast forward starts is the stop time of the $(y+1)$th playback operation, and ty4 where normal playback resumes is the start time of the $(y+2)$th playback operation. Lastly, ty5 where the playback of video content x stops is the stop time of the $(y+2)$th playback operation. FIG. 22B shows an example of playback history stored in the work area 14 when the playback shown in FIG. 22A has been conducted.

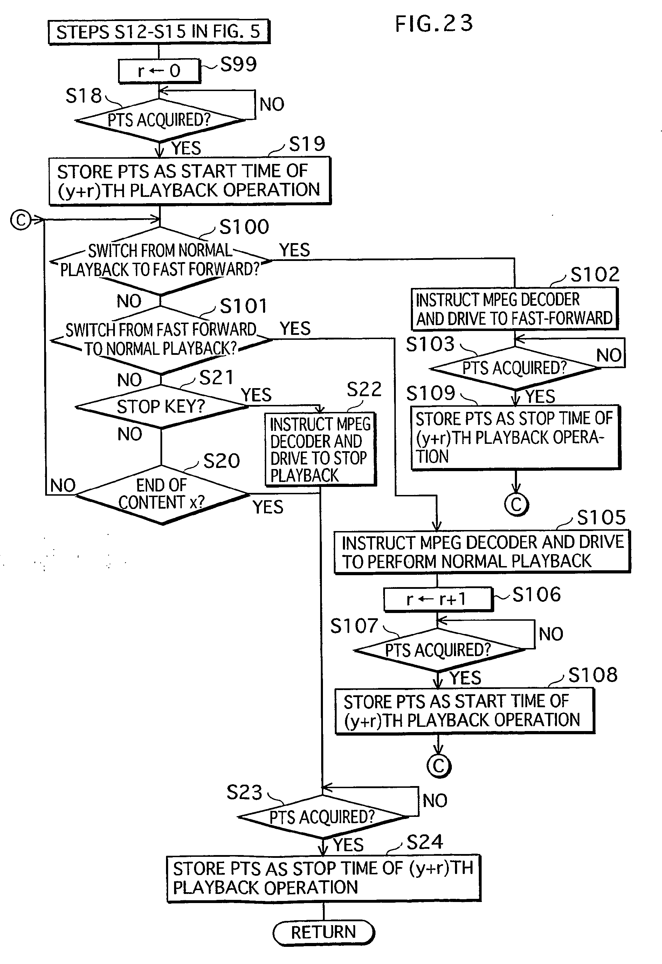

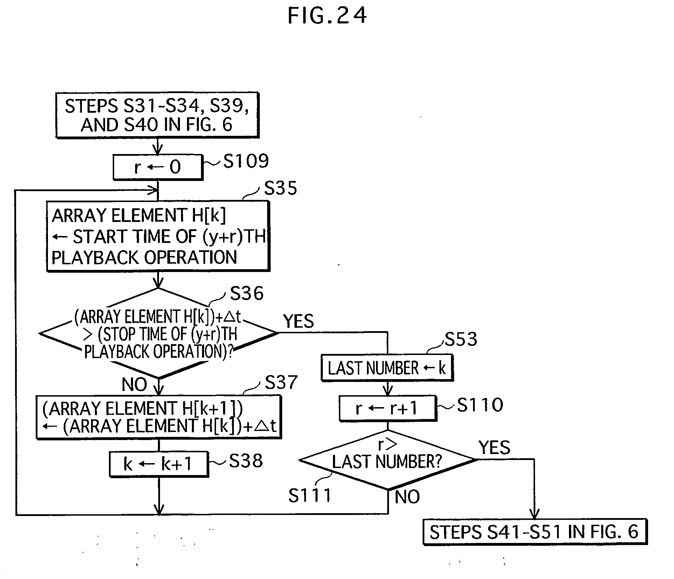

FIG. 23 is a flowchart of processing performed by the playback controlling unit 13 in the fourth embodiment. FIG. 24 is a flowchart of processing performed by the GUI updating unit 15 in the fourth embodiment. FIGS. 23 and 24 correspond to FIGS. 5 and 6 in the first embodiment, respectively.

The processing shown in FIG. 23 comes after steps S12-S15 shown in FIG. 5. The difference from FIG. 5 lies in that the number of playback operations of video content x is expressed by y+r. Variable r corresponds to the number such as "1" or "2" of the playback operation number "y+1" or "y+2" shown in FIG. 22A.

FIG. 23 is explained first. The playback controlling unit 13 sets variable r to 0 (S99). After this, the playback controlling unit 13 acquires a PTS (S18), and stores the PTS in the work area 14 as the start time of the $(y+r)$th playback operation (S19). Then a loop of steps S100-S101 and S21-S20 is performed. Here, if normal playback is switched to fast forward, the judgement "YES" is given in step S100. Accordingly, the playback controlling unit 13 instructs the MPEG decoder 4 and the DVD drive 1 to fast-forward (S102). The playback controlling unit 13 then acquires a PTS (S103), and stores the PTS in the work area 14 as the stop time of the $(y+r)$th playback operation (S109).

If fast forward is switched back to normal playback, the judgement "YES" is given in step S101. Accordingly, the playback controlling unit 13 instructs the MPEG decoder 4 and the DVD drive 1 to perform normal playback (S105). The playback controlling unit 13 then increments variable $r$ by $1$ (S106). After this, the playback controlling unit 13 acquires a PTS (S107), and stores the PTS in the work area 14 as the start time of the $(y+r)$th playback operation (S108).

When the playback of video content x is stopped or when video content x ends, the same process as in FIG. 5 is carried out. Which is to say, the playback controlling unit 13 acquires a PTS (S23), and stores the PTS in the work area 14 as the stop time of the $(y+r)$th playback operation (S24). The processing then returns to the main routine of FIG. 4A.

FIG. 24 is explained next. After steps S31-S34 and S39-S40 shown in FIG. 6, the GUI updating unit 15 resets variable r to 0 (S109). The GUI updating unit 15 then stores the start time of the $(y+r)$th playback operation in array element H[k] (S35). After this, if the sum of array element H[k] and $\Delta t$ does not exceed the stop time of the $(y+r)$th playback operation (S36:NO), the sum of array element H[k] and $\Delta t$ is stored in array element H[k+1] (S37), and variable $k$ is incremented by 1 (S38).

If the sum of array element H[k] and $\Delta t$ exceeds the stop time of the $(y+r)$th playback operation (S36:YES), the GUI updating unit 15 increments variable r by 1 (S110). The GUI updating unit 15 then judges whether variable r exceeds the last number (S111). If variable r does not exceed the last number (S111:NO), the GUI updating unit 15 returns to step S35.

As a result, each pair of start time and stop time specified by variable $r$ are processed. Following this, the GUI updating unit 15 advances to steps S41-S51 shown in FIG. 6.

According to this embodiment, when the user views video content while skipping some parts by fast-forwarding, thumbnails of only the viewed parts and not of the skipped parts are displayed on the GUI screen.

In this embodiment, a point where normal playback is switched to fast forward is set as a playback stop time and a point where fast forward is switched back to normal playback is set as a playback start time. As an alternative, a point where normal playback is switched to special playback and a point where special playback is switched back to normal playback may respectively be set as a playback stop time and a playback start time. Special playback includes not only fast forward but also rewind, pause, and chapter jump. For instance, a point where normal playback is switched to rewind and a point where rewind is switched back to normal playback may be set as a playback stop time and a playback start time respectively. Also, a point where normal playback is switched to special playback such as pause or chapter jump and a point where special playback is switched back to normal playback may be set as a playback stop time and a playback start time respectively.

(Fifth Embodiment)

The fifth embodiment relates to when the present invention is applied to a streaming delivery system of video content. In the first embodiment, the playback apparatus is owned by the user, and plays video content recorded on a recording medium. On the other hand, video content delivered in a streaming delivery system is not recorded on a recording medium of a playback apparatus owned by the user.

FIG. 25 shows a construction of a streaming delivery system to which the fifth embodiment relates. In the drawing, the streaming delivery system is roughly made up of a client apparatus 21 and a server apparatus 22 which are connected via a network 20. The above function of the playback apparatus is divided into the client apparatus 21 and the server apparatus 22.

The client apparatus 21 is equipped with the MPEG decoder 4 of the playback apparatus. Since video content itself is recorded in a recording medium of the server apparatus 22, the client apparatus 21 sends a playback request to the server apparatus 22 via the network 20 and plays back video content received from the server apparatus 22. When performing the playback operation, the client apparatus 21 sends the start time and stop time of the playback operation to the server apparatus 22 via the network 20.

The server apparatus 22 has a function similar to the playback apparatus that is equipped with the DVD drive 1, the microcomputer system 11, and the work area 14. The difference with the playback apparatus lies in that a request to play video content is sent from the user of the client apparatus 21 via the network 20 and the requested video content is sent to the client apparatus 21 in compressed form without being played by the server apparatus 22 itself. Since the server apparatus 22 does not perform playback operations, the server apparatus 22 cannot combine GUI data by OSD with a video signal as in the first embodiment. Instead, the server apparatus 22 generates a page having the same contents as the GUI screen of the first embodiment, and sends it to the client apparatus 21.

As shown in FIG. 25, the server apparatus 22 includes a content storage 23, a database 24, an authenticating unit 25, a page retaining unit 26, a page generating unit 27, a downloading unit 28, and a page updating unit 29.

The content storage 23 is a recording medium corresponding to the DVD 100 of the first embodiment, and stores a plurality of sets of video content.

The database 24 stores user management information for each individual user. In more detail, personal information of each individual user such as a name, birthday, telephone number, and mail address is stored together with a user ID of the user, a video content ID of video content which the user has requested viewing, and playback start time and stop time of the video content.

The authenticating unit 25 performs two types of authentication that are user authentication and video content authentication. User authentication is a process of requesting a user who has requested viewing to send a user ID, and comparing the received user ID with a user ID included in the user management information. Video content authentication is a process of requesting a user who has requested viewing to send a video content ID and comparing the received video content ID with a video content ID included in the user management information. Video content authentication is conducted because of the need of the content deliverer side to confirm whether the user certainly paid for the video content he or she has requested. The video content is sent to the user only when these two authentication processes are successful.

The page retaining unit 26 corresponds to the work area 14 in the first embodiment, and stores page data that has the same contents as the GUI screen by OSD.

The page generating unit 27 corresponds to the GUI generating unit 12 in the first embodiment. The page generating unit 27 inquires the user whether program navigation is needed. If the user requests program navigation, the page generating unit 27 generates a program navigation page which has the same contents as the GUI screen of the first embodiment, and stores it in the page retaining unit 26. The navigation page is then sent to the user. The user can designate video content to be played back, on this navigation page.

The downloading unit 28 corresponds to the GUI generating unit 12 in the first embodiment. The downloading unit 28 sends the video content which the user has designated on the navigation page, to the client apparatus 21. The downloading unit 28 then waits for receiving playback start time and stop time from the client apparatus 21. Upon receiving the playback start time and stop time, the downloading unit 28 stores them in the database 24.

The page updating unit 29 corresponds to the GUI updating unit 15 and the thumbnail generating unit 16 in the first embodiment. The page updating unit 29 chooses pieces of picture data from a part of the video content between the playback start time and stop time notified by the user, and places thumbnails of these pieces of picture data on the navigation page stored in the page retaining unit 26 to update the navigation page. The updated page is then sent to the user.

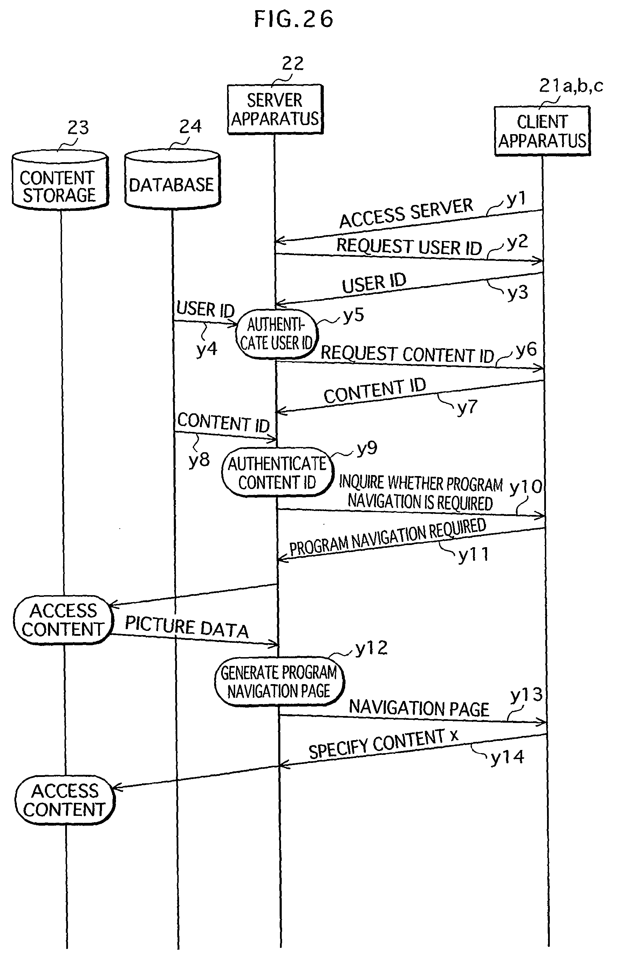

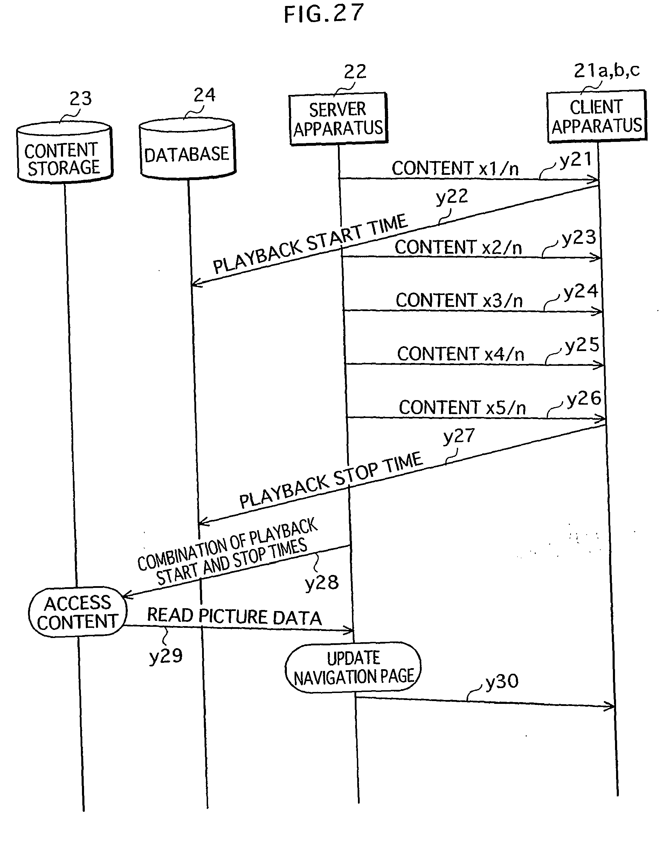

FIGS. 26 and 27 are sequence charts of processing performed in the streaming delivery system of the fifth embodiment. Among the construction elements of the server apparatus 22 shown in FIG. 25, the content storage 23 and the database 24 are separately shown from the other construction elements (the authenticating unit 25, the page generating unit 27, the downloading unit 28, and the page updating unit 29). These other construction elements are put together as the server apparatus 22.

The client apparatus 21 accesses the server apparatus 22 (y1). The authenticating unit 25 requests the client apparatus 21 to send a user ID (y2). The client apparatus 21 accordingly sends the user ID (y3). The authenticating unit 25 reads a user ID stored in the database 24 (y4), and compares the received user ID with the read user ID (y5).

If they match, the authenticating unit 25 requests the client apparatus 21 to send a video content ID (y6). The client apparatus 21 accordingly sends the video content ID (y7). The authenticating unit 25 reads a video content ID stored in the database 24 (y8), and compares the received video content ID with the read video content ID (y9), to authenticate the user.

Once the validity of the user has been successfully verified through these two authentication processes, the page generating unit 27 inquires the client apparatus 21 as to whether a navigation page is necessary (y10). If the client apparatus 21 requests a navigation page (y11), the page generating unit 27 generates a navigation page with thumbnails (y12), and sends the page to the client apparatus 21 (y13). When video content x is selected on this page, the selection is notified to the server apparatus 22 (y14).

The downloading unit 28 reads video content x from the content storage 23, and sends it to the client apparatus 21. Suppose video content x is made up of a plurality of portions 1/n, 2/n, 3/n, 4/n, and 5/n. This being so, the downloading unit 28 sends video content 1/n to the client apparatus 21 (y21). In response, the client apparatus 21 notifies the server apparatus 22 of a playback start time (y22). The downloading unit 28 stores the playback start time in the database 24. The downloading unit 28 then sequentially sends video content 2/n, 3/n, 4/n, and 5/n (y23, y24, y25, and y26). Suppose the client apparatus 21 stops the playback operation when video content 5/n is sent to the client apparatus 21. The client apparatus 21 notifies the server apparatus 22 of a playback stop time. The downloading unit 28 stores the playback stop time in the database 24 (y27). The page updating unit 29 accesses the content storage 23 (y28) and chooses pieces of picture data from part of video content x between the playback start time and stop time (y29). The page updating unit 29 updates the navigation page by placing thumbnails of these pieces of picture data. The updated page is then sent to the client apparatus 21 (y30). From this page, the user can recall the contents of the viewed part.

According to this embodiment, the server apparatus generates a navigation page on which a plurality of thumbnails are placed. Accordingly, even if video content is not recorded on a recording medium which can be handled by a playback apparatus but is managed by a delivery server, the user can easily recall up to which episode he or she has previously viewed or what the psychological states and actions of the characters in that episode were, as in the first embodiment. Hence the user can concentrate on further viewing.

(Sixth Embodiment)

The first to fourth embodiments describe the case where video content is composed only of a VOB. The sixth embodiment relates to a technique of displaying thumbnails as in the first to fourth embodiments, in consideration of management information which is also included in the video content. The management information referred to here conforms to the DVD-Video Recording standard. In this embodiment, management information for a plurality of sets of video content are stored in a single file called a management file and recorded on the DVD 100.

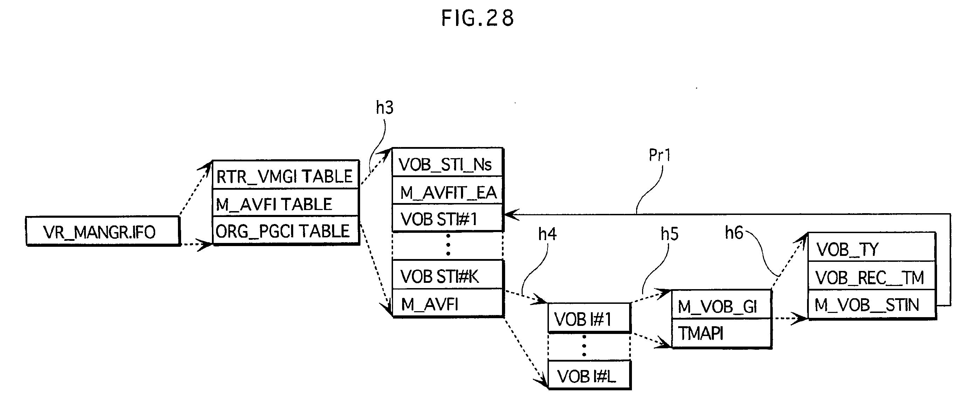

FIG. 28 shows an inner structure of the management file VR_MANGR.IFO (Video Recording Manager Information). As illustrated, VR_MANGR.IFO includes an RTR_VMGI table (RTR_VMGIT), an M_AVFI table (M_AVFIT), and an ORG_PGCI table (ORG_PGCIT).

The M_AVFI (Motion AV File Information) table is a management table for VOBs. As indicated by guidelines h3 drawn using broken lines, the M_AVFI table includes VOB_STI_Ns, M_AVFIT_EA, VOB STI#1 to #K, and M_AVFI. VOB_STI_Ns shows the number of VOB_STI included in this M_AVFIT. M_AVFIT_EA (Effective Address) shows the effective length of this M_AVFIT. VOB STI#1 to #K (Stream Information) are each attribute information for the VOBs. VOB STI shows a video attribute of picture data in the VOBs (e.g. coding mode, aspect ratio, NTSC/PAL, line 21 information) and an audio attribute of audio data in the VOBs (e.g. coding mode, channel number, frequency).

M_AVFI (Motion AV File Information) is made up of VOBI#1 to #L, as indicated by guidelines h4. VOBI (Video Object Information) is playback control information unique to an individual VOB. As indicated by guidelines h5, VOBI is made up of M_VOB_GI (General Information) and TMAPI (Time Map Information). TMAPI is time map information for VOBUs that constitute the VOB. M_VOB_GI includes VOB_TY, VOB_REC_TM, and M_VOB_STIN, as indicated by guidelines h6. VOB_TY shows the type of the VOB. VOB_REC_TM (VOB Recording Time) shows the date and time when the first picture data of the VOB was recorded. M_VOB_STIN (Stream Information Number) designates one of VOB STI#1 to #K which corresponds to the VOB, as shown by arrow Pr1.

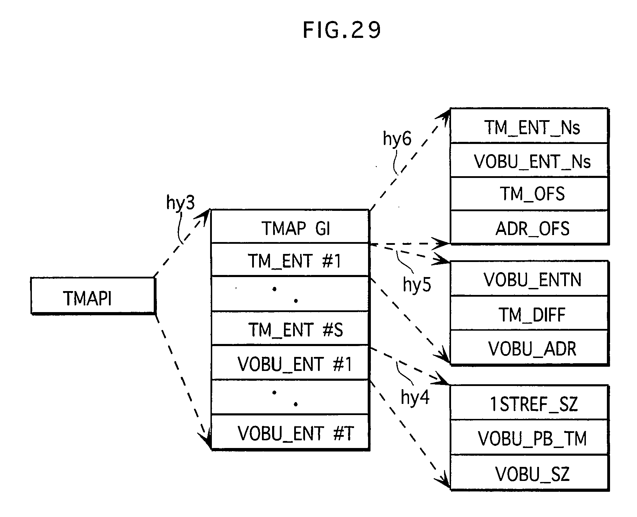

The following explains about TMAPI. TMAPI is a table that associates the addresses of the VOBUs with playback times. FIG. 29 shows a structure of TMAPI. As indicated by guidelines hy3, TMAPI includes TMAP_GI (General Information), TM_ENT#1 to #S (Time Entry), and VOBU_ENT#1 to #T (VOBU Entry).

VOBU_ENT is information corresponding to each VOBU. As indicated by guidelines hy4, VOBU_ENT includes 1STREF_SZ, VOBU_PB_TM, and VOBU_SZ. ISTREF_SZ (1st Reference Size) shows the size of an I picture which is located at the beginning of the VOBU. VOBU_PB_TM (VOBU Playback Time) shows the playback duration of the VOBU in units of 0.4-1.0sec. VOBU_SZ (VOBU Size) shows the size of the VOBU. Since the variable-length coding compression technique is used, the size and playback duration of each VOBU varies. Even so, with reference to VOBU_ENT, it is possible to locate picture data in a VOBU that corresponds to a given playback time.

TM_ENT is information showing the location of a time entry which appears with intervals of 10sec. As indicated by guidelines hy5, TM_ENT includes VOBU_ENTN, TM_DIFF, and VOBU_ADR. VOBU_ENTN shows a VOBU that includes the time entry. TM_DIFF shows an offset from the beginning of the VOBU shown by VOBU_ENTN to the time entry. VOBU_ADR shows an offset from the beginning of the VOB to the beginning of the VOBU. With reference to this TM_ENT, it is possible to locate picture data with long time intervals such as 10sec, at high speed.

TMAP_GI (Time Map General Information) is information for managing overall TMAPI. As indicated by guidelines hy6, TMAP_GI includes TM_ENT_Ns, VOBU_ENT_Ns, TM_OFS, and ADR_OFS. TM_ENT_Ns shows the number of time entries which are provided in the VOB. VOBU_ENT_Ns shows the number of VOBU_ENT in TMAPI. TM_OFS shows an offset from the beginning of the VOB to a time entry. ADR_OFS shows an offset from the beginning of VR_MOVIE.VRO to the beginning of the VOB.

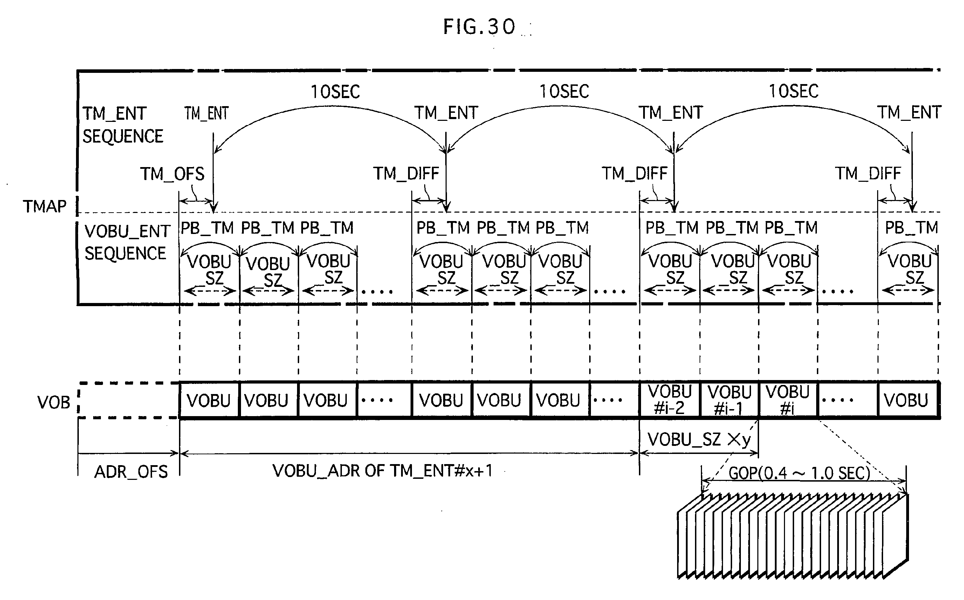

FIG. 30 is a representation of the relationship between TMAPI and VOBUs. The correspondence between the playback duration and size of each VOBU is shown by a combination of VOBU_PB_TM ("PB_TM" in FIG. 30) and VOBU_SZ. Also, TM_DIFF in TM_ENT shows how many seconds it takes from the beginning of a VOBU to a time entry. With the provision of such TMAPI, it is possible to specify a VOBU that corresponds to a given time code.

The thumbnail generating unit 16 uses this TMAPI to specify a piece of picture data corresponding to elapsed time stored in array element H[k].

A piece of picture data corresponding to array element H[k] can be found from the beginning of a VOB, in the following way. First, $x$, $y$, and $z$ that satisfy Equation 4 are calculated in FIG. 30.

$$H[k]=10sec\times x-(TM\_DIFF\ of\ TM\_ENT\#x+1)+TM\_OFS$$
$$+\textstyle\sum VOBU\_PB\_TM+z$$

(where $\sum VOBU\_PB\_TM$ is the sum total of the first VOBU_PB_TM to the $y$th VOBU_PB_TM)

·····(Equation 4)

Then x and $y$ are assigned to Equation 5, to find an address of VOBU#i to which the piece of picture data corresponding to array element H[k] belongs.

$$(address\ of\ VOBU\#i)=ADR\_OFS+(VOBU\_ADR\ of$$
$$TM\_ENT\#x+1)+\textstyle\sum VOBU\_SZ$$

(where $\sum VOBU\_SZ$ is the sum total of the first VOBU_SZ to the $y$th VOBU_SZ)

·····(Equation 5)

The thumbnail generating unit 16 has the DVD drive 1 read VOBU#i from the DVD 100 at the found address, and has the MPEG decoder 4 decode VOBU#i. While VOBU#i is being decoded, a piece of picture data that appears when time z has elapsed from the playback start time of VOBU#i is the piece of picture data corresponding to array element H[k]. Once this piece of picture data has been stored in the frame memories 8a-8c, the thumbnail generating unit 16 reduces the piece of picture data to obtain a thumbnail. The thumbnail generating unit 16 then places the thumbnail on the GUI screen. This is the processing of the thumbnail generating unit 16 in the sixth embodiment.

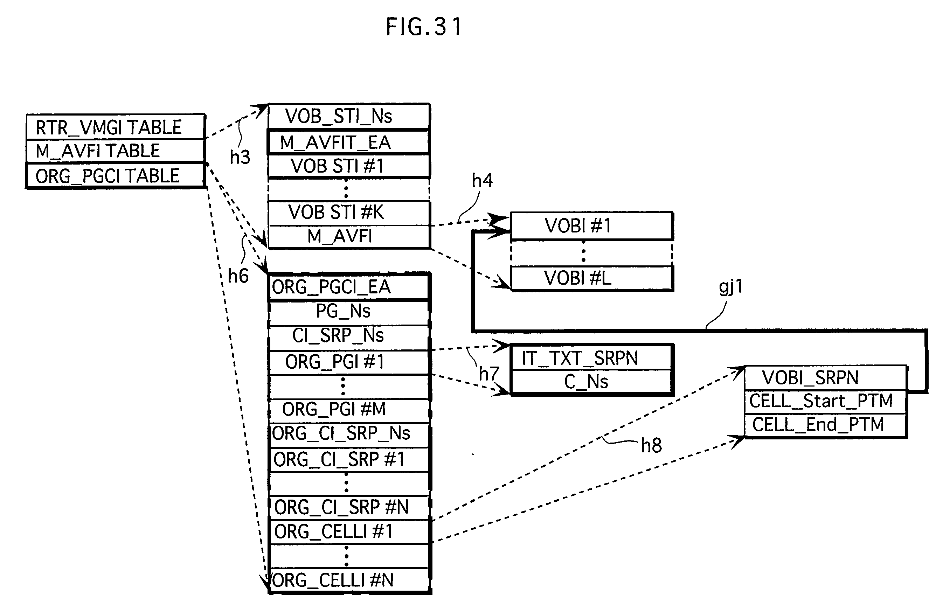

The remaining tables in VR_MANGR.IFO are explained by referring to FIG. 31. FIG. 31 shows an inner structure of the ORG_PGCI table, in addition to the inner structure of the M_AVFI table.

The ORG_PGCI (Original Program Chain Information) table is a table for exercising management so that the plurality of VOBs recorded on the DVD 100 can be handled as if they were a single video tape. In more detail, the ORG_PGCI table serially arranges the plurality of VOBs recorded on the DVD 100 to form a playback path called an original program chain. This allows the user to treat the DVD 100 on which the plurality of VOBs are recorded just like a single video tape. In this embodiment, the plurality of VOBs are arranged so that those with earlier recording dates and times come first, with reference to VOB_REC_TM in VOBI. The relationship between ORG_PGCI and VOBs is as follows. VOBs have a logical hierarchy of "PG-cell-VOB". This being so, ORG_PGCI is the outcome of connecting PGs (programs) of the highest level into a single string. A PG in the logical hierarchy "PG-cell-VOB" is equivalent to video content described in the first to fourth embodiments.

The ORG_PGCI table is designed to realize the logical hierarchy "PG-cell-VOB". In FIG. 31, the ORG_PGCI table includes ORG_PGCI_EA, PG_Ns, CI_SRP_Ns, ORG_PGI#1 to #M, ORG_CI_SRP_Ns, ORG_CI_SRP#1 to #N, and ORG_CELLI#1 to #N, as indicated by guidelines h6. ORG_PGCI_EA (Effective Address) shows the effective length of the ORG_PGCI table. PG_Ns shows how many PGs are connected into the ORG_PGC. CI_SRP_Ns shows the number of search pointers for CELLI (CI). ORG_PGI#1 to #M are each information for a PG included in the ORG_PGC. ORG_CI_SRP#1 to #N are each a search pointer for CELLI.

ORG_CELLI is information for specifying a logical playback segment using a combination of time codes. As indicated by guidelines h8, ORG_CELLI includes VOBI_SRPN, CELL_Start_PTM, and CELL_End_PTM. VOBI_SRPN is a pointer designating VOBI in M_AVFIT that corresponds to this CELLI, as shown by arrow gj1. CELL_Start_PTM and CELL_End_PTM are a combination of time codes for designating a playback segment (cell) in the VOB.

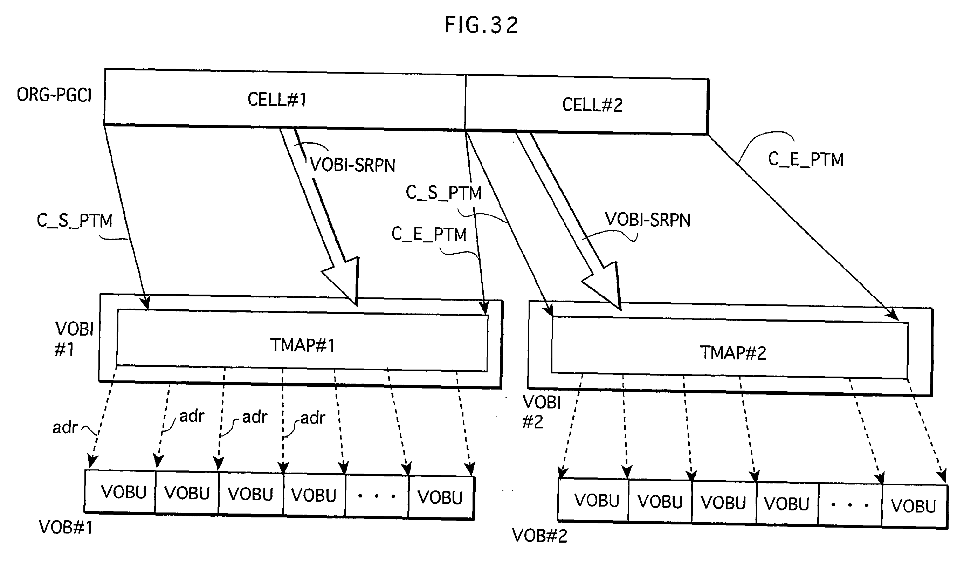

FIG. 32 shows the relationship between cells and VOBs in ORG_PGCI. In the drawing, VOBI_SRPN shows VOBI that corresponds to each cell. CELL_Start_PTM ("C_S_PTM" in FIG. 32) and CELL_End_PTM ("C_E_PTM") in each cell are converted to two addresses of VOBUs through TMAPI, as a result of which a segment in a VOB is specified as the cell.

In FIG. 31, ORG_PGI (Original Program Information) includes IT_TXT_SRPN and C_Ns, as indicated by guidelines h7. IT_TXT_SRPN specifies text data in TXTDT_MG that corresponds to this PG. C_Ns shows the number of cells included in the PG.

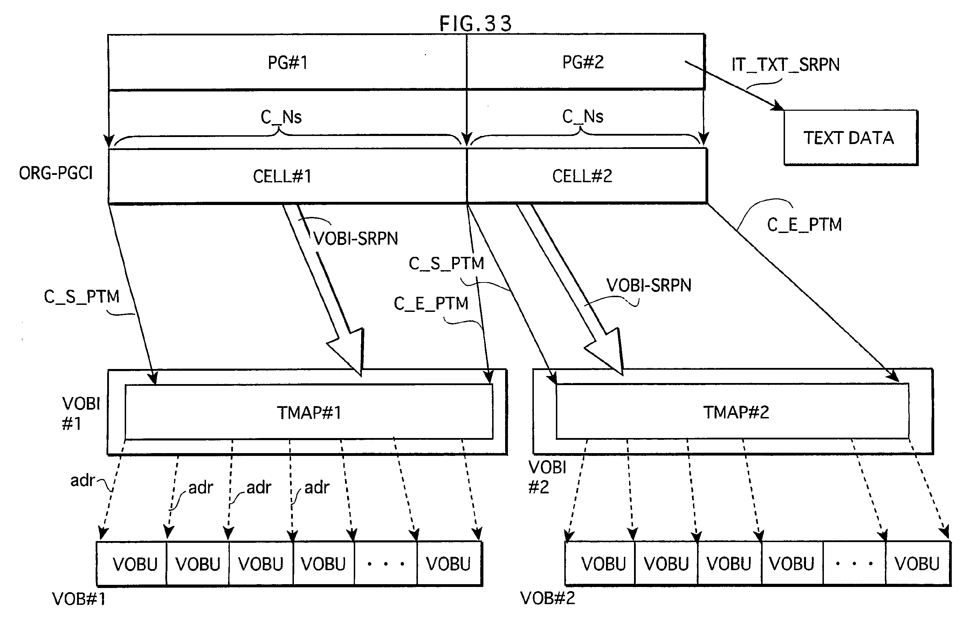

FIG. 33 shows how the cells shown in FIG. 32 are grouped in PGs. As illustrated, it is clear from C_Ns in PGI which of cell#1 to #2 in ORG_PGCI is included in PG#1 and which is included in PG#2. Furthermore, IT_TXT_SRPN in each PG shows text data corresponding to the PG.

Thus, video content has the logical hierarchy "PG-cell-VOB". The reason that video content has such a hierarchy is to facilitate editing on the video content.

Suppose video content 1 and video content 2 are each a PG that has the logical hierarchy "PG-cell-VOB". The following explains how the hierarchy of each of video content 1 and video content 2 changes when partial deletes are performed on VOBs of these video content.

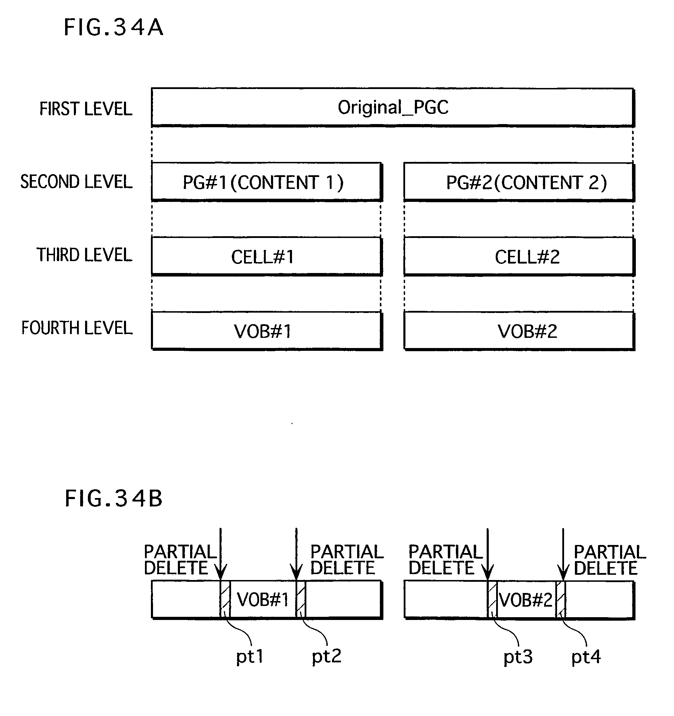

FIG. 34 shows how parts of VOBs are designated when partial deletes are performed. As shown in the fourth level in FIG. 34A, video content 1 and video content 2 are recorded on the DVD 100 as VOB#1 and VOB#2. These VOBs are managed as cells in the third level. These VOBs are also managed as PGs in the second level. These two PGs are combined to form an ORG_PGC in the first level.

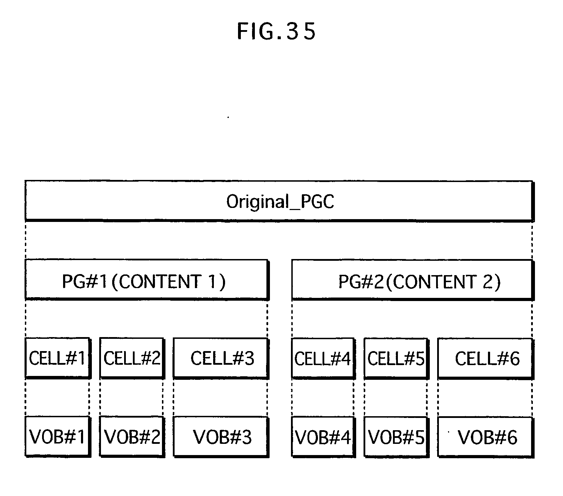

Suppose, after the VOBs, cells, and PGs of video content 1 and video content 2 are recorded on the DVD 100, parts pt1 and pt2 of VOB#1 and parts pt3 and pt4 of VOB#2 are designated as partial delete areas, as shown in FIG. 34B. When these parts are deleted, old VOB#1 is divided into three VOBs that are new VOB#1, VOB#2, and VOB#3 before and after parts pt1 and pt2, as shown in FIG. 35. Likewise, old VOB#2 is divided into three VOBs that are new VOB#4, VOB#5, and VOB#6. As a result, old cell#1 is divided into three cells that are new cell#1, cell#2, and cell#3, and old cell#2 is divided into three cells that are new cell#4, cell#5, and cell#6. However, three cells that have been generated as a result of partial deletes remain to be included in the same PG as the original cell. In other words, before the partial deletes, video content 1 is managed as PG#1 that includes one cell and one VOB. After the partial deletes, video content 1 is managed as PG#1 that includes three cells and three VOBs. Likewise, before the partial deletes, video content 2 is managed as PG#2 that includes one cell and one VOB. After the partial deletes, video content 2 is managed as PG#2 that includes three cells and three VOBs.

Thus, the identity of video content is unchanged before and after partial deletion. Accordingly, if video content is a PG, management can be conducted easily when editing operations such as partial deletion are performed.

If partial deletion is performed, the playback apparatus updates the GUI screen in the same way as above. In detail, the playback apparatus detects a part of a PG after the partial deletion that corresponds to a start time and stop time of a playback operation, and chooses pieces of picture data with intervals of $\Delta t$ from the part of the PG. The playback apparatus generates thumbnails of these pieces of picture data, and places the thumbnails on a program navigation area of the PG to update the GUI screen. This prevents thumbnails of part of video content which was deleted by partial deletion, to be displayed on the GUI screen.

According to this embodiment, the processing of the first to fourth embodiments is performed on video content that is recorded according to the DVD-Video Recording standard. This enables playback control for DVD-RAM or DVD-RW on which video content is recorded according to the DVD-Video Recording standard, to be exercised favorably.

This embodiment describes the case where video content is a PG, but other playback units may instead be used as long as they have a hierarchy similar to a PG. For example, Playlist defined by the DVD-Video Recording standard may be used (Playlist has a hierarchy of "VOB-VOBI-cell"). VideoTitle defined by the DVD-Video standard may equally be used (VideoTitle has a hierarchy of "VOB-cell-PGC").

(Modifications to the First to Sixth Embodiments)

The present invention has been described by way of the above embodiments, though these embodiments are mere examples of systems that are presently expected to operate favorably. It should be obvious that various modifications can be made without departing from the technical scope of this invention. Examples of such modifications are given below.

(A) The first to sixth embodiments can be modified so as to receive a selection of a thumbnail in a thumbnail area of a program navigation area from the user and start playing video content from a position corresponding to the thumbnail. In such a case, each thumbnail has the three states of normal, focus, and active just like a program navigation area. This being so, the user operates the arrow keys on the remote control to change some thumbnail from the normal state to the focus state. The user then presses the ENTER key on the remote control to set the thumbnail in the active state. When this happens, the playback controlling unit 13 locates a piece of picture data of video content corresponding to the selected thumbnail, and starts playback from that piece of picture data.

(B) The first to sixth embodiments describe the case where a playback history of a playback operation is expressed by a combination of start time and stop time. As an alternative, the playback history may be expressed using logical addresses (LSN: logical sector number) on the DVD or relative addresses in files. Also, though the start time and the stop time are indicated by PTSs in the above embodiments, they may instead be indicated by times shown by a timer. Also, the start time and the stop time may be indicated using time stamps other than PTS.

(C) The first to fourth embodiments and the sixth embodiment may be modified so that the playback apparatus has a home server function. Such a playback apparatus is equipped with an MPEG encoder and a hard disk with a capacity of several tens of gigabytes, and can write a large amount of video content on the hard disk.

The first to fourth embodiments and the sixth embodiment describe the case where the playback apparatus is connected to the television 101 and put to use. However, the playback apparatus may be integrated with a liquid crystal display. Also, though the playback apparatus shown in the first embodiment includes devices from the DVD drive 1 to the MPEG decoder 4 , these devices may be separately provided and connected to the playback apparatus via an IEEE 1394 connector. Furthermore, the first to fourth embodiments and the sixth embodiment may be modified so that the playback apparatus is made up of only the microcomputer system 11 that performs main processing.

Since the playback apparatus of each of the above embodiments is an invention described in this specification, an act of manufacturing a playback apparatus based on the inner construction of the playback apparatus described in the embodiment is an act of working of the present invention. Also, any act of assigning for sale or for free, leasing, or importing the playback apparatus is an act of working of the present invention. Likewise, an act of offering for assignment or lease of the playback apparatus using storefront displays, catalogs, or brochures is an act of working of the present invention.

(D) Information processing using the programs shown in FIGS. 4-6, 15-18, 20, and 23-24 is actually realized by hardware resources such as a CPU, an MPEG decoder, and a DVD drive. Which is to say, the playback apparatus of each of the above embodiments is realized whereby specific means that is provided with software and hardware performs information processing in accordance with the intended use of placing a plurality of thumbnails on a GUI screen.

Given that the information processing by the programs is actually realized by the hardware resources, the programs shown in the above flowcharts can be regarded as a creation of technical ideas by which a law of nature is utilized. This means the programs themselves are an invention. In other words, the procedures shown in the above flowcharts represent an act of working of the programs of the present invention.

The first to fourth embodiments and the sixth embodiment describe the case where the programs are incorporated in the playback apparatus. However, the programs can be used independently of the playback apparatus. Acts of working of the programs include (1) an act of manufacturing, (2) an act of assigning for sale or for free, (3) an act of leasing, (4) an act of importing, (4) an act of providing to the public via a bi-directional electronic communication network, and (6) an act of offering for assignment or lease using storefront displays, catalogs, or brochures.

Examples of the act (5) include an act in which a provider sends a program to a user (program download service) and an act in which the provider provides only the function of the program to the user via the electronic communication network without sending the program itself (function provision ASP service).

(E) The time elements of the steps which are executed in a time series in each of the above flowcharts can be regarded as the necessary elements of the present invention. This being so, a playback method shown by each of these flowcharts is an invention. If the processing shown in each flowchart is carried out by performing the steps in a time series so as to achieve the intended use of placing a plurality of thumbnails on a GUI screen, this is an act of working of the playback method of the present invention.

(F) The first to fourth embodiments and the sixth embodiment describe an example where a DVD is used as a recording medium on which video content is recorded. However, the present invention is not limited to the use of this recording medium. The same effects can still be achieved even when other recording media which have a capacity of recording video content like a DVD are used. Examples of such recording media include: an optical disc such as a CD-R, a CD-RW, or a Blue-ray disc; a magneto-optical disc such as a PD or an MO; a semiconductor memory card such as an SD memory card, a CompactFlash card, a SmartMedia card, a Memory Stick card, a MultiMediaCard, or a PCMCIA card; a magnetic disk such as a flexible disk, SuperDisk, Zip, or Clik!; and a removable hard disk drive such as ORB, Jaz, SparQ, SyJet, EZFley, or Microdrive.

(G) In the first to fourth embodiments and the sixth embodiment, video content is described as being a VOB that is obtained by encoding an analog video signal broadcast by analog broadcasting. However, video content may instead be stream data formed by a transport stream broadcast by digital broadcasting.

Also, video content may be obtained by encoding an analog/digital video signal recorded on a video tape. Furthermore, video content may be obtained by encoding an analog/digital video signal acquired directly from a video camera. Alternatively, video content may be a digital work, such as a movie, that is distributed having been recorded on a recording medium or distributed via a delivery server.

Also, video content in the above embodiments may be a broadcast program unit specified by a broadcast station.

(H) The first embodiment describes the case where pieces of picture data are chosen with intervals of $\Delta t$. However, if a time length of a viewed part between a playback start time and a playback stop time is shorter than $\Delta t$, there may be no piece of picture data to be chosen from the viewed part. Suppose $\Delta t=300sec$ as in the case of FIGS. 8 and 9. If the viewed part is shorter than 300sec, there may be no piece of picture data to be chosen from the viewed part. In such a case, the GUI screen cannot be updated. To solve this problem, the first embodiment may be modified so as to definitely choose at least one piece of picture data from any viewed part. For example, a piece of picture data located at around a midpoint between the playback start time and the playback stop time may be chosen from the viewed part.

Also, the first embodiment describes the case where pieces of picture data are chosen with intervals of $\Delta t$ from a viewed part between a playback start time and a playback stop time. However, if a locating point such as a chapter or a mark exists in the viewed part, a thumbnail of a piece of picture data corresponding to the chapter or mark may be displayed.

(I) The first to sixth embodiments describe the case where a video stream and an audio stream are multiplexed in a VOB. However, a sub-picture stream in which subtitle characters are run-length compressed or other control information may be multiplexed, too. Also, while the MPEG decoder 4 uses a codec of the MPEG2 image decompression/decoding standard, codecs of other standards (e.g. MPEG1 or MPEG4) are also applicable.

(J) In the first to sixth embodiments, the arrangement of thumbnails may be modified so as to be more pleasing to the eye. For instance, a plurality of thumbnails may be arranged horizontally or vertically with a pattern that resembles a film of a movie. Alternatively, they may be arranged like panels of a comic book. Also, ornamental frames may be employed.

(K) The first to sixth embodiments describe an example where thumbnails are placed on a GUI screen, but a simple listing screen for listing a plurality of sets of video content may instead be used, as a wallpaper image or the like.

Also, though the playback apparatus generates the GUI screen made up of program navigation areas in the first to fourth embodiments and the sixth embodiment, page data written in a page description language such as HTML or BML is applicable too. Also, the first to fourth embodiments and the sixth embodiment describe the case where a user selection of video content is received via a remote control. However, the user selection may be received via a front panel of the playback apparatus, or via an input device such as a keyboard, a touch panel, a mouse and a pad, or a track ball. In the latter case, the user selection is made by clicking or dragging.

(L) In the first embodiment, the size of each program navigation area is fixed. As a result, some space is left in the thumbnail areas of some program navigation areas in the examples of FIGS. 8, 10, and 11. To eliminate such a space, each program navigation area may be varied in size, such that a program navigation area is small enough to contain only a thumbnail of the first picture data when video content has not been played, and is increased in size as the viewed part becomes longer.

In the case of FIG. 8, only video content 1 has been played whereas video content 2 and video content 3 have not been played at all. This being so, only one thumbnail of the first image need be displayed for each of video content 2 and video content 3. Accordingly, the thumbnail area in the program navigation area for each of these video content is made small to contain only one thumbnail. This produces some redundant area which should originally have been used for other nine thumbnails of each of video content 2 and 3. Such an area can now be used for video content 1 which has already been played.

Originally, the thumbnail area in the program navigation area of video content 1 has a capacity of ten thumbnails. However, through the use of the redundant area, the thumbnail area of video content 1 can be expanded to contain *28(=10+9+9)* thumbnails at the maximum. Since the upper limit to the number of displayable thumbnails is increased for video content 1, $\Delta t$ which is obtained by dividing the playback time length of video content 1 by the upper limit is 107sec(=3000sec/28). Hence pieces of picture data are chosen with intervals of 1 minute and 47 seconds (=107sec) and thumbnails of these pieces of picture data are placed in the program navigation area of video content 1. In this way, the contents of the viewed part can be presented using more thumbnails, with it being possible to help the user recall the viewed part more clearly.

On the other hand, consider the case of dividing the playback time length of the viewed part by the upper limit and using the result as $\Delta t$. In the example of FIG. *8, $\Delta t$=44sec(=1240sec/28).* Accordingly, pieces of picture data are chosen with intervals of 44sec and thumbnails of these pieces of picture data are placed in the program navigation area of video content 1. Thus, the contents of the viewed part can be presented using still more thumbnails.

(M) If each of video content 1, 2, and 3 has been played, the program navigation area of each of these video content can be varied in size according to the ratio of the viewed parts of video content 1, 2, and 3, to eliminate redundant space.

Suppose the viewed part of video content 1 is 1800sec, the viewed part of video content 2 is 2400sec, and the viewed part of video content 3 is 600sec. Then the ratio of their viewed parts is 3:4:1. The number of thumbnails to be placed in a program navigation area of each of these video content is determined according to this ratio. That is, the upper limit to the number of displayable thumbnails for video content 1 is *11≒11.25 (=(10+10+10)×3/(3+4+1))*, the upper limit for video content 2 is *15(=(10+10+10)×4/(3+4+1))*, and the upper limit for video content 3 is *3≒3.75 (= (10+10+10)×1/(3+4+1))*. Having set the upper limits as such, $\Delta t$ is calculated for each of these video content by dividing the playback time length of the video content by the upper limit, and pieces of picture data are chosen with intervals of $\Delta t$ and thumbnails of these pieces of picture data are placed in the corresponding program navigation area. By doing so, the contents of the viewed part can be presented using more thumbnails.

INDUSTRIAL APPLICABILITY

The playback apparatus of the present invention can be put to use in a home theater system or the like. This playback apparatus is manufactured in the consumer goods industry for consumer use and so provides industrial applicability. In particular, the playback apparatus helps the user recall the contents of video content recorded on a recording medium and thereby offers added values to the user. Thus, the present invention benefits the consumer goods industry.

**Claims**

1. A playback apparatus for playing back video content that includes a plurality of pieces of picture data, comprising:

   a displaying unit (101) operable to display a menu which lists a plurality of sets of video content;
   a playback unit (13) operable to select and play back one of the plurality of sets of video content from the menu by a user,

   **characterised by**
   a menu updating unit (15) being adapted to add history data to the said menu by selecting pieces of picture data from video scenes having been viewed by the user by having operated playback start and playback stop functions, the menu updating unit being further adapted to provide for thumbnails for selected pieces of picture data and adding those generated thumbnails to the respective sets of video contents in the menu, to keep a history of already viewed video scenes.

2. The playback apparatus of claim 1,

wherein if a thumbnail already exists in the menu, the updating unit (15) places the thumbnail adjacent to the already existing thumbnail.

3. The playback apparatus of claim 2,
wherein the playback by the playback unit is a pth playback operation performed on the set of video content, p being an integer no smaller than 2, and the already existing thumbnail is a thumbnail of a piece of picture data which is located between a playback start position and a playback stop position of a (p-1)th playback operation performed on the set of video content.

4. The playback apparatus of any of claims 1 - 3,
wherein a number of thumbnails which the updating unit (15) places in the menu depends on a ratio of a playback time length from the playback start position to the playback stop position to a total playback time length of the set of video content.

5. The playback apparatus of any of claims 1 - 4,
wherein the menu has a plurality of navigation areas which are in a one-to-one correspondence with the plurality of sets of video content, each navigation area is given an upper limit to a number of placeable thumbnails, and
the number of thumbnails which the updating unit places in a navigation area corresponding to the set of video content is a number obtained by multiplying an upper limit given to the navigation area by the ratio.

6. The playback apparatus of any of claims 1 - 5,
wherein each chosen piece of picture data is one of a plurality of pieces of picture data that are present at intervals of $\Delta t$ starting from a beginning of the set of video content and is located between the playback start position and the playback stop position, and
$\Delta t$ is a value obtained by dividing the total playback time length of the set of video content by the upper limit.

7. The playback apparatus of claim 5 or 6,
wherein each navigation area has the same upper limit to the number of placeable thumbnails.

8. The playback apparatus of any of claims 1 - 7,
wherein each chosen piece of picture data is present at intervals of $\Delta t$ starting from the playback start position, and
$\Delta t$ is a value obtained by dividing a playback time length from the playback start position to the playback stop position by a predetermined value.

9. The playback apparatus of claim 5, 6 and/or 7,
wherein the menu has a plurality of navigation areas which are in a one-to-one correspondence with the plurality of sets of video content, each navigation area is given the same upper limit to a number of placeable thumbnails, and
the predetermined value is the same upper limit.

10. The playback apparatus of any of claims 1, 4 - 9
**characterised in that**,
the updating unit being adapted to overwrite a previous thumbnail with a new thumbnail.

11. The playback apparatus according to claim 10,
**characterised in that**,
the updating unit (15) being adapted to overwrite thumbnails of a (p - 1)th playback operation by thumbnails of a pth playback operation, p being an integer no smaller than 2.

12. The playback apparatus of any of claims 1-11,
wherein the at least one piece of picture data chosen by the updating unit (15) is a plurality of pieces of picture data that are present at intervals of $\Delta t$ starting from the playback start position, and
$\Delta t$ is shorter near the playback stop position than near the playback start position.

13. The playback apparatus of any of claims 1 - 11,
wherein the at least one piece of picture data chosen by the updating unit (15) is a plurality of pieces of picture data that are present at intervals of $\Delta t$ starting from the playback start position, and
$\Delta t$ is shorter near the playback start position than near the playback stop position.

**14.** The playback apparatus of any of claims 1 - 13,
wherein the updating unit (15) chooses a plurality of pieces of picture data from between the playback start position and the playback stop position, and places a plurality of thumbnails of the respective plurality of pieces of picture data one after another in the menu so that the plurality of thumbnails are displayed like a slide show.

**15.** The playback apparatus of claim 14,
wherein each chosen piece of picture data is one of a plurality of pieces of picture data that are present at intervals of $\Delta t$ starting from a beginning of the set of video content and is located between the playback start position and the playback stop position.

**16.** The playback apparatus of any of claims 1 - 15,
wherein the playback start position is a beginning of the set of video content or a position where the user requests to resume playing back the set of video content, and
the playback stop position is a position where the user requests to stop playing back the set of video content or an end of the set of video content.

**17.** The playback apparatus of claim 16,
wherein the playback stop position is a position where the user requests to switch from a normal playback mode to a special playback mode, and the playback start position is a position where the user requests to switch from the special playback mode back to the normal playback mode.

**18.** The playback apparatus of any of claims 1 - 17, further comprising:

a recording unit operable to record the plurality of sets of video content on a recording medium,

wherein the playback unit (13) writes the history of the playback start position and the playback stop position into the recording medium, after playing back the set of video content recorded on the recording medium, and
the updating unit reads the history of the playback start position and the playback stop position from the recording medium, before updating the menu.

**19.** The playback apparatus of any of claims 1 - 18 including a server apparatus (22) and a client apparatus (21) that are connected via a network (20),
the server apparatus (22) including: a sending unit operable to send the menu and the set of video content to the client apparatus (21); and the updating unit,
the client apparatus (21) including: the displaying unit; and the playback unit,
wherein the displaying unit in the client apparatus (21) displays the menu sent from the server apparatus (22),
the playback unit in the client apparatus (21) plays back the set of video content sent from the server apparatus (22), keeps the history of the playback start position and the playback stop position, and sends the history to the server apparatus (22),
the updating unit in the server apparatus (22) updates the menu by placing the thumbnail of each piece of picture data chosen from between the playback start position and the playback stop position in the menu, according to the history sent from the client apparatus (21),
the sending unit in the server apparatus (22) sends the updated menu to the client apparatus (21), and
the displaying unit in the client apparatus (21) displays the updated menu sent from the server apparatus (22).

**20.** A method for playing back video content that includes a plurality of pieces of picture data, comprising:

a displaying step of displaying a menu which lists a plurality of sets of video content;
a playback step operable to select and play back one of the plurality of sets of video content from the menu by a user,

**characterised by**
a menu updating step being adapted to add history data to the said menu by selecting pieces of picture data from video scenes having been viewed by the user by having operated playback start and playback stop functions, the menu updating step being further adapted to provide for thumbnails for selected pieces of picture data and adding those generated thumbnails to the respective sets of video contents in the menu, to keep a history of already viewed video scenes.

**21.** The method of claim 20,
wherein if a thumbnail already exists in the menu, the updating step places the thumbnail adjacent to the already existing thumbnail.

**22.** The method of claim 21,
wherein the playback by the playback step is a pth playback operation performed on the set of video content, p being an integer no smaller than 2, and the already existing thumbnail is a thumbnail of a piece of picture data which is located between a playback start position and a playback stop position of a (p-1)th playback operation performed on the set of video content.

**23.** The method of any of claims 20 - 22,
wherein a number of thumbnails which the updating step places in the menu depends on a ratio of a playback time length from the playback start position to the playback stop position to a total playback time length of the set of video content.

**24.** The method of claim 23,
wherein the menu has a plurality of navigation areas which are in a one-to-one correspondence with the plurality of sets of video content, each navigation area is given an upper limit to a number of placeable thumbnails, and the number of thumbnails which the updating step places in a navigation area corresponding to the set of video content is a number obtained by multiplying an upper limit given to the navigation area by the ratio.

**25.** The method of claim 24,
wherein each chosen piece of picture data is one of a plurality of pieces of picture data that are present at intervals of $\Delta t$ starting from a beginning of the set of video content and is located between the playback start position and the playback stop position, and
$\Delta t$ is a value obtained by dividing the total playback time length of the set of video content by the upper limit.

**26.** The method of claim 25,
wherein each navigation area has the same upper limit to the number of placeable thumbnails.

**27.** The method of claim 20,
wherein each chosen piece of picture data is present at intervals of $\Delta t$ starting from the playback start position, and $\Delta t$ is a value obtained by dividing a playback time length from the playback start position to the playback stop position by a predetermined value.

**28.** The method of claim 24, 25 or 26,
wherein the menu has a plurality of navigation areas which are in a one-to-one correspondence with the plurality of sets of video content, each navigation area is given the same upper limit to a number of placeable thumbnails, and the predetermined value is the same upper limit.

**29.** The method of any of claims 20, 23 - 28
**characterised in that**,
the updating step being adapted to overwrite a previous thumbnail with a new thumbnail.

**30.** The method according to claim 29,
**characterised in that**,
the updating step being adapted to overwrite thumbnails of a (p - 1)th playback operation by thumbnails of a pth playback operation, p being an integer no smaller than 2.

**31.** The method of any of claims 20 - 30,
wherein the at least one piece of picture data chosen in the updating step is a plurality of pieces of picture data that are present at intervals of $\Delta t$ starting from the playback start position, and $\Delta t$ is shorter near the playback stop position than near the playback start position.

**32.** The method of any of claims 20 - 30,
wherein the at least one piece of picture data chosen in the updating step is a plurality of pieces of picture data that are present at intervals of $\Delta t$ starting from the playback start position, and $\Delta t$ is shorter near the playback start position than near the playback stop position.

**33.** The method of any of claims 20 - 32,
wherein the updating step chooses a plurality of pieces of picture data from between the playback start position and the playback stop position, and places a plurality of thumbnails of the respective plurality of pieces of picture data one after another in the menu so that the plurality of thumbnails are displayed like a slide show.

**34.** The method of claim 33,
wherein each chosen piece of picture data is one of a plurality of pieces of picture data that are present at intervals of ∆t starting from a beginning of the set of video content and is located between the playback start position and the playback stop position.

**35.** The method of any of claims 20 - 34,
wherein the playback start position is a beginning of the set of video content or a position where the user requests to resume playing back the set of video content, and
the playback stop position is a position where the user requests to stop playing back the set of video content or an end of the set of video content.

**36.** The method of claim 35,
wherein the playback stop position is a position where the user requests to switch from a normal playback mode to a special playback mode, and the playback start position is a position where the user requests to switch from the special playback mode back to the normal playback mode.

**37.** The method of any of claims 20 - 36, further comprising:

a recording step of recording the plurality of sets of video content on a recording medium,

wherein the playback step writes the history of the playback start position and the playback stop position into the recording medium, after playing back the set of video content recorded on the recording medium, and
the updating step reads the history of the playback start position and the playback stop position from the recording medium, before updating the menu.

**38.** The method of any of claims 20 - 37,
wherein the computer includes a server computer and a client computer that are connected via a network,
the program further comprises:

a sending step of sending the menu and the set of video content to the client computer,
the server computer performs the sending step and the updating step,
the client computer performs the displaying step and the playback step,

wherein the displaying step in the client computer displays the menu sent from the server computer,
the playback step in the client computer plays back the set of video content sent from the server computer, keeps the history of the playback start position and the playback stop position, and sends the history to the server computer,
the updating step in the server computer updates the menu by placing the thumbnail of each piece of picture data chosen from between the playback start position and the playback stop position in the menu, according to the history sent from the client computer,
the sending step in the server computer sends the updated menu to the client computer, and
the displaying step in the client computer displays the updated menu sent from the server computer.

**39.** A computer program operable in a microcomputer based playback apparatus, performing the method steps of any of claims 20 - 38, when run in the playback apparatus.

**Patentansprüche**

**1.** Wiedergabevorrichtung zum Wiedergeben von Video-Inhalt, der eine Vielzahl von Elementen von Bilddaten enthält, wobei sie umfasst:

eine Anzeigeeinheit (101), die so betrieben werden kann, dass sie ein Menü anzeigt, das eine Vielzahl von Sätzen von Video-Inhalt auflistet;

eine Wiedergabeeinheit (13), die so betrieben werden kann, dass sie einen der Vielzahl von Sätzen von Video-Inhalt aus dem Menü durch einen Benutzer auswählt und wiedergibt,

**gekennzeichnet durch**

eine Menü-Aktualisierungseinheit (15), die so eingerichtet ist, dass sie Verlaufsdaten zu dem Menü hinzufügt, indem sie Elemente von Bilddaten aus Video-Szenen auswählt, die von dem Benutzer angesehen worden sind, indem er eine Wiedergabe-Start- und eine Wiedergabe-Stopp-Funktion ausgeführt hat, wobei die Menü-Aktualisierungseinheit des Weiteren so eingerichtet ist, dass sie Miniaturansichten (thumbnails) für ausgewählte Elemente von Bilddaten bereitstellt und diese erzeugten Miniaturansichten zu den jeweiligen Sätzen von Video-Inhalten in dem Menü hinzufügt, um einen Verlauf bereits angesehener Video-Szenen zu führen.

2. Wiedergabevorrichtung nach Anspruch 1,
wobei, wenn eine Miniaturansicht bereits in dem Menü vorhanden ist, die Aktualisierungseinheit (15) die Miniaturansicht benachbart zu der bereits vorhandenen Miniaturansicht anordnet.

3. Wiedergabevorrichtung nach Anspruch 2,
wobei die Wiedergabe durch die Wiedergabeeinheit ein p-ter Wiedergabevorgang ist, der an dem Satz von Video-Inhalt durchgeführt wird, wobei p eine ganze Zahl nicht kleiner als 2 ist, und die bereits vorhandene Miniaturansicht eine Miniaturansicht eines Elementes von Bilddaten ist, das sich zwischen einer Wiedergabe-Start-Position und einer Wiedergabe-Stopp-Position eines an dem Satz von Video-Inhalt durchgeführten (p-1)-ten Wiedergabevorgangs befindet.

4. Wiedergabevorrichtung nach einem der Ansprüche 1 - 3,
wobei eine Anzahl von Miniaturansichten, die die Aktualisierungseinheit (15) in dem Menü anordnet, von einem Verhältnis einer Wiedergabezeitlänge von der Wiedergabe-Start-Position zu der Wiedergabe-Stopp-Position zu einer Gesamt-Wiedergabezeitlänge des Satzes von Video-Inhalt abhängt.

5. Wiedergabevorrichtung nach einem der Ansprüche 1 - 4,
wobei das Menü eine Vielzahl von Navigationsbereichen aufweist, die sich in Eins-zu-Eins-Entsprechung zu der Vielzahl von Sätzen von Video-Inhalt befinden, und jeder Navigationsbereich eine obere Grenze bezüglich einer Zahl anzuordnender Miniaturansichten erhält, und
die Anzahl von Miniaturansichten, die die Aktualisierungseinheit in einem Navigationsbereich anordnet, der dem Satz von Video-Inhalt entspricht, eine Zahl ist, die ermittelt wird, indem eine obere Grenze, die der Navigationsbereich erhält, mit dem Verhältnis multipliziert wird.

6. Wiedergabevorrichtung nach einem der Ansprüche 1 - 5,
wobei jedes ausgewählte Element von Bilddaten eines einer Vielzahl von Elementen von Bilddaten ist, die in Intervallen von $\Delta t$ beginnend mit einem Anfang des Satzes von Video-Inhalt vorhanden sind, und es sich zwischen der Wiedergabe-Anfangs-Position und der Wiedergabe-Stopp-Position befindet, und
$\Delta t$ ein Wert ist, der ermittelt wird, indem die Gesamt-Wiedergabezeitlänge des Satzes von Video-Daten durch die obere Grenze dividiert wird.

7. Wiedergabevorrichtung nach Anspruch 5 oder 6,
wobei jeder Navigationsbereich die gleiche obere Grenze bezüglich der Anzahl anzuordnender Miniaturansichten hat.

8. Wiedergabevorrichtung nach einem der Ansprüche 1 - 7,
wobei jedes ausgewählte Element von Bilddaten in Intervallen von $\Delta t$ beginnend mit der Wiedergabe-Start-Position vorhanden ist, und
$\Delta t$ ein Wert ist, der ermittelt wird, indem eine Wiedergabezeitlänge von der Wiedergabe-Start-Position zu der Wiedergabe-Stopp-Position durch einen vorgegebenen Wert dividiert wird.

9. Wiedergabevorrichtung nach Anspruch 5, 6 und/oder 7,
wobei das Menü eine Vielzahl von Navigationsbereichen hat, die sich in Eins-zu-Eins-Entsprechung zu der Vielzahl von Sätzen von Video-Inhalt befinden, und jeder Navigationsbereich die gleiche obere Grenze bezüglich einer Zahl anzuordnender Miniaturansichten erhält, und
der vorgegebene Wert die gleiche obere Grenze ist.

**10.** Wiedergabevorrichtung nach einem der Ansprüche 1, 4 - 9
**dadurch gekennzeichnet, dass**
die Aktualisierungseinheit so eingerichtet ist, dass sie eine frühere Miniaturansicht mit einer neuen Miniaturansicht überschreibt.

**11.** Wiedergabevorrichtung nach Anspruch 10,
**dadurch gekennzeichnet, dass**
die Aktualisierungseinheit (15) so eingerichtet ist, dass sie Miniaturansichten eines (p-1)-ten Wiedergabevorgangs mit Miniaturansichten eines p-ten Wiedergabevorgangs überschreibt, wobei p eine ganze Zahl nicht kleiner als 2 ist.

**12.** Wiedergabevorrichtung nach einem der Ansprüche 1 - 11,
wobei das wenigstens eine Element von Bilddaten, das durch die Aktualisierungseinheit (15) ausgewählt wird, eine Vielzahl von Elementen von Bilddaten ist, die in Intervallen von $\Delta t$ beginnend mit der Wiedergabe-Start-Position vorhanden sind, und
$\Delta t$ in der Nähe der Wiedergabe-Stopp-Position kürzer ist als in der Nähe der Wiedergabe-Start-Position.

**13.** Wiedergabevorrichtung nach einem der Ansprüche 1 - 11,
wobei das wenigstens eine Element von Bilddaten, das durch die Aktualisierungseinheit (15) ausgewählt wird, eine Vielzahl von Elementen von Bilddaten ist, die in Intervallen von $\Delta t$ beginnend mit der Wiedergabe-Start-Position vorhanden sind, und
$\Delta t$ in der Nähe der Wiedergabe-Start-Position kürzer ist als in der Nähe der Wiedergabe-Stopp-Position.

**14.** Wiedergabevorrichtung nach einem der Ansprüche 1 - 13,
wobei die Aktualisierungseinheit (15) eine Vielzahl von Elementen von Bilddaten zwischen der Wiedergabe-Start-Position und der Wiedergabe-Stopp-Position auswählt und eine Vielzahl von Miniaturansichten der jeweiligen Vielzahl von Elementen von Bilddaten nacheinander so in dem Menü anordnet, dass die Vielzahl von Miniaturansichten wie eine Dia-Show angezeigt werden.

**15.** Wiedergabevorrichtung nach Anspruch 14,
wobei jedes ausgewählte Element von Bilddaten eines einer Vielzahl von Elementen von Bilddaten ist, die in Intervallen von $\Delta t$ beginnend mit einem Anfang des Satzes von Video-Inhalt vorhanden sind, und es sich zwischen der Wiedergabe-Start-Position und der Wiedergabe-Stopp-Position befindet.

**16.** Wiedergabevorrichtung nach einem der Ansprüche 1 - 15,
wobei die Wiedergabe-Start-Position ein Anfang des Satzes von Video-Inhalt oder eine Position ist, an der der Benutzer das Wiederaufnehmen des Wiedergebens des Satzes von Video-Inhalt anfordert, und
die Wiedergabe-Stopp-Position eine Position, an der der Benutzer Unterbrechung des Wiedergebens des Satzes von Video-Inhalt anfordert, oder ein Ende des Satzes von Video-Inhalt ist.

**17.** Wiedergabevorrichtung nach Anspruch 16,
wobei die Wiedergabe-Stopp-Position eine Position ist, an der der Benutzer Wechsel von einem normalen Wiedergabemodus zu einem speziellen Wiedergabemodus anfordert, und die Wiedergabe-Start-Position eine Position ist, an der der Benutzer Wechsel von dem speziellen Wiedergabemodus zurück zu dem normalen Wiedergabemodus anfordert.

**18.** Wiedergabevorrichtung nach einem der Ansprüche 1 - 17, die des Weiteren umfasst:

eine Aufzeichnungseinheit, die so betrieben werden kann, dass sie die Vielzahl von Sätzen von Video-Inhalt auf einem Aufzeichnungsmedium aufzeichnet,

wobei die Wiedergabeeinheit (13) nach Wiedergeben des auf dem Aufzeichnungsmedium aufgezeichneten Satzes von Video-Daten den Verlauf der Wiedergabe-Start-Position und der Wiedergabe-Stopp-Position auf das Aufzeichnungsmedium schreibt, und
die Aktualisierungseinheit den Verlauf der Wiedergabe-Start-Position und der Wiedergabe-Stopp-Position vor Aktualisieren des Menüs von dem Aufzeichnungsmedium liest.

**19.** Wiedergabevorrichtung nach einem der Ansprüche 1 -18, die eine Server-Vorrichtung (22) und eine Client-Vorrichtung (21) enthält, die über ein Netzwerk (20) verbunden sind,

wobei die Server-Vorrichtung (22) enthält:

eine Sendeeinheit, die so betrieben werden kann, dass sie das Menü und den Satz von Video-Inhalt zu der Client-Vorrichtung (21) sendet, und
die Aktualisierungseinheit,

wobei die Client-Vorrichtung (21) enthält:

die Anzeigeeinheit; und
die Wiedergabeeinheit,

wobei die Anzeigeeinheit in der Client-Vorrichtung (21) das von der Server-Vorrichtung (22) gesendete Menü anzeigt, die Wiedergabeeinheit in der Client-Vorrichtung (21) den von der Server-Vorrichtung (22) gesendeten Satz von Video-Inhalt wiedergibt, den Verlauf der Wiedergabe-Start-Position und der Wiedergabe-Stopp-Position führt und den Verlauf zu der Server-Vorrichtung (22) sendet, die Aktualisierungseinheit in der Server-Vorrichtung (22) das Menü aktualisiert, indem sie die Miniaturansicht jedes Elementes von Bilddaten, das zwischen der Wiedergabe-Start-Position und der Wiedergabe-Stopp-Position ausgewählt wird, in dem Menü entsprechend dem von der Client-Vorrichtung (21) gesendeten Verlauf anordnet, die Sendeeinheit in der Server-Vorrichtung (22) das aktualisierte Menü zu der Client-Vorrichtung (21) sendet, und die Anzeigeeinheit in der Client-Vorrichtung (21) das von der Server-Vorrichtung (22) gesendete aktualisierte Menü anzeigt.

20. Verfahren zum Wiedergeben von Video-Inhalt, der eine Vielzahl von Elementen von Bilddaten enthält, wobei es umfasst:

einen Anzeigeschritt, mit dem ein Menü angezeigt wird, das eine Vielzahl von Sätzen von Video-Inhalt auflistet;
einen Wiedergabeschritt, der ausgeführt werden kann, um einen der Vielzahl von Sätzen von Video-Inhalt aus dem Menü durch einen Benutzer auszuwählen und wiederzugeben,

**gekennzeichnet durch**
einen Menü-Aktualisierungsschritt, der so eingerichtet ist, dass Verlaufsdaten zu dem Menü hinzugefügt werden, indem Elemente von Bilddaten aus Video-Szenen ausgewählt werden, die von dem Benutzer angesehen worden sind, indem er eine Wiedergabe-Start- und eine Wiedergabe-Stopp-Funktionen ausgeführt hat, wobei der Menü-Aktualisierungsschritt des Weiteren so eingerichtet ist, dass er Miniaturansichten für ausgewählte Elemente von Bilddaten bereitstellt und diese erzeugten Miniaturansichten zu den jeweiligen Sätzen von Video-Inhalt in dem Menü hinzufügt, um einen Verlauf bereits angesehener Video-Szenen zu führen.

21. Verfahren nach Anspruch 20,
wobei, wenn eine Miniaturansicht bereits in dem Menü vorhanden ist, der Aktualisierungsschritt die Miniaturansicht benachbart zu der bereits vorhandenen Miniaturansicht anordnet.

22. Verfahren nach Anspruch 21,
wobei die Wiedergabe mit dem Wiedergabeschritt ein an dem Satz von Video-Inhalt durchgeführter p-ter Wiedergabevorgang ist, wobei p eine ganze Zahl nicht kleiner als 2 ist, und die bereits vorhandene Miniaturansicht eine Miniaturansicht eines Elementes von Bilddaten ist, das sich zwischen einer Wiedergabe-Start-Position und einer Wiedergabe-Stopp-Position eines an dem Satz von Video-Inhalt durchgeführten (p-1)-ten Wiedergabevorgangs befindet.

23. Verfahren nach einem der Ansprüche 20 - 22,
wobei eine Anzahl von Miniaturansichten, die der Aktualisierungsschritt in dem Menü anordnet, von einem Verhältnis einer Wiedergabezeitlänge von der Wiedergabe-Start-Position zu der Wiedergabe-Stopp-Position zu einer Gesamt-Wiedergabezeitlänge des Satzes von Video-Inhalt abhängt.

24. Verfahren nach Anspruch 23,
wobei das Menü eine Vielzahl von Navigationsbereichen aufweist, die sich in Eins-zu-Eins-Entsprechung zu der Vielzahl von Sätzen von Video-Inhalt befinden, und jeder Navigationsbereich eine obere Grenze bezüglich einer Zahl anzuordnender Miniaturansichten erhält, und
die Anzahl von Miniaturansichten, die der Aktualisierungsschritt in einem Navigationsbereich anordnet, der dem Satz von Video-Inhalt entspricht, eine Zahl ist, die ermittelt wird, indem eine obere Grenze, die der Navigationsbereich erhält, mit dem Verhältnis multipliziert wird.

25. Verfahren nach Anspruch 24,
wobei jedes ausgewählte Element von Bilddaten eines einer Vielzahl von Elementen von Bilddaten ist, die in Intervallen von $\Delta t$ beginnend mit einem Anfang des Satzes von Video-Inhalt vorhanden sind, und es sich zwischen der Wiedergabe-Start-Position und der Wiedergabe-Stopp-Position befindet, und
$\Delta t$ ein Wert ist, der ermittelt wird, indem die Gesamt-Wiedergabezeitlänge des Satzes von Video-Inhalt durch die obere Grenze dividiert wird.

26. Verfahren nach Anspruch 25,
wobei jeder Navigationsbereich die gleiche obere Grenze bezüglich der Zahl anzuordnender Miniaturansichten hat.

27. Verfahren nach Anspruch 20,
wobei jedes ausgewählte Element von Bilddaten in Intervallen von $\Delta t$ beginnend mit der Wiedergabe-Start-Position vorhanden ist, und
$\Delta t$ ein Wert ist, der ermittelt wird, indem eine Wiedergabezeitlänge von der Wiedergabe-Start-Position zu der Wiedergabe-Stopp-Position durch einen vorgegebenen Wert dividiert wird.

28. Verfahren nach Anspruch 24, 25 oder 26,
wobei das Menü eine Vielzahl von Navigationsbereichen hat, die sich in Eins-zu-Eins-Entsprechung zu der Vielzahl von Sätzen von Video-Inhalt befinden, und jeder Navigationsbereich die gleiche obere Grenze bezüglich einer Zahl anzuordnender Miniaturansichten erhält, und
der vorgegebene Wert die gleiche obere Grenze ist.

29. Verfahren nach einem der Ansprüche 20, 23 - 28,
**dadurch gekennzeichnet, dass**
der Aktualisierungsschritt so eingerichtet ist, dass er eine frühere Miniaturansicht mit einer neuen Miniaturansicht überschreibt.

30. Verfahren nach Anspruch 29,
**dadurch gekennzeichnet, dass**
der Aktualisierungsschritt so eingerichtet ist, dass er Miniaturansichten eines (p-1)-ten Wiedergabevorgangs mit Miniaturansichten eines p-ten Wiedergabevorgangs überschreibt, wobei p eine ganze Zahl nicht kleiner als 2 ist.

31. Verfahren nach einem der Ansprüche 20 - 30,
wobei das wenigstens eine Element von Bilddaten, das in dem Aktualisierungsschritt ausgewählt wird, eine Vielzahl von Elementen von Bilddaten ist, die in Intervallen von $\Delta t$ beginnend mit der Wiedergabe-Start-Position vorhanden sind, und
$\Delta t$ in der Nähe der Wiedergabe-Stopp-Position kürzer ist als in der Nähe der Wiedergabe-Start-Position.

32. Verfahren nach einem der Ansprüche 20 - 30,
wobei das wenigstens eine Element von Bilddaten, das in dem Aktualisierungsschritt ausgewählt wird, eine Vielzahl von Elementen von Bilddaten ist, die in Intervallen von $\Delta t$ beginnend mit der Wiedergabe-Start-Position vorhanden sind, und
$\Delta t$ in der Nähe der Wiedergabe-Start-Position kürzer ist als in der Nähe der Wiedergabe-Stopp-Position.

33. Verfahren nach einem der Ansprüche 20 - 32,
wobei der Aktualisierungsschritt eine Vielzahl von Elementen von Bilddaten zwischen der Wiedergabe-Start-Position und der Wiedergabe-Stopp-Position auswählt und eine Vielzahl von Miniaturansichten der jeweiligen Vielzahl von Elementen von Bilddaten nacheinander so in dem Menü anordnet, dass die Vielzahl von Miniaturansichten wie eine Dia-Show angezeigt werden.

34. Verfahren nach Anspruch 33,
wobei jedes ausgewählte Element von Bilddaten eines einer Vielzahl von Elementen von Bilddaten ist, die in Intervallen von $\Delta t$ beginnend mit einem Anfang des Satzes von Video-Inhalt vorhanden sind, und sich zwischen der Wiedergabe-Start-Position und der Wiedergabe-Stopp-Position befindet.

**35.** **Verfahren nach einem der Ansprüche 20 - 34,**
wobei die Wiedergabe-Start-Position ein Anfang des Satzes von Video-Inhalt oder eine Position ist, an der der Benutzer Wiederaufnehmen des Wiedergebens des Satzes von Video-Inhalt anfordert, und
die Wiedergabe-Stopp-Position eine Position, an der der Benutzer Unterbrechung es Wiedergebens des Satzes von Video-Inhalt anfordert, oder ein Ende des Satzes von Video-Inhalt ist.

**36.** Verfahren nach Anspruch 35,
wobei die Wiedergabe-Stopp-Position eine Position ist, an der der Benutzer Wechsel von einem normalen Wiedergabemodus zu einem speziellen Wiedergabemodus anfordert, und die Wiedergabe-Start-Position eine Position ist, an der der Benutzer Wechsel von dem speziellen Wiedergabemodus zurück zu dem normalen Wiedergabemodus anfordert.

**37.** Verfahren nach einem der Ansprüche 20 - 36, das des Weiteren umfasst:

einen Aufzeichnungsschritt des Aufzeichnens der Vielzahl von Sätzen von Video-Inhalt auf einem Aufzeichnungsmedium,

wobei der Wiedergabeschritt nach Wiedergeben des auf dem Aufzeichnungsmedium aufgezeichneten Satzes von Video-Inhalt den Verlauf der Wiedergabe-Start-Position und der Wiedergabe-Stopp-Position auf das Aufzeichnungsmedium schreibt, und
der Aktualisierungsschritt den Verlauf der Wiedergabe-Start-Position und der Wiedergabe-Stopp-Position vor Aktualisieren des Menüs von dem Aufzeichnungsmedium liest.

**38.** Verfahren nach einem der Ansprüche 20 - 37,
wobei der Computer einen Server-Computer und einen Client-Computer enthält, die über ein Netzwerk verbunden sind,
wobei das Programm des Weiteren umfasst:

einen Sendeschritt des Sendens des Menüs und des Satzes von Video-Inhalt zu dem Client-Computer,
der Server-Computer den Sendeschritt und den Aktualisierungsschritt durchführt,
der Client-Computer den Anzeigeschritt und den Wiedergabeschritt durchführt,

wobei der Anzeigeschritt in dem Client-Computer das von dem Server-Computer gesendete Menü anzeigt,
der Wiedergabeschritt in dem Client-Computer den von dem Server-Computer gesendeten Satz von Video-Inhalt abspielt, den Verlauf der Wiedergabe-Start-Position und der Wiedergabe-Stopp-Position führt und den Verlauf zu dem Server-Computer sendet,
der Aktualisierungsschritt in dem Server-Computer das Menü aktualisiert, indem er die Miniaturansicht jedes Elementes von Bilddaten, das zwischen der Wiedergabe-Start-Position und der Wiedergabe-Stopp-Position ausgewählt wird, entsprechend dem von Client-Computer gesendeten Verlauf in dem Menü anordnet,
der Sendeschritt in dem Server-Computer das aktualisierte Menü zu dem Client-Computer sendet, und
der Anzeigschritt in dem Client-Computer das von dem Server-Computer gesendete aktualisierte Menü anzeigt.

**39.** Computer-Programm, das in einer Wiedergabevorrichtung auf Mikrocomputer-Basis ausgeführt werden kann und die Verfahrensschritte nach einem der Ansprüche 20 - 38 durchführt, wenn es in der Wiedergabevorrichtung läuft.

**Revendications**

**1.** Appareil de lecture destiné à la lecture de contenus vidéo qui incluent une pluralité d'éléments de données d'image, comprenant :

une unité (101) d'affichage pouvant fonctionner pour afficher un menu qui donne la liste d'une pluralité d'ensembles de contenus vidéo ;
une unité (13) de lecture pouvant fonctionner pour faire sélectionner et lire par un utilisateur à partir du menu l'un de la pluralité des ensembles contenus vidéo;

**caractérisé par**
une unité (15) d'actualisation du menu adaptée à ajouter des données d'histoire audit menu au moyen de la sélection d'éléments de données d'image à partir de scènes vidéo ayant été vues par l'utilisateur ayant mis en oeuvre des fonctions de démarrage de lecture et d'arrêt de lecture, l'unité d'actualisation du menu étant en outre adaptée à fournir des images au format réduit pour des éléments sélectionnées de données d'image et à ajouter ces images au format réduit générées aux ensembles respectifs de contenus vidéo dans le menu, de manière à conserver une histoire des scènes vidéo déjà vues.

2. Appareil de lecture selon la revendication 1,
dans lequel si une image au format réduit existe déjà dans le menu, l'unité (15) d'actualisation place l'image au format réduit de façon à ce qu'elle soit adjacente à l'image au format réduit existant déjà.

3. Appareil de lecture selon la revendication 2,
dans lequel la lecture par l'unité de lecture est une p$^{ième}$ opération de lecture exécutée sur l'ensemble de contenus vidéo, p étant un entier non inférieur à 2, et l'image au format réduit existant déjà est une image au format réduit d'un élément de données d'image qui se trouvent entre une position de démarrage de lecture et une position d'arrêt de lecture d'une (p-1)$^{ième}$ opération de lecture exécutée sur l'ensemble de contenus vidéo.

4. Appareil de lecture selon l'une quelconque des revendications 1 à 3,
dans lequel un certain nombre d'images au format réduit que l'unité (15) d'actualisation place dans le menu dépendent d'un quotient d'une longueur de temps de lecture de la position de démarrage de lecture à la position d'arrêt de lecture par une longueur de temps de lecture de l'ensemble de contenus vidéo.

5. Appareil de lecture selon l'une quelconque des revendications 1 à 4,
dans lequel le menu comporte une pluralité de zones de navigation qui sont en correspondance biunivoque avec la pluralité d'ensembles de contenus vidéo, une limite supérieure d'un nombre d'images au format réduit pouvant être placées étant donnée à chaque zone de navigation, et
le nombre d'images au format réduit que l'unité d'actualisation place dans une zone de navigation correspondant à l'ensemble de contenus vidéo est un nombre obtenu en multipliant une limite supérieure donnée à la zone de navigation par le quotient.

6. Appareil de lecture selon l'une quelconque des revendications 1 à 5,
dans lequel chaque élément choisi de données d'images est l'un d'une pluralité d'éléments de données d'image qui sont présents à des intervalles Δt commençant au début de l'ensemble de contenus vidéo et se trouvent entre la entre la position de démarrage de lecture et la position d'arrêt de lecture, et
Δt est une valeur obtenue en divisant la longueur totale de temps de lecture de l'ensemble de contenus vidéo par la limite supérieure.

7. Appareil de lecture selon la revendication 5 ou 6,
dans lequel chaque zone de navigation comporte la même limite supérieure du nombre d'images au format réduit qui peuvent être placées.

8. Appareil de lecture selon l'une quelconque des revendications 1 à 7,
dans lequel chaque élément choisi de données d'images est présent à des intervalles Δt commençant à la position de démarrage de lecture, et
Δt est une valeur obtenue en divisant une longueur de temps de lecture de la position de démarrage de lecture à la position d'arrêt de lecture par une valeur prédéterminée.

9. Appareil de lecture selon la revendication 5, 6 et/ou 7,
dans lequel le menu comporte une pluralité de zones de navigation qui sont en correspondance biunivoque avec la pluralité d'ensembles de contenus vidéo, la même limite supérieure d'un nombre d'images au format réduit qui peuvent être placées étant donnée à chaque zone de navigation, et
la valeur prédéterminée est la même limite supérieure.

10. Appareil de lecture selon l'une quelconque des revendications 1 et 4 à 9,
**caractérisé en ce que**
l'unité d'actualisation est adaptée à écraser une image au format réduit antérieure par une nouvelle image au format réduit.

11. Appareil de lecture selon la revendication 10,

**caractérisé en ce que**

l'unité (15) d'actualisation est adaptée à écraser les images au format réduit d'une (p-1)$^{ième}$ opération de lecture par les images au format réduit d'une p$^{ième}$ opération de lecture, p étant un entier non inférieur à 2.

**12.** Appareil de lecture selon l'une quelconque des revendications 1 à 11,
dans lequel l'au moins un élément de données d'image choisi par l'unité (15) d'actualisation est une pluralité d'éléments de données d'image qui sont présents à des intervalles Δt commençant à la position de démarrage de lecture, et Δt est plus court au voisinage de la position d'arrêt de lecture qu'au voisinage de la position de démarrage de lecture.

**13.** Appareil de lecture selon l'une quelconque des revendications 1 à 11,
dans lequel l'au moins un élément de données d'image choisi par l'unité (15) d'actualisation est une pluralité d'éléments de données d'image qui sont présents à des intervalles Δt commençant à la position de démarrage de lecture, et Δt est plus court au voisinage de la position de démarrage de lecture qu'au voisinage de la position d'arrêt de lecture.

**14.** Appareil de lecture selon l'une quelconque des revendications 1 à 13,
dans lequel l'unité (15) d'actualisation choisit une pluralité d'éléments de données d'image entre la position de démarrage de lecture et la position de fin de lecture, et place une pluralité d'images au format réduit de la pluralité respective d'éléments de données d'image l'une après l'autre dans le menu, de manière à ce que la pluralité d'images au format réduit soit affichée comme dans un diaporama.

**15.** Appareil de lecture selon la revendication 14,
dans lequel chaque élément choisi de données d'image est l'un d'une pluralité d'éléments de données d'image qui sont présents à des intervalles Δt commençant au début de l'ensemble de contenus vidéo et se trouvent entre la position de démarrage de lecture et la position d'arrêt de lecture.

**16.** Appareil de lecture selon l'une quelconque des revendications 1 à 15,
dans lequel la position de démarrage de lecture est un commencement de l'ensemble de contenus vidéo ou une position dans laquelle l'utilisateur désire reprendre la lecture de l'ensemble de contenus vidéo, et la position d'arrêt de lecture est une position dans laquelle l'utilisateur désire arrêter la lecture de l'ensemble de contenus vidéo ou une fin de l'ensemble de contenus vidéo.

**17.** Appareil de lecture selon la revendication 16,
dans lequel la position d'arrêt de lecture est une position dans laquelle l'utilisateur désire passer d'un mode normal de lecture à un mode spécial de lecture, et la position de démarrage de lecture est une position dans laquelle l'utilisateur désire revenir du mode spécial de lecture au mode normal de lecture.

**18.** Appareil de lecture selon l'une quelconque des revendications 1 à 17, comprenant en outre:

une unité d'enregistrement pouvant fonctionner de manière à enregistrer une pluralité d'ensembles de contenus vidéo sur un support d'enregistrement,

dans lequel l'unité (13) de lecture écrit l'histoire de la position de démarrage de lecture et de la position d'arrêt de lecture dans le support d'enregistrement, après la lecture de l'ensemble de contenus vidéo enregistrés sur le support d'enregistrement, et l'unité d'actualisation lit l'histoire de la position de démarrage de lecture et de la position d'arrêt de lecture dans le support d'enregistrement avant d'actualiser le menu.

**19.** Appareil de lecture selon l'une quelconque des revendications 1 à 18 incluant un appareil serveur (22) et un appareil client (21) qui sont connectés par l'intermédiaire d'un réseau (20),
l'appareil serveur (22) incluant : une unité d'émission pouvant fonctionner pour adresser le menu et l'ensemble de contenus vidéo à l'appareil client (21) ; et l'unité d'actualisation,
l'appareil client (21) incluant : l'unité d'affichage ; et l'unité de lecture,
dans lequel l'unité d'affichage dans l'appareil client (21) affiche le menu adressé par l'appareil serveur (22),
l'unité de lecture dans l'appareil client (21) lit l'ensemble de contenus vidéo adressé par l'appareil serveur (22),
conserve l'histoire de la position de démarrage de lecture et de la position d'arrêt de lecture, et adresse l'histoire à l'appareil serveur (22),
l'unité d'actualisation dans l'appareil serveur (22) actualise le menu en plaçant l'image au format réduit de chaque élément de données d'image choisi entre la position de démarrage de lecture et de la position d'arrêt de lecture, en fonction de l'histoire adressée par l'appareil client (21),
l'unité d'émission dans l'appareil serveur (22) adresse le menu actualisé à l'appareil client (21), et
l'unité d'affichage dans l'appareil client (21) affiche le menu actualisé adressé par l'appareil serveur (22).

**20.** Procédé de lecture de contenus vidéo qui incluent une pluralité d'éléments de données d'images, comprenant :

une étape d'affichage affichant un menu qui donne la liste d'une pluralité d'ensembles de contenus vidéo ;
une étape de lecture pouvant fonctionner pour faire sélectionner et lire par un utilisateur l'un de la pluralité des ensembles vidéo à partir du menu,

**caractérisé par**
une étape d'actualisation de menu adaptée à ajouter des données d'histoire audit menu en sélectionnant des éléments de données d'image à partir de scènes vidéo ayant été vues par l'utilisateur ayant mis en oeuvre des fonctions de démarrage de lecture et d'arrêt de lecture, l'étape d'actualisation du menu étant en outre adaptée à fournir des images au format réduit pour des éléments sélectionnés de données d'image et à ajouter ces images au format réduit générées aux ensembles respectifs de contenus vidéo dans le menu, de manière à conserver une histoire des scènes vidéo déjà vues.

**21.** Procédé selon la revendication 20,
dans lequel si une image au format réduit existe déjà dans le menu, l'étape d'actualisation place l'image au format réduit de façon à ce qu'elle soit adjacente à l'image au format réduit existant déjà.

**22.** Procédé selon la revendication 21,
dans lequel la lecture par l'étape de lecture est une p$^{ième}$ opération de lecture exécutée sur l'ensemble de contenus vidéo, p étant un entier non inférieur à 2, et l'image au format réduit existant déjà est une image au format réduit d'un élément de données d'image qui se trouvent entre une position de démarrage de lecture et une position d'arrêt de lecture d'une (p-1)$^{ième}$ opération de lecture exécutée sur l'ensemble de contenus vidéo.

**23.** Procédé selon l'une quelconque des revendications 20 à 22,
dans lequel un certain nombre d'images au format réduit que l'étape d'actualisation place dans le menu dépendent d'un quotient d'une longueur de temps de lecture de la position de démarrage de lecture à la position d'arrêt de lecture par une longueur totale de temps de lecture de l'ensemble de contenus vidéo.

**24.** Procédé selon la revendication 23,
dans lequel le menu comporte une pluralité de zones de navigation qui sont en correspondance biunivoque avec la pluralité d'ensembles de contenus vidéo, une limite supérieure d'un nombre d'images au format réduit pouvant être placées étant donnée à chaque zone de navigation, et
le nombre d'images au format réduit que l'unité d'actualisation place dans une zone de navigation correspondant à l'ensemble de contenus vidéo est un nombre obtenu en multipliant une limite supérieure donnée à la zone de navigation par le quotient.

**25.** Procédé selon la revendication 24,
dans lequel chaque élément choisi de données d'images est l'un d'une pluralité d'éléments de données d'image qui sont présents à des intervalles $\Delta t$ commençant au début de l'ensemble de contenus vidéo et se trouvent entre la position de démarrage de lecture et la position d'arrêt de lecture, et
$\Delta t$ est une valeur obtenue en divisant la longueur totale de temps de lecture de l'ensemble de contenus vidéo par la limite supérieure.

**26.** Procédé selon la revendication 25,
dans lequel chaque zone de navigation comporte la même limite supérieure du nombre d'images au format réduit qui peuvent être placées.

**27.** Procédé selon la revendication 20,
dans lequel chaque élément choisi de données d'images est présent à des intervalles $\Delta t$ commençant à la position de démarrage de lecture, et
$\Delta t$ est une valeur obtenue en divisant une longueur de temps de lecture de la position de début de lecture à la position d'arrêt de lecture par une valeur prédéterminée.

**28.** Procédé selon la revendication 24, 25 ou 26,
dans lequel le menu comporte une pluralité de zones de navigation qui sont en correspondance biunivoque avec la pluralité d'ensembles de contenus vidéo, la même limite supérieure d'un nombre d'images au format réduit pouvant être placées étant donnée à chaque zone de navigation, et
la valeur prédéterminée est la même limite supérieure.

**29.** Procédé selon l'une quelconque des revendications 20 et 23 à 26,
**caractérisé en ce que**
l'étape d'actualisation est adaptée à écraser une image au format réduit antérieure par une nouvelle image au format réduit.

**30.** Procédé selon la revendication 29,
**caractérisé en ce que**
l'étape d'actualisation est adaptée à écraser les images au format réduit d'une (p-1)$^{\text{ième}}$ opération de lecture par les images au format réduit d'une p$^{\text{ième}}$ opération de lecture, p étant un entier non inférieur à 2.

**31.** Procédé selon l'une quelconque des revendications 20 à 30,
dans lequel l'au moins un élément de données d'image choisi dans l'étape d'actualisation est une pluralité d'éléments de données d'image qui sont présents à des intervalles $\Delta t$ commençant à la position de démarrage de lecture, et $\Delta t$ est plus court au voisinage de la position d'arrêt de lecture qu'au voisinage de la position de démarrage de lecture.

**32.** Procédé selon l'une quelconque des revendications 20 à 30,
dans lequel l'au moins un élément de données d'image choisi dans l'étape d'actualisation est une pluralité d'éléments de données d'image qui sont présents à des intervalles $\Delta t$ commençant à la position de démarrage de lecture, et $\Delta t$ est plus court au voisinage de la position de démarrage de lecture qu'au voisinage de la position d'arrêt de lecture.

**33.** Procédé selon l'une quelconque des revendications 20 à 32,
dans lequel l'étape d'actualisation choisit une pluralité d'éléments de données d'image entre la position de démarrage de lecture et la position de fin de lecture, et place une pluralité d'images au format réduit de la pluralité respective d'éléments de données d'image l'une après l'autre dans le menu, de manière à ce que la pluralité d'images au format réduit soit affichée comme dans un diaporama.

**34.** Procédé selon la revendication 33,
dans lequel chaque élément choisi de données d'image est l'un d'une pluralité d'éléments de données d'image qui sont présents à des intervalles $\Delta t$ commençant au début de l'ensemble de contenu vidéo et se trouvent entre la position de démarrage de lecture et la position d'arrêt de lecture.

**35.** Procédé selon l'une quelconque des revendications 20 à 34,
dans lequel la position de démarrage de lecture est un commencement de l'ensemble de contenus vidéo ou une position dans laquelle l'utilisateur désire reprendre la lecture de l'ensemble de contenus vidéo, et
la position d'arrêt de lecture est une position dans laquelle l'utilisateur désire arrêter la lecture de l'ensemble de contenus vidéo ou une fin de l'ensemble de contenus vidéo.

**36.** Procédé selon la revendication 35,
dans lequel la position d'arrêt de lecture est une position dans laquelle l'utilisateur désire passer d'un mode normal de lecture à un mode spécial de lecture, et la position de démarrage de lecture est une position dans laquelle l'utilisateur désire revenir du mode spécial de lecture au mode normal de lecture.

**37.** Procédé selon l'une quelconque des revendications 20 à 36, comprenant en outre :

une étape d'enregistrement enregistrant la pluralité d'ensembles de contenus vidéo sur un support d'enregistrement,

dans lequel l'étape de lecture écrit l'histoire de la position de démarrage de lecture et de la position d'arrêt de lecture dans le support d'enregistrement, après la lecture de l'ensemble de contenus vidéo enregistrés sur le support d'enregistrement, et
l'étape d'actualisation lit l'histoire de la position de démarrage de lecture et de la position d'arrêt de lecture dans le support d'enregistrement avant d'actualiser le menu.

**38.** Procédé selon l'une quelconque des revendications 20 à 37,
dans lequel l'ordinateur inclut un ordinateur serveur et un ordinateur client qui sont connectés par l'intermédiaire d'un réseau,
le programme comprend en outre:

une étape d'émission adressant le menu et l'ensemble de contenus vidéo à l'ordinateur client,
l'ordinateur serveur exécute l'étape d'émission et l'étape d'actualisation,
l'ordinateur client exécute l'étape d'affichage et l'étape de lecture,

dans lequel l'étape d'affichage dans l'ordinateur client affiche le menu délivré par l'ordinateur serveur,
l'étape de lecture dans l'ordinateur client lit l'ensemble des contenus vidéo adressés par l'ordinateur serveur, conserve l'histoire de la position de démarrage de lecture et de la position d'arrêt de lecture, et adresse l'histoire à l'ordinateur serveur,
l'étape d'actualisation dans l'ordinateur serveur actualise le menu en plaçant l'image au format réduit de chaque élément de données d'image choisi entre la position de démarrage de lecture et de la position d'arrêt de lecture, en fonction de l'histoire adressée par l'ordinateur client,
l'étape d'émission dans l'ordinateur serveur adresse le menu actualisé à l'ordinateur client, et
l'étape d'affichage dans l'ordinateur client affiche le menu actualisé adressé par l'appareil serveur.

**39.** Programme d'ordinateur pouvant fonctionner dans un appareil de lecture basé sur un micro-ordinateur, exécutant les étapes du procédé selon l'une quelconque des revendications 20 à 38 quand il est mis en application dans l'appareil de lecture.

FIG.1

# FIG.2A

RF SIGNAL

MOTOR CONTROL

ASP — 2

DSP — 3

DATA OTHER THAN VIDEO

VIDEO CONTENT

11 — MICROCOMPUTER SYSTEM

MPEG DECODER

4

11a — CPU

SYSTEM DECODER — 5

6 — AUDIO DECODER

7 — VIDEO DECODER

11c — RAM

11b — INSTRUCTION MEMORY

UNCOMPRESSED PICTURE DATA

8a,b,c

FRAME MEMORY

py1

PTS

9

10 — SIGNAL COMBINING UNIT

AUDIO SIGNAL

COMBINED VIDEO SIGNAL

TO TELEVISION 101

FIG.2B

MICROCOMPUTER SYSTEM

MPEG DECODER

11

11a — CPU

11c

14

RAM

WORK AREA

RECORDING DATE AND TIME
CHANNEL
TITLE

11b

GUI UPDATING UNIT — 15

THUMBNAIL
GENERATING UNIT — 16

GUI GENERATING UNIT — 12

PLAYBACK
CONTROLLING UNIT — 13

INSTRUCTION MEMORY

py3

THUMB-NAIL

REDUCE

py2

GUI

PROGRAM NAVIGATION
PROGRAM NAVIGATION
PROGRAM NAVIGATION

PICTURE
DATA

HISTORY OF CONTENT 1

START TIME, STOP TIME

START TIME, STOP TIME

START TIME, STOP TIME

ARRAY H[0], [1], [2], [3], [4]····[N]

HISTORY OF CONTENT 2

START TIME, STOP TIME

ARRAY H[0], [1], [2], [3], [4]····[N]

PTS

py1

UNCOMPRESSED
PICTURE DATA

8a,b,c

FRAME
MEMORY

PTS

9

SIGNAL
COMBINING UNIT — 10

AUDIO
SIGNAL

COMBINED
VIDEO SIGNAL

TO TELEVISION 101

EP 1 459 320 B1

FIG.3

EP 1 459 320 B1

300

301                                          302

| TITLE |
| RECORDING DATE | CHANNEL |
| RECORDING TIME |

| (1, 1) | (2, 1) | (3, 1) | (4, 1) | (5, 1) |
| (1, 2) | (2, 2) | (3, 2) | (4, 2) | (5, 2) |

## FIG.4A

```
┌─────────────┐
│  MAIN FLOW  │
└─────────────┘
       │
┌──────────────────┐
│   GUI DISPLAY    │ ── S1
└──────────────────┘
       │
┌──────────────────────────┐
│ SET ONE CONTENT IN FOCUS STATE │ ── S2
└──────────────────────────┘
       │
   ◇ UP/DOWN KEY? ◇ ── YES ──→ ┌──────────────────────────┐
       │ S3                      │ SET ANOTHER CONTENT IN FOCUS │ ── S5
      NO                        │ STATE ACCORDING TO PRESSED KEY │
       │                        └──────────────────────────┘
       │                                    │
   ◇ ENTER KEY? ◇ ── YES ──→               (A)
     S4  │
        NO
       │
┌──────────────────────────┐
│ SET FOCUSED CONTENT IN ACTIVE │ ── S6
│ STATE, AND DETERMINE PLAYBACK │
│ TARGET CONTENT x              │
└──────────────────────────┘
       │
┌──────────────────────────┐
│ yTH PLAYBACK OPERATION    │ ── S7
│ ON CONTENT x              │
└──────────────────────────┘
       │
┌──────────────────────────┐
│ UPDATE GUI SCREEN ACCORDING │ ── S8
│ TO HISTORY OF yTH PLAYBACK  │
│ OPERATION                   │
└──────────────────────────┘
       │
      (A)
```

## FIG.4B

```
┌─────────────┐
│ GUI DISPLAY │
└─────────────┘
       │
┌────────────────────────────────────┐
│ GENERATE M PROGRAM NAVIGATION        │ ── S9
│ AREAS EACH HAVING THUMBNAIL AREA     │
│ FOR N THUMBNAILS, ON GUI SCREEN      │
└────────────────────────────────────┘
       │
┌────────────────────────────────────┐
│ PLACE RECORDING DATE AND TIME, CHANNEL, │ ── S10
│ AND TITLE OF CONTENT IN INDEX AREA OF   │
│ EACH PROGRAM NAVIGATION AREA            │
└────────────────────────────────────┘
       │
┌────────────────────────────────────┐
│ PLACE THUMBNAIL OF FIRST PICTURE OF CONTENT │ ── S11
│ IN THUMBNAIL AREA OF EACH PROGRAM NAVIGA-   │
│ TION AREA                                   │
└────────────────────────────────────┘
       │
┌─────────────┐
│   RETURN    │
└─────────────┘
```

## FIG.5

yTH PLAYBACK OPERATION ON CONTENT x

S12
HISTORY OF CONTENT x EXISTS IN RAM?

YES

ACQUIRE STOP TIME IN LAST HISTORY OF CONTENT x — S16

SET POINT IMMEDIATELY AFTER STOP TIME AS START POSITION OF yTH PLAYBACK OPERATION — S17

NO

y ← 1 — S13

SET BEGINNING OF CONTENT x AS START POSITION OF yTH PLAYBACK OPERATION — S14

INSTRUCT MPEG DECODER AND DRIVE TO PLAY CONTENT x FROM START POSITION — S15

S18 — PTS ACQUIRED? — NO

YES

STORE PTS AS START TIME OF yTH PLAYBACK OPERATION — S19

S21 — STOP KEY? — YES

NO

S22 — INSTRUCT MPEG DECODER AND DRIVE TO STOP PLAYBACK

S20 — END OF CONTENT x? — NO

YES

S23 — PTS ACQUIRED? — NO

YES

SET PTS AS STOP TIME OF yTH PLAYBACK OPERATION — S24

STORE COMBINATION OF START TIME AND STOP TIME IN RAM AS HISTORY OF yTH PLAYBACK OPERATION OF CONTENT x — S25

RETURN

# FIG.6A

GUI UPDATE

NO ← y=1? → YES

S31

S39 — ks←(LAST NUMBER OF ARRAY H OF CONTENT x)+1

S32 — Δt←(TIME LENGTH OF CONTENT x) /(UPPER LIMIT)

S40 — k ← ks

S33 — INITIALIZE ARRAY H OF CONTENT x

S34 — k ← 0

ARRAY ELEMENT H[k] ← START TIME OF yTH PLAYBACK OPERATION ~S35

S36

(ARRAY ELEMENT H[k])+Δt > (STOP TIME OF yTH PLAYBACK OPERATION)?

YES

S53 — LAST NUMBER ← k

NO

(ARRAY ELEMENT H[k+1]) ← (ARRAY ELEMENT H[k])+Δt ~S37

k ← k+1 ~S38

TO FIG.6B

## FIG.6B

FROM FIG.6A

S41: y=1?

NO → S52: i, j←IMMEDIATELY AFTER LAST THUMBNAIL k←ks

YES → S42: j, k ← 1, i←2

S43: READ PICTURE DATA OF CONTENT x CORRESPONDING TO ARRAY ELEMENT H[k]

S44: GENERATE THUMBNAIL OF READ PICTURE DATA

S45: DISPLAY THUMBNAIL IN iTH COLUMN AND jTH ROW IN THUMBNAIL AREA OF CONTENT x

S46: k ← k+1

S47: k>NUMBER OF ARRAY ELEMENTS?

YES

NO → S48: i ← i+1

S49: i>HORIZONTAL LENGTH?

NO

YES → S50: j ← j+1, i ← 1

S51: j>VERTICAL LENGTH?

NO

YES → RETURN

## FIG.7

NO PLAYBACK OPERATIONS PERFORMED
ON CONTENT 1 TO 3

| CONTENT 1 | |
| 2002  11/3  CH3 | OSEC |
| PM8 : 00~PM8 : 50 | |

| CONTENT 2 | |
| 2002 11/10  CH3 | OSEC |
| PM8 : 00~PM8 : 50 | |

| CONTENT 3 | |
| 2002 11/17  CH3 | OSEC |
| PM8 : 00~PM8 : 50 | |

# FIG.8

OSEC       1240SEC       3000SEC

CONTENT 1

yTH (FIRST) PLAYBACK START POSITION    STOP POSITION

| CONTENT 1 2002 11/3 CH3 PM8 : 00～PM8 : 50 | OSEC | 300SEC | 600SEC | 900SEC | 1200SEC |

| CONTENT 2 2002 11/10 CH3 PM8 : 00～PM8 : 50 | OSEC |

| CONTENT 3 2002 11/17 CH3 PM8 : 00～PM8 : 50 | OSEC |

## FIG.9

yTH (FIRST) PLAYBACK STOP POSITION
(1240SEC)

ARRAY H[0]= H[1]= H[2]= H[3]= H[4]=

0SEC 300SEC 600SEC 900SEC 1200SEC 1500SEC

VIDEO CONTENT
(SEQUENCE OF PICTURES)

REDUCED / REDUCED / REDUCED / REDUCED / REDUCED

| CONTENT 1 |
| 2002 11/3 CH3 |
| PM8 : 00~PM8 : 50 |

| 0SEC | 300SEC | 600SEC | 900SEC | 1200SEC |
| (1, 1) | (2, 1) | (3, 1) | (4, 1) | (5, 1) |

EP 1 459 320 B1

# FIG.10

| | 0SEC | | 1240SEC | 2200SEC | 3000SEC |
|---|---|---|---|---|---|

CONTENT 1

yTH (SECOND) PLAYBACK START POSITION    STOP POSITION

| CONTENT 1<br>2002 11/3 CH3<br>PM8 : 00~PM8 : 50 | 0SEC 300SEC 600SEC 900SEC 1200SEC<br>1500SEC 1800SEC 2100SEC |
|---|---|
| CONTENT 2<br>2002 11/10 CH3<br>PM8 : 00~PM8 : 50 | 0SEC |
| CONTENT 3<br>2002 11/17 CH3<br>PM8 : 00~PM8 : 50 | 0SEC |

# FIG.11

OSEC                              3000SEC

CONTENT 1

OSEC               1000SEC           3000SEC

CONTENT 2

START POSITION      STOP POSITION

| CONTENT 1<br>2002 11/3 CH3<br>PM8 : 00~PM8 : 50 | OSEC | 300SEC | 600SEC | 900SEC | 1200SEC |
| | 1500SEC | 1800SEC | 2100SEC | 2400SEC | 2700SEC |

| CONTENT 2<br>2002 11/10 CH3<br>PM8 : 00~PM8 : 50 | OSEC | 300SEC | 600SEC | 900SEC |

| CONTENT 3<br>2002 11/17 CH3<br>PM8 : 00~PM8 : 50 | OSEC |

## FIG.12

| CONTENT 1 2002 11/3 CH3 PM8:00~PM8:50 | OSEC | 300SEC | 600SEC | 900SEC | 1200SEC |
| | 1500SEC | 1800SEC | 2100SEC | 2400SEC | 2700SEC |

| CONTENT 2 2002 11/10 CH3 PM8:00~PM8:50 | OSEC | 300SEC | 600SEC | 900SEC | 1200SEC |
| | 1500SEC | 1800SEC | 2100SEC | 2400SEC | 2700SEC |

| CONTENT 3 2002 11/17 CH3 PM8:00~PM8:50 | OSEC | 300SEC | 600SEC | 900SEC | 1200SEC |
| | 1500SEC | 1800SEC | 2100SEC | 2400SEC | 2700SEC |

# FIG.13

CONTENT 1

2002/08/20 2ch

CONTENT 2

2002/08/20 4ch

CONTENT 3

2002/08/21 2ch

CONTENT 4

2002/08/22 5ch

CONTENT 5

2002/08/23 3ch

CONTENT 6

2002/08/23 4ch

CONTENT 7

2002/08/24 2ch

CONTENT 8

2002/08/24 4ch

CONTENT 9

2002/08/25 2ch

EP 1 459 320 B1

## FIG.14A

| | | |
|---|---|---|
| OSEC | OSEC | OSEC |
| OSEC | OSEC | OSEC |
| OSEC | OSEC | OSEC |

## FIG.14B

| | | |
|---|---|---|
| 300SEC | OSEC | OSEC |
| OSEC | OSEC | OSEC |
| OSEC | OSEC | OSEC |

## FIG.14C

| | | |
|---|---|---|
| 600SEC | OSEC | OSEC |
| OSEC | OSEC | OSEC |
| OSEC | OSEC | OSEC |

## FIG.14D

| | | |
|---|---|---|
| 900SEC | OSEC | OSEC |
| OSEC | OSEC | OSEC |
| OSEC | OSEC | OSEC |

## FIG.14E

| | | |
|---|---|---|
| 1200SEC | OSEC | OSEC |
| OSEC | OSEC | OSEC |
| OSEC | OSEC | OSEC |

## FIG.14F

| | | |
|---|---|---|
| OSEC | OSEC | OSEC |
| OSEC | OSEC | OSEC |
| OSEC | OSEC | OSEC |

## FIG.15A

```
                    ( MAIN FLOW )
                         |
          | DISPLAY GUI SCREEN AND SET FLAG |~S60
                         |
          | SET ONE CONTENT IN FOCUS STATE |~S2
                         |
    | RESET VARIABLE kp (p=1, 2, 3, 4, ⋯ , M) IDENTIFYING ARRAY |~S61
    | ELEMENT OF CONTENT p (p=1, 2, 3, 4, ⋯ , M) TO 0           |
                         |
                        S3
(A)----------->     < UP/DOWN KEY? >----YES----->
                         |
                        NO
                         |                    TO FIG.15B
                        S4
                    < ENTER KEY? >----YES----->
                         |
                        NO
                        S62
          NO
    <----------------< FLAG = 1? >
                         |
                        YES
                        S63
    | PLACE THUMBNAIL [kp] IN PROGRAM NAVIGATION |
    | AREA OF CONTENT                            |
    | p (p=1, 2, 3, 4, ⋯ , M)                    |
                         |
    | INCREMENT VARIABLE kp (p=1, 2, 3, 4, ⋯ , M) |
                         S64
```

FIG.15B

FROM FIG.15A

┌─────────────────────────────────┐ S5
│ SET ANOTHER CONTENT IN FOCUS    │
│ STATE ACCORDING TO PRESSED KEY  │
└─────────────────────────────────┘

(A)

┌─────────────────────────────────┐ S6
│ SET FOCUSED CONTENT IN ACTIVE   │
│ STATE, AND DETERMINE PLAYBACK   │
│ TARGET CONTENT x                │
└─────────────────────────────────┘

┌─────────────────────────────────┐
│ yTH PLAYBACK OPERATION          │ S7
│ ON CONTENT x                    │
└─────────────────────────────────┘

S65

NO ◇ FLAG = 1? ◇

YES

┌─────────────────────────────────┐ S8
│ UPDATE GUI SCREEN ACCORDING     │
│ TO HISTORY OF yTH PLAYBACK      │
│ OPERATION                       │
└─────────────────────────────────┘

┌─────────────────────────────────┐ S66
│ ADD ARRAY ELEMENT               │
│ CORRESPONDING TO HISTORY        │
│ OF yTH PLAYBACK OPERATION       │
└─────────────────────────────────┘

(A)          (A)

EP 1 459 320 B1

# FIG.16

```
                    ( GUI DISPLAY )
                           |
                           |          ⟋S67
              ⟋⟍‾‾‾‾‾‾‾‾‾‾‾‾‾‾⟍
            ⟋    M×N>(NUMBER OF     ⟍    YES
            ⟍ DISPLAYABLE THUMBNAILS)?⟋————————————┐
              ⟍_____⟋                |
                    ↓ NO    ⟋S9                     |       ⟋S68
        ┌──────────────────────────┐     ┌──────────────────────────┐
        │ GENERATE M PROGRAM NAVIGATION│  │ GENERATE M PROGRAM NAVIGATION│
        │ AREAS EACH HAVING THUMBNAIL  │  │ AREAS EACH HAVING THUMBNAIL  │
        │ AREA FOR N THUMBNAILS ON GUI │  │ AREA FOR ONE THUMBNAIL ON    │
        │ SCREEN, AND SET FLAG AT 0    │  │ GUI SCREEN, AND SET FLAG AT 1│
        └──────────────────────────┘     └──────────────────────────┘
                    |                                |
                    └────────────────←───────────────┘
                    ↓
        ┌──────────────────────────────────┐
        │ PLACE RECORDING DATE AND TIME, CHANNEL,│ ⟋S10
        │ AND TITLE OF CONTENT IN INDEX AREA OF  │
        │ EACH PROGRAM NAVIGATION AREA           │
        └──────────────────────────────────┘
                    ↓
        ┌──────────────────────────────────┐
        │ PLACE THUMBNAIL OF FIRST PICTURE OF CONTENT│ ⟋S11
        │ IN THUMBNAIL AREA OF EACH PROGRAM NAVIGA-  │
        │ TION AREA                                  │
        └──────────────────────────────────┘
                    ↓
              ( RETURN )
```

# FIG.17

THUMBNAIL PLACEMENT

S71
LOOP (FOR EACH SET OF CONTENT)

S74
MORE THAN ONE ARRAY ELEMENT FOR CONTENT p? — NO

YES

S75
$kp >$ NUMBER OF ARRAY ELEMENTS?

YES

S79
$kp \leftarrow 0$

NO

READ PICTURE DATA [kp] OF CONTENT p CORRESPONDING TO ARRAY ELEMENT H[kp] — S76

GENERATE THUMBNAIL [kp] OF READ PICTURE DATA [kp] — S77

DISPLAY THUMBNAIL [kp] IN THUMBNAIL AREA OF CONTENT p — S78

LOOP (FOR EACH SET OF CONTENT) — S72

Return

EP 1 459 320 B1

# FIG.18

```
            ┌─────────────┐
            │  GUI UPDATE │
            └──────┬──────┘
                   │ S31
          NO    ╱──┴──╲   YES
      ┌────────┤ y=1 ? ├────────┐
      │        ╲───────╱        │
      ▼                         ▼ S32
┌──────────────────┐  ┌──────────────────────────┐
│ ks←(LAST NUMBER OF│  │ △t←                       │
│ ARRAY H OF CONTENT│  │ (TIME LENGTH OF CONTENT x)│
│ x)+1         S39  │  │ /(UPPER LIMIT)            │
└────────┬─────────┘  └────────────┬─────────────┘
         │ S40                     ▼
    ┌─────────┐        S33  ┌──────────────────┐
    │  k←ks   │             │ INITIALIZE ARRAY H│
    └────┬────┘             │ OF CONTENT x     │
         │                  └────────┬─────────┘
         │             S34  ┌────────────┐
         │                  │   k←0      │
         │                  └──────┬─────┘
         │                         │
         ▼─────────────────────────▼
┌──────────────────────────────────────────────────┐
│ARRAY ELEMENT H[k] ← START TIME OF yTH PLAYBACK     │ S35
│OPERATION                                          │
└──────────────────────┬───────────────────────────┘
                       │
         ┌─────────────▼──────────────╲  S36
         │  (ARRAY ELEMENT H[k])+△t >   ╲  YES
         ┤  (STOP TIME OF yTH PLAYBACK   ├──────┐
         │  OPERATION)?                 ╱        │
         ╲─────────────┬──────────────╱         │
                       │ NO                      │
         ┌─────────────────────────┐  S37        │
         │ (ARRAY ELEMENT H[k+1])   │            │
         │ ← (ARRAY ELEMENT H[k])+△t│            │
         └──────────┬──────────────┘            │
              ┌──────────┐ S38                   ▼
              │  k ← k+1 │              ┌──────────────┐
              └──────────┘              │    RETURN    │
                                        └──────────────┘
```

59

## FIG.19

T : TIME LENGTH OF VIEWED PART

EP 1 459 320 B1

# FIG.20

GUI UPDATE

CALCULATE INTEGER u NO SMALLER THAN 1 SUCH THAT N=1+2+3+···+u — S81

T←(TIME LENGTH FROM START TIME OF FIRST PLAYBACK OPERATION TO STOP TIME OF yTH PLAYBACK OPERATION) — S82

$\triangle t \leftarrow T/u$ — S83

INITIALIZE ARRAY H OF CONTENT x — S84

$k \leftarrow 0$ — S85

$v \leftarrow 1$ — S86

$\triangle t \leftarrow \triangle t/v, w \leftarrow 1$ — S87

S36 — (ARRAY ELEMENT H[k])+$\triangle$t > (STOP TIME OF yTH PLAYBACK OPERATION)? — YES

NO — S37

(ARRAY ELEMENT H[k+1]) ← (ARRAY ELEMENT H[k])+$\triangle$t

$k \leftarrow k+1, w \leftarrow w+1$ — S88

NO — w>v? — S89

YES

$v \leftarrow v+1$ — S90

NO — v>u? — S91

YES

B

B

READ PICTURE DATA OF CONTENT x CORRESPONDING TO ARRAY ELEMENT H[k] — S43

GENERATE THUMBNAIL OF READ PICTURE DATA — S44

DISPLAY THUMBNAIL IN iTH COLUMN AND jTH ROW IN THUMBNAIL AREA OF CONTENT x — S45

S46 — $k \leftarrow k+1$

YES — k>NUMBER OF ARRAY ELEMENTS? — S47

NO

S48 — $j \leftarrow j+1$

i>HORIZONTAL LENGTH? — S49 — NO

YES

S50 — $j \leftarrow j+1, i \leftarrow 1$

i>VERTICAL LENGTH? — S51 — NO

YES

RETURN

FIG.21A

T=1200SEC

v=1    v=2    v=3    v=4

$\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$   $\dfrac{T}{u \cdot v}$

| 300SEC | 150SEC | 150SEC | 100SEC | 100SEC | 100SEC | 75SEC | 75SEC | 75SEC | 75SEC |

ARRAY H[0]      H[1]     H[2]     H[3]     H[4]     H[5]     H[6]    H[7]    H[8]    H[9]    H[10]
k=0            k=1      k=2      k=3      k=4      k=5      k=6     k=7     k=8     k=9     k=10
              300SEC   450SEC   600SEC  700SEC  800SEC  900SEC  975SEC 1050SEC 1125SEC

FIG.21B

| 300SEC | 150SEC | 150SEC | 100SEC | 100SEC | 100SEC | 75SEC | 75SEC | 75SEC | 75SEC |

CONTENT1
2002 11/3 CH3
PM8 : 00~PM8 : 50

| 0SEC | 300SEC | 450SEC | 600SEC | 700SEC |
| 800SEC | 900SEC | 975SEC | 1050SEC | 1125SEC |

# FIG.22A

PLAYBACK
START ty0

FAST FORWARD
START ty1

RETURN TO NORMAL
PLAYBACK ty2

FAST FORWARD
START ty3

RETURN TO NORMAL
PLAYBACK ty4

PLAYBACK
STOP ty5

FAST FORWARD

FAST FORWARD

yTH PLAYBACK
START TIME

yTH PLAYBACK
STOP TIME

(y+1)TH PLAYBACK
START TIME

(y+1)TH PLAYBACK
STOP TIME

(y+2)TH PLAYBACK
START TIME

(y+2)TH PLAYBACK
STOP TIME

# FIG.22B

HISTORY OF CONTENT x

| yTH PLAYBACK START TIME, STOP TIME |
| --- |
| (y+1)TH PLAYBACK START TIME, STOP TIME |
| (y+2)TH PLAYBACK START TIME, STOP TIME |

EP 1 459 320 B1

FIG.23

STEPS S12-S15 IN FIG. 5

r ← 0 ~S99

S18 — PTS ACQUIRED? — NO

YES S19

STORE PTS AS START TIME OF (y+r)TH PLAYBACK OPERATION

Ⓒ

S100

SWITCH FROM NORMAL PLAYBACK TO FAST FORWARD? — YES

NO S101

SWITCH FROM FAST FORWARD TO NORMAL PLAYBACK? — YES

NO S21

STOP KEY? — YES S22

NO

S20

END OF CONTENT x? — NO

YES

INSTRUCT MPEG DECODER AND DRIVE TO STOP PLAYBACK

S102

INSTRUCT MPEG DECODER AND DRIVE TO FAST-FORWARD

S103 — PTS ACQUIRED? — NO

S109 YES

STORE PTS AS STOP TIME OF (y+r)TH PLAYBACK OPERA-TION

Ⓒ

S105

INSTRUCT MPEG DECODER AND DRIVE TO PERFORM NORMAL PLAYBACK

r ← r+1 ~S106

S107 — PTS ACQUIRED? — NO

YES S108

STORE PTS AS START TIME OF (y+r)TH PLAYBACK OPERATION

Ⓒ

S23 — PTS ACQUIRED? — NO

YES S24

STORE PTS AS STOP TIME OF (y+r)TH PLAYBACK OPERATION

RETURN

64

FIG.24

```
┌──────────────────────────┐
│ STEPS S31-S34, S39,      │
│ AND S40 IN FIG. 6        │
└──────────────────────────┘
              │
              ▼
      ┌──────────────┐
      │   r ← 0      │~S109
      └──────────────┘
              │              S35
              ▼
┌──────────────────────────┐
│ ARRAY ELEMENT H[k]       │
│ ← START TIME OF (y+r)TH  │
│ PLAYBACK OPERATION       │
└──────────────────────────┘
              │              S36
              ▼
      (ARRAY ELEMENT H[k])+△t      YES
      > (STOP TIME OF (y+r)TH  ──────────►  ┌──────────────────┐  S53
      PLAYBACK OPERATION)?                  │ LAST NUMBER ← k  │
              │ NO          S37             └──────────────────┘
              ▼                                      │
┌──────────────────────────┐              ┌──────────────┐
│ (ARRAY ELEMENT H[k+1])   │              │  r ← r+1     │~S110
│ ← (ARRAY ELEMENT H[k])+△t│              └──────────────┘
└──────────────────────────┘                      │
              │                                    ▼
      ┌──────────────┐                         r >          YES
      │  k ← k+1     │~S38                  LAST NUMBER? ──────────►
      └──────────────┘                     S111      │ NO
                                                      ▼
                                    ┌──────────────────────────┐
                                    │ STEPS S41-S51 IN FIG. 6  │
                                    └──────────────────────────┘
```

## FIG.25

SERVER APPARATUS ⟋22

DATABASE ⟋24

CONTENT STORAGE ⟋23

USER ID CONTENT ID → AUTHENTI-CATING UNIT ⟋25

DOWN-LOADING UNIT ⟋28

PLAYBACK START /STOP TIME

CONTENT

PAGE GENERATING UNIT ⟋27

PAGE RETAINING UNIT ⟋26

PICTURE DATA

PAGE UPDATING UNIT ⟋29

PLAYBACK START/STOP TIME

CONTENT

PLAYBACK START/STOP TIME ⟋20

CLIENT APPARATUS ⟋21a

CLIENT APPARATUS ⟋21b

CLIENT APPARATUS ⟋21c

EP 1 459 320 B1

# FIG.26

# FIG.27

23 CONTENT STORAGE

24 DATABASE

22 SERVER APPARATUS

21a,b,c CLIENT APPARATUS

CONTENT x1/n   y21

y22 PLAYBACK START TIME

CONTENT x2/n   y23

CONTENT x3/n   y24

CONTENT x4/n   y25

CONTENT x5/n   y26

y27 PLAYBACK STOP TIME

COMBINATION OF PLAYBACK START AND STOP TIMES   y28

ACCESS CONTENT   READ PICTURE DATA

y29

UPDATE NAVIGATION PAGE   y30

FIG.28

FIG.29

EP 1 459 320 B1

FIG.30

FIG.31

## FIG.32

ORG-PGCI

| CELL#1 | CELL#2 |

VOBI-SRPN

C_E_PTM

C_S_PTM

C_E_PTM

C_S_PTM

VOBI-SRPN

VOBI #1

| TMAP#1 | TMAP#2 |

VOBI #2

adr   adr   adr   adr

| VOBU | VOBU | VOBU | VOBU | · · · | VOBU |

VOB#1

| VOBU | VOBU | VOBU | VOBU | · · · | VOBU |

VOB#2

EP 1 459 320 B1

# FIG.33

PG#1 | PG#2 | IT_TXT_SRPN

TEXT DATA

C_Ns | C_Ns

ORG-PGCI

CELL#1 | CELL#2

C_E_PTM

VOBI-SRPN

C_S_PTM

C_E_PTM

C_S_PTM

VOBI-SRPN

VOBI #1

TMAP#1 | TMAP#2

VOBI #2

adr   adr   adr   adr

VOBU VOBU VOBU VOBU · · · VOBU   VOBU VOBU VOBU VOBU · · · VOBU

VOB#1   VOB#2

EP 1 459 320 B1

FIG.34A

| FIRST LEVEL | Original_PGC | |
|---|---|---|
| SECOND LEVEL | PG#1(CONTENT 1) | PG#2(CONTENT 2) |
| THIRD LEVEL | CELL#1 | CELL#2 |
| FOURTH LEVEL | VOB#1 | VOB#2 |

FIG.34B

PARTIAL DELETE      PARTIAL DELETE      PARTIAL DELETE      PARTIAL DELETE

VOB#1      VOB#2

pt1    pt2         pt3    pt4

FIG.35

| Original_PGC |
|---|

| PG#1 (CONTENT 1) | PG#2 (CONTENT 2) |
|---|---|

| CELL#1 | CELL#2 | CELL#3 | CELL#4 | CELL#5 | CELL#6 |
|---|---|---|---|---|---|

| VOB#1 | VOB#2 | VOB#3 | VOB#4 | VOB#5 | VOB#6 |
|---|---|---|---|---|---|

**EP 1 459 320 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1158795 A
- WO 0145391 A
- US 6118450 A